# EUROPEAN PATENT SPECIFICATION

(11) **EP 1 126 674 B1**
(45) Date of publication and mention of the grant of the patent: **04.10.2006**
(21) Application number: 00115147.1
(22) Date of filing: 12.07.2000
(51) Int. Cl.: H04L 29/06

(54) **Method and device for presenting data to a user**
Verfahren und Gerät zur Bereitstellung von Daten für einen Benutzer
Procédé et appareil de présentation de données pour un utilisateur

(30) Priority: 24.12.1999 DE 19962937; 16.05.2000 DE 10023843
(43) Date of publication of application: 22.08.2001
(73) Proprietor: Ravenpack AG, 80331 München (DE)
(72) Inventor: Schloer, Hardy, D-81669 München (DE)
(74) Representative: HOFFMANN EITLE

(56) References cited:
- DAVIS J ET AL: " ?Drop-in ? publishing with the World Wide Web" COMPUTER NETWORKS AND ISDN SYSTEMS, NORTH HOLLAND PUBLISHING. AMSTERDAM, NL, vol. 28, no. 1, 1 December 1995 (1995-12-01), pages 247-255, XP004001231 ISSN: 0169-7552
- LEMIEUX J R: "Using RAD Tools to Develop Secure Client/Server Applications" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 15, no. 4, 1996, pages 289-295, XP004025155 ISSN: 0167-4048

## Description

The present invention relates to a method and a device for presenting or supplying data to a user of a network. An example of such a network is the so-called Internet or the world wide web, and the method of the invention is implemented in servers connected to the network. According to another aspect, the present invention relates to a method of storing data items in a database, and to a corresponding database.

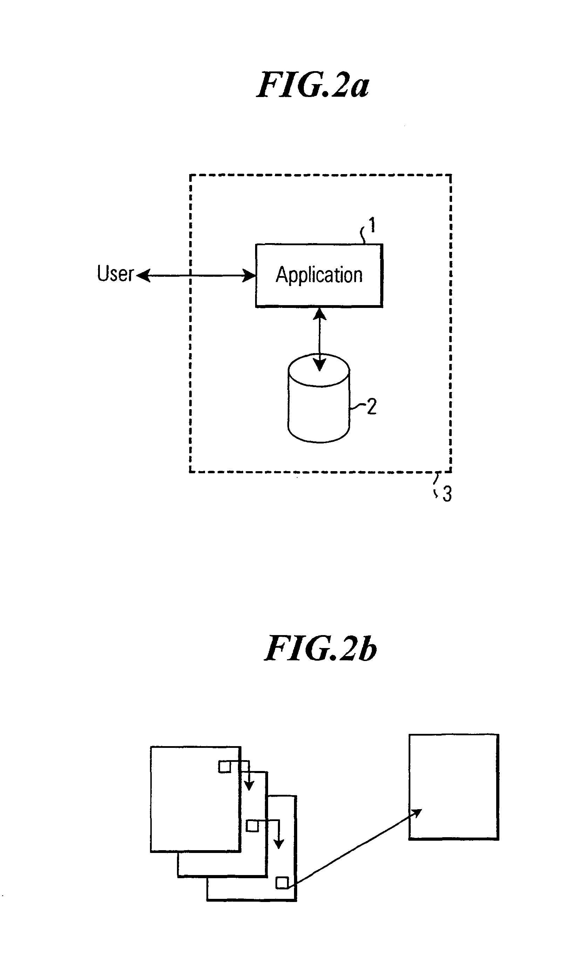

In the conventional method for presenting or supplying data in the Internet, a structure is used that is schematically shown in Fig. 2a and 2b. As shown in Fig. 2a, a user establishes a connection to an application 1 in a server 3 with the help of appropriate and suitable protocols, where this application 1 has access to a database 2. The data is represented according to pages, where individual pages are connected via so-called links. These pages are supplied to the user, and by making choices on the shown pages, he may directly or indirectly determine a link, such that the choice of a specific link leads from one page to another. In this way, the user manoeuvres through the data in database 2.

In other words, the data to be presented or supplied form a hierarchy that is interconnected via links. This type of data presentation is well known and therefore need not be explained further.

A disadvantage of this scheme is that the user has no influence on the predetermined data structure and is forced to manoeuvre along the predetermined paths (links). This can be very frustrating for the user, if he is not able to find what he is looking for or at least must follow a large number of links until he finds what he is looking for.

A further disadvantage of this scheme is that it entails a large security risk. A malicious user may analyse the structure made evident by the page hierarchy, and thereby obtain information on the structure of database 2. With this information, and by exploiting the access of application 1 to the database, such a malicious user may "backtrack" the system in order to obtain access to the database and view or manipulate sensitive data therein. In this way it is e.g. possible to "highjack" a web server or a web site and to change the contents and representation against the will of the server operator. Therefore, the above-described scheme poses serious problems of security.

From the article "Drop-in publishing with World Wide Web" by J. Davis et al, Computer Networks and ISDN Systems 28 (1995) 247-255, XP004001231, it is known to provide a document publishing system in the Internet that uses a specific protocol called "Dienst" for finding and displaying documents. Each document in "Dienst" has a unique identifier called DocID. The DocID has three components: a naming convention, a publisher and a number. To ensure that each DocID is unique, each component guarantees that the next component is unique.

An object of the present invention is to provide an improved scheme of presenting or supplying data to a user over a network, among others one that improves security.

This object is solved by the subject-matter of the independent claims. Advantageous embodiments are described in the dependent claims.

In accordance with the present invention, the process of supplying data to a user inserts a unidirectional or one-way path into the data flow, such that no back-tracking is possible. This makes an unallowed access to data impossible.

It may be noted that the term "user" in the context of the present application is not restricted to a human user, but relates to any entity seeking to have data supplied, such as another computer. Therefore, the term "user" extends to any data recipient.

According to one preferred embodiment, the system of the invention comprises: establishing a connection with the user via a communication module, receiving a user identification identifying the user, transferring the identification to an input module that is arranged such that it may only receive data from the communication module, but may not send the data to the communication module, transferring the identification and/or data derived by processing the identification to a data selection module, said data selection module being arranged such that it may only receive data from said input module, but may not send data to the input module, that it may access said data storage device and that is may determine which data in the data storage device are to be presented to the user on the basis of the information received from the input module.

Beyond the effect of security, this preferred embodiment has the additional advantage that the selection of data may be performed in accordance with an identification that identifies the user, which allows a supply or presentation of an individual selection of data to the user, preferably in the form of a single page, which changes according to the user's choices, but which does not present a link hierarchy predetermined by the programmer of the data server. In other words, this preferred embodiment allows eliminating the link hierarchy and provides the possibility of sending data on a single page, which establishes a system that can also be referred to as a "one-page web".

According to another preferred embodiment, which can also comprise the above-described embodiment, the data server for providing data to a user has a three tier software architecture, where a first tier comprises at least one database containing data to be presented, a second tier comprises one or more modules for implementing application logic for processing data and for accessing the database in the first tier, and a third tier comprises one or more modules for exterior communication and processing data for display. In other words, the first tier will be dedicated to storing data, the second tier will be dedicated to accessing the database in accordance with logic implementations, and the third tier will be dedicated to handling communication with an exterior network, which typically comprises the receipt and handling of requests from the network and the sending of responses back into the network.

This architecture that separates functions in the above-described way provides many advantages, especially that of flexibility. Namely, it is possible to design the modules or functional entities in each of the three tiers independently, such that customisation can be accomplished in a simple way by putting the individual components together in a desired fashion.

The second tier can itself be arranged in such a flexible way by using an architecture that comprises exchangeable elements, such as plug-ins. Also, the third tier can consist of a plurality of communication modules, for example a module for establishing Internet connections, a module for establishing connections to a smart TV system, a module for establishing a connection to an SMS network, etc., where all of these various networks can then access the same data (in the first tier) by using the same functional elements in the second tier that are common to all of these outside networks. In this way, it is e.g. also possible to implement logic in the second tier that takes actions from one network into account for generating actions in other networks.

According to another preferred embodiment, which may be combined with the above embodiments or can also be realised by itself, the data items in the database are stored in such a way that each individual data item (a text, a picture, a movie, a piece of music, etc.) is associated with a unique serial number, where each serial number has a predetermined format and said format divides each serial number into defined segments, where each segment encodes information related to the data item. Preferably, the segments encode information relating to categories and attributes.

By choosing a serial number of sufficient length, preferably at least 128 digits, more preferably at least 256 digits, it is possible to achieve a great depth in classifying and describing the data items with the serial number, where in effect the number of segments (e.g. 14) establishes a space having a corresponding number of dimensions (e.g. 14 dimensions), where the value in each segment pinpoints the data item along the dimension associated with said segment, such that in effect each data item then corresponds to a point in said multi-dimensional space.

By virtue of storing the data items in the above-described way, it is possible to search for a data item solely on the basis of its category and/or attribute, without having to be able to describe the data item itself. With respect to the above-mentioned multi-dimensional space, the indication of a plurality of categories and/or attributes corresponds to intersections in said multi-dimensional space.

According to a preferred embodiment of such a database, which is to be used in conjunction with the above-mentioned second embodiment that has the three tier software structure, the data items in the database are not associated with any query logic functions, as this is done in prior art database systems, because all such functionalities are implemented in the second tier. This again achieves the advantage of increased flexibility and saves resources, as a single database can be used for a multitude of different tasks.

The present invention will now be described on the basis of detailed embodiments, which are intended to convey a better understanding of the invention, but in no way restrict the scope of the invention, where said embodiments make reference to the appended figures, in which:
- Fig. 1: shows a schematic block diagram of an embodiment of the present invention;
- Fig. 2: schematically shows the structure of conventional systems for providing data to users over the Internet;
- Fig. 3: shows a schematic block diagram of another embodiment of the invention;
- Fig. 4: shows a detailed example of the embodiment of Fig. 4;
- Fig. 5: shows a content information table, a content table and a view table used in the data model of the present invention;
- Fig. 6: shows a content master catalog that belongs to the data model of the present invention;
- Fig. 7: illustrates an example of the description associated with a serial number of the data model of the present invention;
- Fig. 8: shows examples of sequence value tables that belong to the data model of the present invention;
- Fig. 9: illustrates sequence value table properties;
- Fig. 10: shows an example of a user table that belongs to the user model of the present invention;
- Fig. 11: shows an example of a user session table that belongs to the user model of the present invention;
- Fig. 12: illustrates examples of a number of further tables that belong to the user model of the invention, in connection with the user table of Fig. 10;
- Fig. 13: illustrates the role of the gravity mapping table as a means for recording the degree of interaction of a given user with a given data item;
- Fig. 14: shows a detail from Fig. 13;
- Fig. 15: illustrates the peripheral mapping table in association with the user table;
- Fig. 16: illustrates the products table in association with the content information table;
- Fig. 17: illustrates an example of the business operating system;
- Fig. 18: schematically illustrates details of the business operating system (BOS);
- Fig. 19: schematically illustrates details of the central decision module (CDM) in the business operating system;
- Fig. 20: shows a UML diagram of the gate hierarchy in an embodiment of a BOS;
- Fig. 21: illustrates details of the Bos registration authority;
- Fig. 22: shows a UML diagram of a session manager hierarchy;
- Fig. 23: shows a UML diagram of a channel hierarchy;
- Fig. 24: shows a UML diagram of an agent hierarchy;

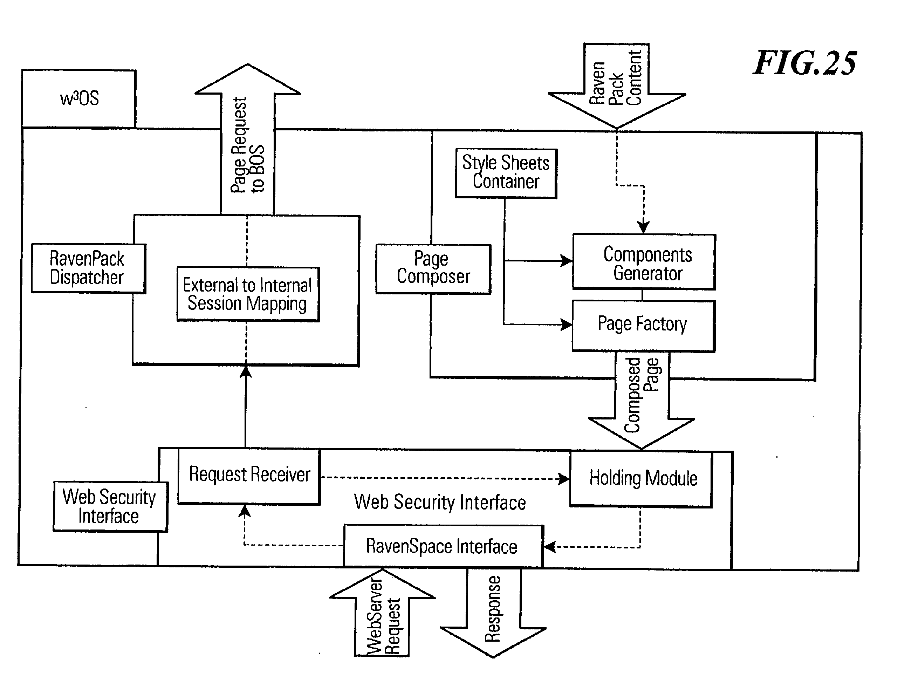

- Fig. 25: shows an overview of the web operating system (w30S);
- Fig. 26: shows an example of a web server for interacting with the web operating system illustrated in Fig. 25;
- Fig. 27: shows a schematic overview of an embodiment of the present invention, including an illustration of the concept of establishing a unidirectional data flow;
- Fig. 28: illustrates the web security interface in terms of object oriented elements;
- Fig. 29: shows a class diagram related to the page composer;
- Fig. 30: shows an example of a graphical user interface (GUI) associated with the visual content manager (VCM);
- Fig. 31: shows a screen shot example of a toolbox for a VCM pane of Fig. 30;
- Fig. 32: shows an example of a GUI associated with the view composer (VC), combined with the VCM of Fig. 30;
- Fig. 33: illustrates different layout shapes;
- Fig. 34: illustrates another example of a GUI associated with the VC;
- Fig. 35: illustrates use cases for the VCM;
- Fig. 36: illustrates use cases for the VC;
- Fig. 37: illustrates an object oriented implementation of visual tool (Vtool) messages;
- Fig. 38: illustrates a content serial number object;
- Fig. 39: illustrates a communication wrapper for Vtools/BOS;
- Fig. 40: illustrates an example of a BOSAgent, i.e. a VtoolsAgent;
- Fig. 41: illustrates an example of a Vtools business transaction engine (BTE) and a View business transaction engine;
- Fig. 42: illustrate content code mappings;
- Fig. 43: illustrates a view BTE;
- Fig. 44: illustrates the relationship between content, representation and views;
- Fig. 45: illustrates the relationship between ViewBTE, W3OSAgent and Directive;
- Fig. 46: illustrates the management console in relationship to the data base, the BOS and the web operating system;
- Fig. 47: illustrates the communication architecture of the manager; and
- Fig. 48: illustrates the communication interfaces.

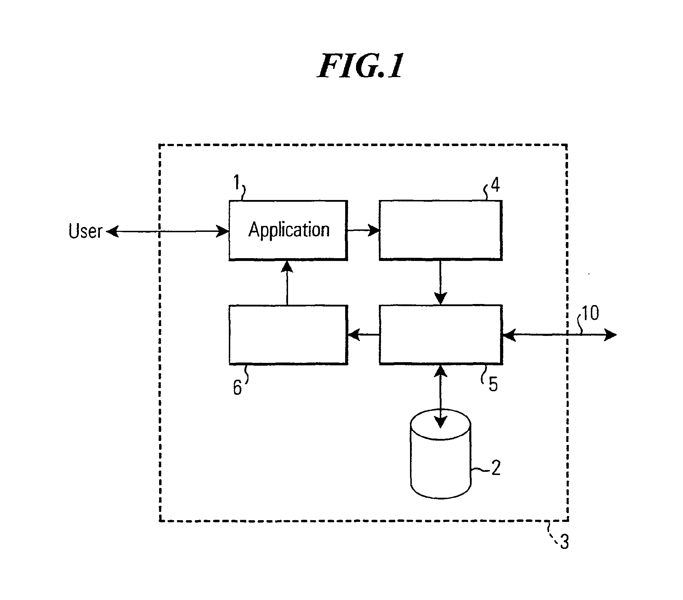

In the following, an embodiment of the present invention will be described with reference to Fig. 1. Elements that are equivalent to those already described in connection with Fig. 2 have the same reference numerals.

A server 3 is connected to a network or part of said network, which allows interconnections between members of the network, e.g. according to the TCP/IP protocol suite. The server has an address in the network, and with the help of the address a user connects to an application 1 that serves as a communication module. By using appropriate protocols a connection or protocol session is established between the application 1 and the user. In general a specific page is then sent to the user, which contains general data related to the server, e.g. a so-called welcome page. The user may or may not make choices on said welcome page. As an example, if the server supplies or presents mail-order products, the welcome page could already present a selection of topics (books, clothing, etc.).

In accordance with the embodiment, an identification (ID) identifying the user is received. This may be accomplished by direct input of the user, e.g. the welcome page asks for the input of a user name, or automatically as a part of the protocol session between the user and the application 1, e.g. the user side application (e.g. the user's network browser) automatically adds the ID into the communication.

This ID and possible choices that the user made on the welcome page are then transferred to an input module 4. The input module 4 is arranged such that the data flow only progresses from application 1 to the input module 4, but not in the opposite direction. This is indicated by the arrow in Fig. 1.

The input module performs pre-processing and possibly some sort of filtering of the received data. For example, the ID may be checked in accordance with general criteria, which allow a decision on the validity of the ID. Such a criterion could e.g. be the format of the ID.

Filtering can be accomplished by only accepting very specific data, e.g. user IDs and predefined choices. All other data are discarded. With the help of such filtering, in combination with the impossibility of sending data from module 4 to application 1, a malicious or fraudulent user may not obtain unallowed access to module 4. Such a user can at most use the ID of another user, but this is a problem that is outside of the framework of the present invention.

The result of the pre-processing and the ID are then passed to a main module 5 that serves as a data selection module. The main module 5 is arranged such that the flow of data is only possible from the input module 4 to the main module 5, but not in the opposite direction (see arrow in Fig. 1). This can e.g. be ensured by a specific protocol or any other suitable means, be it in terms of hardware or software, for example by selection of an appropriate class hierarchy in object-oriented programming, such that the flow of data in terms of objects and threads is unidirectional. The main module 5 has access to database 2 and has the task of deciding which data to present to the user. This decision is made on the basis of the ID, and possibly on choices made by the user and on the pre-processing of the input module 4.

Preferably the selection of data is performed by establishing a connection between the main module 5 and a designated remote server in the network, which is indicated by arrow 10 in Fig. 1. This server then receives the ID and possibly further data, e.g. the choices made by the user. The designated remote server then makes decisions on the basis of a user profile, with respect to which data are to be supplied to the user. The result is then transferred to the main module 5, which then accesses data in the database 2.

On the other hand, it should be noted that the main module is always capable of making decisions on its own, e.g. in the case that it is not possible to establish a connection to the remote server, and the present embodiment may be implemented without any such remote designated server, in which case the main module alone makes all decisions regarding which data is supplied to the user. The advantage of implementing the embodiment in conjunction with the designated server lies in the fact that the implementation of module 5 in server 3 may be simplified, as the necessary processing is reduced.

The selected data and possibly information regarding the visual representation of the data are then sent from main module 5 to a module 6, that then prepares a data page on the basis of these received indications. A prepared page is then output to application 1 in a suitable format (e.g. HTML or XML), where the application then forwards the page to the user. The user may then make further decisions, which are again processed in the loop 1-4-5-6-1 according to the above-described scheme.

The page preparation module 6 is preferably also arranged such that it may not receive any data from application 1, but may only send data to application 1.

Due to the fact that the above arrangement does not allow the user to see any structure of the database (in the form of link hierarchies), and by having a unidirectional flow of control and processing data, an absolute data security is ensured, and the system can only be used in the predetermined and allowed way by external users.

A further advantage of the invention consists in the fact that individually selected data are presented to a user, which leads to various advantages. For example, it is possible to arrange the system in such a way that specific content (data items) can only be seen by predetermined users.

If e.g. the main module and/or the designated remote server determine that the user is under age, or according to his user profile probably under age, then automatically all offensive content can be barred, such that no such content is supplied to the user. On the other hand, getting back to the above-mentioned example of a mail-order service, a user specific data presentation can be conducted, such that the user receives information on products that will probably interest him, in a form that he will probably find appealing. For example, if it is determined that a user is a teenager who wishes to buy music CDs, then a completely different selection can be presented than for a user who is judged as being above the age of 16. Equally the visual presentation can be adapted individually, e.g. the font size for an older user may be chosen larger and all blinking and distracting elements can be omitted.

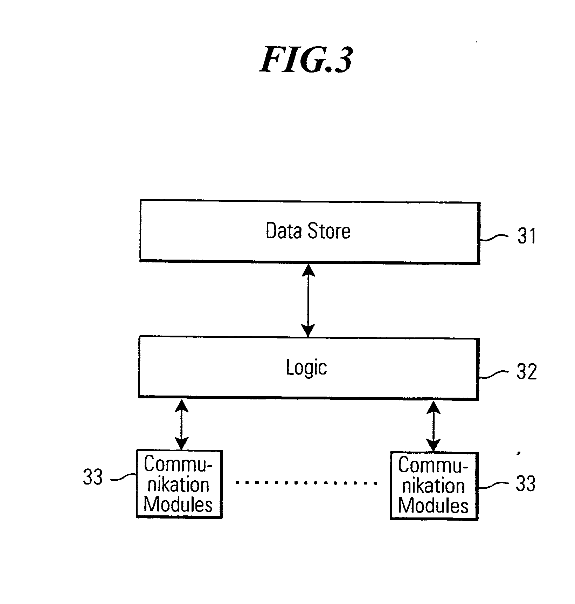

Now another embodiment of the invention will be described in connection with Fig. 3 and the following figures. Fig. 3 shows a schematic representation of a three tier software architecture, where a first tier 31 handles data storage, a second tier 32 handles functional processing and access to the data storage tier 31, and one or more communication modules 33 form a third tier that handles communication with respective exterior networks. It may be noted that the embodiment described previously in connection with Fig. 1 can be placed into the context of the embodiment of Fig. 3, in which case the database 2 corresponds to data storage tier 31, main module 5 corresponds to logic tier 32, and modules 1, 4 and 6 are contained in one communication module 33.

Each of the communication modules 33 provide a communication channel to a respective network, e.g. the world wide web, a telephone network, a fax network, etc. More specifically, some of the communication modules may be active modules for establishing active communication channels for sending data into a respective network, and other communication modules may be interactive modules for establishing interactive communication.

Preferably the second tier 32 comprises a software architecture that separates software elements for processing data transactions from software elements that implement application logic. Preferably, the software elements for processing data transactions from a basic transaction architecture, and the software elements that implement application logic are plug-ins arranged to be plugged into said basic transaction architecture.

Also, it is preferred that data transactions are conducted by means of agents on which the software elements implementing application logic perform tasks.

The structure shown in Fig. 3 is preferably implemented such that it completely integrates one common data model (in the first tier 31), business applications that all use the same mechanism of data manipulation (provided by second tier 32) and any possible way to present data (handled by the third tier 33).

Thereby, besides featuring a common data model for all applications and interfaces, flexibilities offered in the development of any kind of business logic applications as well as in making use of every possible technology to present date. Even such means as wearable computers, which are not even commercially available at the present, can be integrated in the future.

Now a summary of the three tiers shown in Fig. 3 will be given, where a more detailed description of each individual component will follow.

One aspect of the shown system is the use of a new data model in the data store tier 31. Based on this data model, any kind of processing logic such as business logic can be implemented as well as every possible way of data presentation can be used. A noteworthy innovation of the data model is the fact that every content is broken down into individual parts, which are treated as data atoms. Every single one of these data atoms ( or data items) is assigned a unique content serial number, which gives a very detailed description of the content atom based on all of its attributes and/or categories.

There are two basic subdivisions of content descriptors, namely the first subdivision being so-called natural groups, and the second subdivision being the so-called additional groups. These natural groups are categorised and described in a so-called content master catalogue. Here a description of content is derived by breaking down the universe of content into distinct sets of data using a hierarchical structure with a depth of n levels, n being a natural number. n can e.g. be equal to 14. The second group of content descriptors, namely the additional groups, can correspond to more than four dozens of additional attributes that can be used to assign special properties or qualities to every content atom. Moreover, this mechanism of individually describing the data with a serial number is not only applied to content, but also to users. Again, the term "user" does not only comprise human users, but equally means docked-on computer systems or extra hardware. All users are described the same way in the data model. Therefore, attributes relating to users can easily be compared and matched to attributes that describe content.

With this new way of breaking down data into atoms and the ability to assign various descriptors to each atom, one achieves a long desired goal: it is possible to defeat the vast amounts of irrelevant data and always and every time go directly to the one specific piece of information that one really needs. It provides the possibility that one can now group data, search for content, access certain classes of information on an individual basis. One no longer relies on predefined structures and mechanisms, but one can always dynamically apply all necessary desired criteria. This will also be referred to as an organic data cluster synthesis. It is thereby possible to apply this well defined search for exact content to every business process, to every search on a web site, to every walk-through in an online e-commerce store, etc., and to always turn the individual selection to the user (the requestor of data).

Besides the above-described fundamentally new data model, the system also provides absolute content transaction management. Namely, there is one single operating system that has the ability to bridge between various different existing hardware and applications (eventually replacing a great number of these single-purpose systems), i.e. an application that is ready to implement true content transaction management. Content transaction management specifically interacts with the above-described data model. It means to have a way to exchange and transact structure to data. Since one is now able to access any kind of data atom in a direct way and precisely define content by its attributes, it becomes very easy to implement any kind of business functionality. The only thing that one needs is a common platform which sets the ground for all of the various business applications that use the data model and are part of the overall content transaction management.

This common platform is implemented in tier 32 and will also be referred to as a business operating system (BOS). It is the ultimate expandable system that implements only the fundamentals and the necessary base functionality that is common to all of the content transactions performed. The business operating system offers gates to all kinds of external systems that can also make use of the content transaction management system. This in effect makes the BOS the essential processing unit within a large enterprise.

A key feature of the BOS is the fact that any kind of business functionality can be implemented. The new architecture of this modern system makes it possible to implement functionality for any kind of business case imaginable in separate modules, the so-called business transaction engines (BTE), which will be described in detail further on. These modules can be developed independently from any default business transaction engines. It can be configured, enabled, disabled or completely removed at any time from the system. Business transaction engines are plugged into certain content transaction channels. Preferably, the business operating system by default has three different channels: a logistics channel, a financial channel and an execution channel. Messaging and requests are routed in different ways to channels and business transaction engines, regarding their kind of destination.

In this way, the system can be implemented exactly in accordance with the tailored functionality (perfect customisation), but it also is capable of flexible adaptation.

Besides featuring a very strong and modern base system for any kind of content transaction management of any business, the system also provides the opportunity to use all possible systems and technologies to interactively communicate with users and other systems. The communication modules of the third tier are either active communication channels or interactive communication channels. All of the communication channels receive messages through their dedicated gates. Interactive channels also send requests and messages back to the BOS. They do communication in both directions, active channels only receive from the BOS.

Examples of active communication channels are:
SMS-OS, i.e. a short message service operating system that features messaging via cell phones and pagers,
APM-OS, i.e. automatic phone messaging operating system that can automatically send out predefined and dynamically generated phone messages to anybody registered within the system,
Ad-OS, i.e. an advertisement operating system that can individually place custom advertisement to dedicated places using beamers, video projection or television screens, and
RTS-OS, i.e. a running text operating system that manages ticker messages and running text displays, e.g. for stock quotes or news.

Examples of the interactive communication channels are:
a web operating system (which will be referred to as W3OS in the following) that uses XML and the above-mentioned one-page-web technology to access everyone and be used by everyone via the Internet,
PDA-OS, i.e. a personal data management operating system that offers the integration of personal digital assistance and palm top computers,
ITV-OS, i.e. an interactive television operating system that can integrate interactive TV with the system,
Mail-OS, i.e. a mail operating system that offers reporting mechanisms, such as sending out auto-generated e-mails that are put out by escalation procedures in the BOS,
Fax-OS, i.e. a fax operating system that also provides reporting features and receiver mechanisms,
Telex-OS, i.e. a telex operating system that is a gate to legacy telex systems worldwide,
I-OS, i.e. an inventory operating system that uses the JINI architecture to integrate home appliance devices like intelligent refrigerators, etc., and
WC-OS, i.e. wearable-computer operating systems that features the integration of miniaturised wearable computer devices.

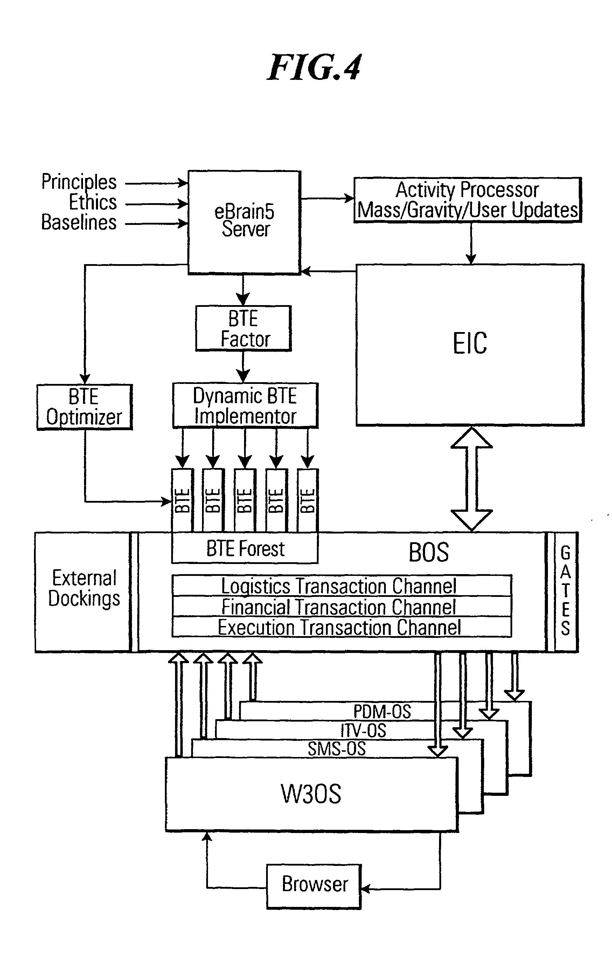

Fig. 4 shows an example in which the above mentioned structure has been expanded. It shows the above-mentioned operating systems that interact with the BOS, which also shows the three mentioned transaction channels, the gates and external dockings, and where the data store is referred to as the EIC, namely the enterprise information cluster. Additionally, Fig. 4 shows the business transaction engines plugged into the BOS. Furthermore, an intelligent server device referred to as eBrain 5 performs an optimisation of present business transaction engines and creates new business transaction engines on the basis of activity information of users with respect to content, taking into account certain principles, ethics and base lines provided to the intelligent server device.

### Content Model and User Model

Now an embodiment will be explained, in which the general concept of arranging data in the database will be described. As already mentioned previously, this new data model and user model will be described as implemented in connection with the overall system shown in Figs. 3 and 4, but it should be noted that this data model and user model can also be implemented independently of the three tier structure described above, namely in the context of any data base.

One aspect of the content model according to the present invention is that it segregates content, content meta-information (description, attributes, properties), and the representation of content.

This fact allows categorising content and associating it with a large number of special attributes. These attributes can assign special properties to every piece of content. The benefit is that it makes the whole data universe much more searchable and much better structured.

Two important parts of the content model enforce this structure of the content universe: namely the content master catalogue and the content serial numbers. This will now be explained in detail.

The content master catalogue defines an overall abstract structure for the entire content universe. It is designed to be expandable to meet all future needs. The content serial number describes each content atom and consists of two groups of sequences: the natural groups and the additional groups.

Every content atom (or content item) is described by its serial number. The natural groups are linked to the content master catalogue and the additional groups are linked to the sequence value tables. These sequence value tables hold values that can all be assigned to a specific content.

Content is essentially every piece of information or every piece of data. Therefore, content can be everything: a picture, a text, a headline, a button, a movie, etc.

The serial number, which is a unique part associated with every content item, contains 256 digits in the presently described embodiment. In order to provide efficient depth, it should contain at least 128 digits, but 256 or more are preferable.

| **Sequence** | **Digits** | **Type** |
|---|---|---|
| 1 | 7 | Master Key |
| 2 | 6 | Sub Key 1 |
| 3 | 6 | Sub Key 2 |
| 4 | 6 | Sub Key 3 |
| 5 | 5 | Sub Key 4 |
| 6 | 5 | Sub Key 5 |
| 7 | 5 | Sub Key 6 |
| 8 | 5 | Sub Key 7 |
| 9 | 5 | Sub Key 8 |
| 10 | 5 | Sub Key 9 |
| 11 | 5 | Sub Key 10 |
| 12 | 5 | Sub Key 11 |
| 13 | 5 | Sub Key 12 |
| 14 | 5 | Sub Key 13 |
| 15 | 1 | Active/Inactive |
| 16 | 4 | General Security ID |
| 17 | 7 | Special Security Key |
| 18 | 12 | Date/Time Beginning |
| 19 | 12 | Date/Time Expiration |
| 20 | 4 | Country Availability Code |
| 21 | 4 | Country Exclusion Code |
| 22 | 7 | Application/Content Site Code |
| 23 | 4 | Age Suitability Identifier |
| 24 | 2 | Language |
| 25 | 3 | Country of Origin |
| 26 | 14 | Historical Creation Date/Time |
| 27 | 14 | Historical Expiration Date/Time |
| 28 | 2 | Age Code |
| 29 | 2 | Government Code |
| 30 | 6 | General Application Code |
| 31 | 6 | Additional Application ID 1 |
| 32 | 6 | Additional Application ID 2 |
| 33 | 6 | Additional Application ID 3 |
| 34 | 6 | Additional Application ID 4 |
| 35 | 5 | Professional Code |
| 36 | 4 | Material Code |
| 37 | 4 | Texture Code |
| 38 | 4 | Consistence Code |
| 39 | 4 | Color Code |
| 40 | 4 | Relative Weight Code |
| 41 | 4 | Relative Size Code |
| 42 | 4 | Relative Value Code |
| 43 | 4 | Education Range |
| 44 | 2 | Spirituality Code |
| 45 | 2 | Sexuality Code |
| 46 | 4 | Privacy Code |
| 47 | 1 | Gender Code |
| 48 | 2 | Art ID Code |
| 49 | 1 | Fun Index |
| 50 | 1 | Cool Index |
| 51 | 3 | Society Key |
| 52 | 6 | Not Used |
| | 256 | |

The sequence value tables contain additional parts of the serial number to assign attributes to the content items. Even the security options for content items are held in these tables.

The first 14 sequences all belong to the natural groups and are defined in the content master catalogue. The other 38 additional groups are defined in the sequence value tables. It may be noted that naturally more or less than 14 sequences can belong to the natural groups and more or less than 38 to the additional groups, depending on the specific situation.

Each number in a segment is mapped to a corresponding descriptor in the above-mentioned content master catalogue or the sequence value tables. To give an example, the number 0000001 in the master key (seven digits) could represent "computer manufacturer". Then the subkey 000001 (six digits) could represent a specific company name, such as "Compaq", and the further subkeys will identify further descriptors in a hierarchical order.

Imagine one would like to search for an item or object in a company network, an eCommerce system, or even in the full Internet, but one does not know the specific name. Typically, it will take a lot of time to find some information about it, if one ever finds anything, because all present Internet services only provide a search for clearly defined subjects. Another problem is the work of search engines. These mostly look for a fitting description in the META-tag area of the web page, so one has no chance of finding a specific item.

With the categorised content model described above, a new way of searching for content is possible. It is now possible to search by attributes that the wanted object has. One could e.g. make a request for something that is black, edible, expensive, sea food and available in England. The outcome of such a search could be: caviar.

The Natural Grouping part consists of 14 different groups in which one sorts the content into a hierarchical structure from the most common category to a very elemental, specific information.
The maximum level of different groups to categorize content is 9,99... * 10^74 with a grouping depth of 14 levels.

To guaranty a maximum of security the Serial Number System contains different Security groups for each content item. It is definable to which security group, level and person this item is allowed to be shown or not.

Not just the data security is a part of these groups, but also the age suitability attribute for the user, the country of origin, from which the request comes and the expiration of the content is important.

Last but not least it is possible to set the content to "inactive" and it won't appear in any way. Not used groups would be Null.

The additional groups are predefined - in the Sequence Value Tables -, but expandable. They do not follow the algorithm, which is used for the Natural Groups. If the system manager wants to add a subject, a Content Input Tool may give it a new, not used number, e.g. just the next that is free in line. The serialization of the "Professional Code" (Group 35) is copied from the German financial coding system, so it will differ from some other coding systems in our content model.

The Neutral Attribute Groups offer the opportunity to get more clearly information about a specific topic, without knowing the general name of it. The neutral groups describe the content by its own general properties like: Language, Country of Origin or the Material it is made in. Also these groups can be added to the "normal" search to get out clearer information about something.

The User Dependent Attribute Groups are quite similar to the Neutral Attribute Groups, but the give a more emotional and human specification to the object. Groups like the "Spirituality Code", the "Education Range" or the "Fun Index" offer search functionality, which are totally new in the IT world.

The natural groups consist of 14 fields, which offer a very detailed mapping and description of content.

The 1st group is the main group and it contains 7 digits: 0000000 to 9999999.

The 2nd - 4th group has 6 digits: 000000 to 999999.

The other groups have 5 digits: 00000 to 99999.

That offers a maximum flexibility of 9999999 * (999999)³ * (99999)^10 = 9,9... * 10^74 different groups.

To give a group a unique number it is necessary to sort it before storing. All those 14 groups will sort the data by their first two or just the first letter of description (in the above example, where a descriptor in the main group was "computer manufacturer", these two letters would be CO). The following table will show the letter-sorting algorithm:

| Group # | important chars | Description |
|---|---|---|
| 1 - 3 | AA to ZZ | The first three groups will be sorted by the first two letters of their description. |
| 4 - 15 | A to Z | The other groups will be sorted by their first letter of the description. |

That means, that a specific group will get a number that has a relationship to the first letter(s) of its description. Now it is possible to define ranges of numbers in every group, which belong to different letters.

The English alphabet has 26 letters. Every number of our 14 groups wouldn't be dividable with 26, so we've to cut off the broken rest of the number to keep it as an integer. That means, that some numbers will fall out of every group. To control the way, which numbers will never be used, it is necessary to define a special algorithm. There are two possible ways where we can loose them:
- Between every of the 26 parts
- At the end of the whole group

For that we need to divide every group (remember that the first has already 7 digits) with 26 (for the first 3 groups with (26)², because we'll store them by their first two letters).

After cutting of the decimal part of the number we know the range width for every letter. Now we have to multiply that number by the number that the letter has. For example: The D forces our system to multiply with the factor 3. In this way, it is possible to fix the not-used numbers, because they will be at the end of each group level.

| Group | Letter importance | Algorithm | Description |
|---|---|---|---|
| 1 | AA - ZZ (7 digits) | 9999999/( 26)² = x x * n = Group number (n is the rank of the letter) | The number will be twice divided by 26 and then multiplied by the letter-level |
| 2+3 | AA - ZZ (6 digits) | 999999 / (26)² = x x * n = Group number | |
| 4 | A - Z (6 digits) | 999999 / 26 = x x * n = Group number | The number will be divided once by 26 |
| 5-14 | A - Z (5 digits) | 99999 / 26 = x x * n = Group number | |

There are two main parts in our Serial Number: The Natural Groups, which sort the content items in a kind of catalog, and the Sequence Value Groups, to which the Security and Attribute Groups belong.
In both parts it is possible for the system manager to create and add new subtypes into the consisting structure. If a new product comes out, which belongs to a new group, it can be added easily.

Also, the system manager has the chance to choose from an existing list like a drop-down-menu. All those lists for every group and category need to be predefined in the database.

The Views (or visual representations) also belong to the Content Database as every content item does. The reason for this way of storing data is very simple. Views are also stored in the Content Database, because every content item in the Content Database will refer to its own view. This means, that a particular item will not be saved only with its pure data or byte stream, but also with short formatting tags to give the system more functionality assigned to it in the View Table. For example to a picture there are also the tags "<show picture></show picture>" saved in the View Table. This offers later versions to create pages "on the fly" without any rules of predefined views.

The View ID is an integer number with a length of 4 digits. So the maximum capacity is 9999 of different views.

| Range | Views |
|---|---|
| 0001 to 0999 | Content Views for single items |
| 1000 to 9999 | Views, Stylesheets, Assemblies |

The first 999 ID numbers will define the views for all single content items like Buttons, Pictures, Texts and so on. From 1000 on the Assemblies will be defined. So the system manager has the chance to create nearly 9000 different views. Views will be defined in more detail with the Visual Tools below.

The Content Database consists of three groups of database tables:
- Content Table (storing the actual Content Atoms)
- View Table (storing descriptions for default and custom views of the content)
- Serial Number tables (defining the values for the Content Serial Number sequences)

In the Content Model are 3 tables, which basically deal with content and content information:
1. Content Information Table (CIT)
2. Content Table (CT)
3. View Table

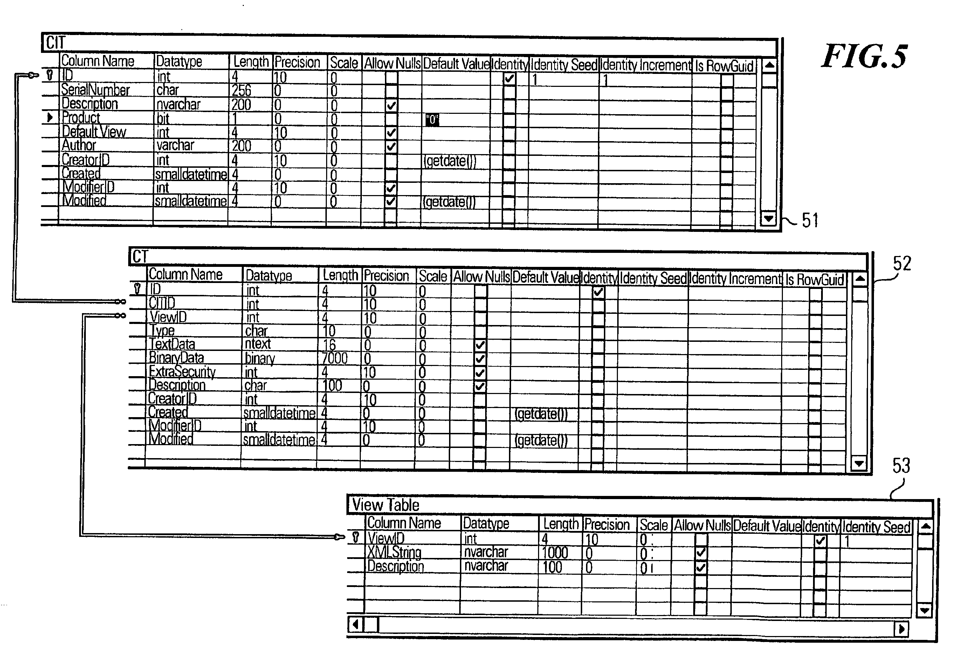

This is shown in Fig. 5.

Figure 2 shows the dependencies of the three content tables. In that way it is possible to assign a Content ID (CIT) to a special View (View ID).

The Content Information Table (CIT) 51 contains important information. The whole above described Serial Number and a Description give the content item a unique place in our Database Model. The Product definition is just a bit value, which indicates if the content is a sellable item (with associated inventory and price in the Financial Database) or not. The Product flag is by default set to '0', what means: Not a Product. The CIT 51 also contains a value for a Default View. That means, the system manager can define, if a default layout should be used or not.

The Content Information Table features the following attributes:
- ID. This is an internal identifier for contents that is, unique and unambiguous.
- SerialNumber. The SerialNumber consists of 256 bytes and acts as a fully detailed description for any type of content. It not only classifies these data but also allows assigning a broad range of attributes to them.
- Description. A textual description of this content.
- DefaultView. This is a reference to a ViewID that represents the default view for this content. The DefaultView parameter can be omitted to indicate that there is not default view, or if there is only one view that becomes automatically the default. Primarily, this default view must be listed in the Content Table.
- CreatorID, Created, ModifierID, Modified. These attributes must be set automatically when the record is altered.

The Content Table 52 stores the actual content items. The CITID assigns it to the Serial Number. Also there are two columns for the data, a text field for Strings and a binary field for the binary saved data (like pictures). The Type column defines what type of data will be stored. The Extra Security column is an important feature, because just by the Serial Number all items of a special content will have the same security level (pictures, texts, headers). This provides the additional chance to set the security level of a single content item different than the other content items with the same CITID.

The Content Table also contains for every item a View ID. This View ID refers to the View Tables. That allows the View Tools to set or choose a special View or Assembly for one ore more content items.

In the Content Table, all actual contents and views for contents are stored. For every con-tent expressed by a single, individual Serial Number, there can be one or more representations:
- ID. This is a continuous number that is unique for every entry in the table.
- CITID. This identifier matches the ID of the content described in the Content Information Table this actual content data belongs to. For every representation of a content description, there is a record in the Content Table with the CITID associated with the SerialNumber and the descriptive entry in the Content Table.
- ViewID. Every representation of a content can be seen as a view. Any ViewID used in the Content Table refers to a View definition with a unique ViewID in the ViewTable.
- TextData. This is the field for textual content representations.
- BinaryData. This is the field for content representations stored in binary format. The ViewID determines whether the TextData or the BinaryData attribute is used (it is not possible that both of them contain data).
- ExtraSecurity. This attribute can contain an additional (differing) security setting for the actual content representations (if necessary). The ExtraSecurity field extends the security settings specified in the Serial Number of that content; consequently, ExtraSecurity must not be lower than the overall security setting.
- CreatorID, Created, ModifierID, Modified. These attributes must be set automatically when the record is altered.

The View Table 53 contains the XML strings of all created views and also placeholders for new ones. The View Table contains no content information. It contains the View and a type defining XML String. That means, that a special View always belongs to a special content type (like "small picture"). Because Views without content information are used, but with content type information, one can use one View Table for all content items in the whole Content Database.
For example, a Button will always work like a Button, so one can use the same View for all Buttons, but the different functionality will be specified in the Button Code in the Content Table.

The ViewTable lists all predefined types of views, starting from basic types like pictures, headings, paragraphs, links, to views containing other views and/or references to Content ID's:
- ViewID. Every ViewID identifies a specific view type unambiguously.
- XMLString. This attribute of the ViewTable contains the empty XML file for this view. This XMLString contains one of the following:
- Tags that describe the setup of the view, if necessary (for "filled views") in combination with the ViewID's for the representations or assemblies to be placed between these tags
- Tags that only describe the format of the view, with placeholders (numbers) that can be replaced by any view.

The XMLString can contain references to
- other views (ViewID's) or
- contents (Content ID's), if necessary in combination with a ViewID other than default.

These references allow a recursive composition of views and content representations. Since a view can refer to another view, this second view can be placed within the first. In parallel, views can at any time also refer directly either to a content description (which will lead the request to the DefaultView, which can of course again contain other views or content), or to a specific view (representation) of a content (when the reference also features a ViewID).
- Description. This field contains an unambiguous description for this view.

The Serial Number is divided into sequences. The reason for this division is, that we can have each sequence correspond to a certain attribute of the content. The sequences contain the natural content groupings and the additional attributes assigned to each content item like color, security and its professional code.

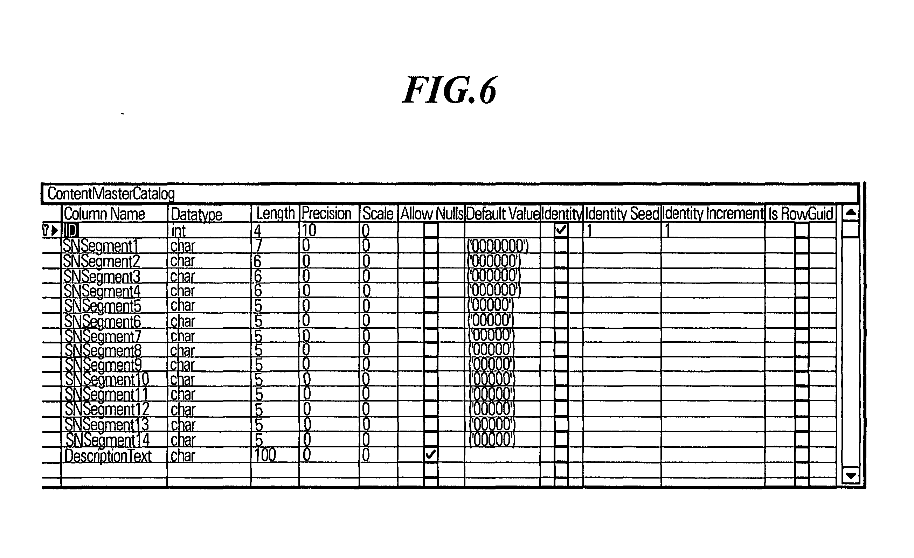

The Content Master Catalog contains the 14 natural groups, which categorize the content, see Fig. 6.

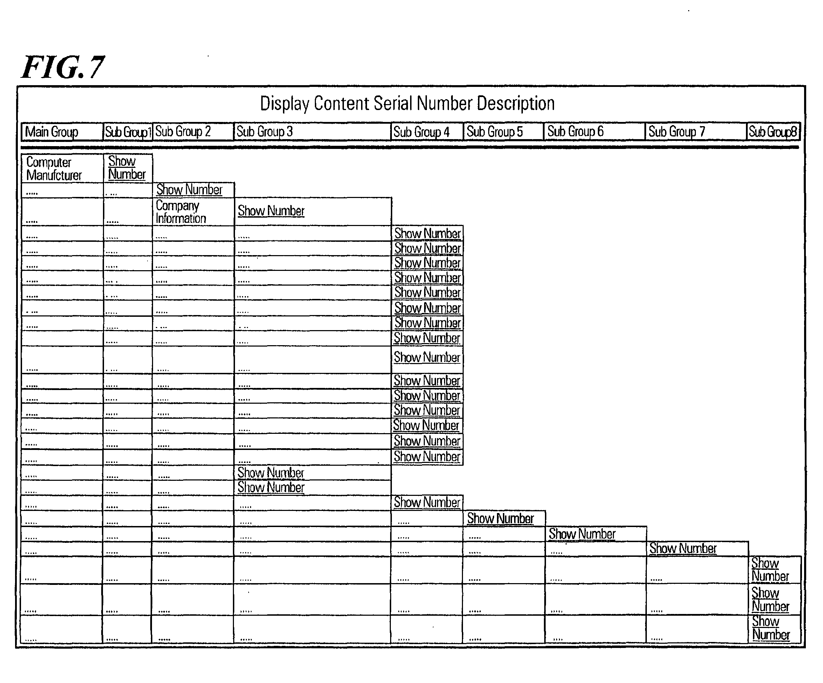

As shown in Figure 6 the Content Master Catalog has 14 SNSegments (Serial Number Segment). They allow to group content in a very detailed hierarchy. All Segments together establish a unique number; it is not allowed to have this 75-digits long number twice (unique constraint). Figure 7 shows an example of the Content Master Catalog.

The Sequence Value Tables contain the other parts of the Serial Number holding the Security Options, Attributes and Properties. They offer new ways of security and content control management. But also they offer new possibilities of search functionality. It is possible to search just with attributes for a special content without the need to know its name. For example, it is possible to search for something just by its color, texture and profession.

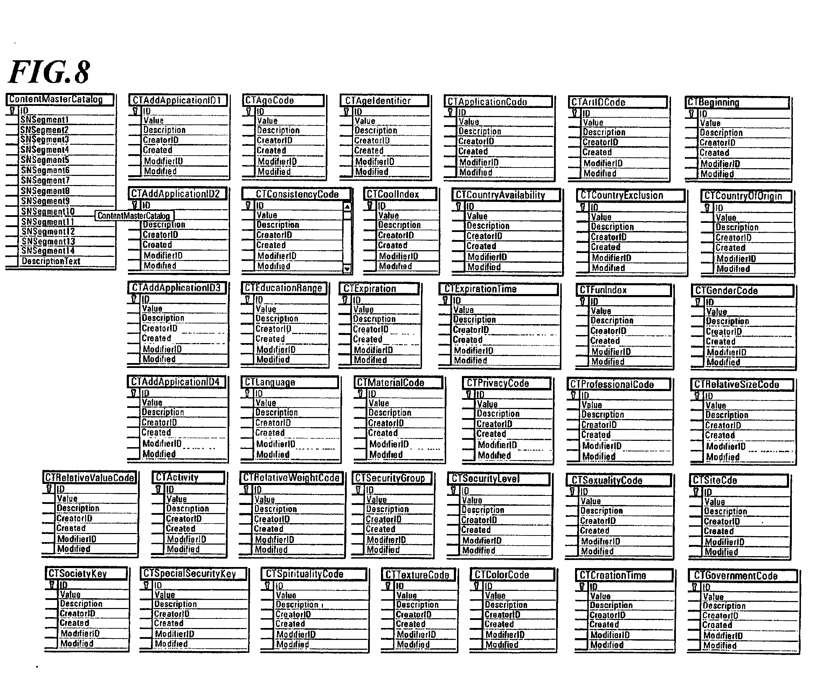

Another task of the Sequence Value Tables is to map a part of the Serial Number to a description. The system manager doesn't have to know anything about the Serial Number Structure. It is possible to add new content into the Database and choose its attributes with drop down boxes. These boxes can be realized with the help of the Sequence Value Tables, because they map the needed Serial Number to a textual description. Fig. 8 shows an example of the Sequence Value Tables.

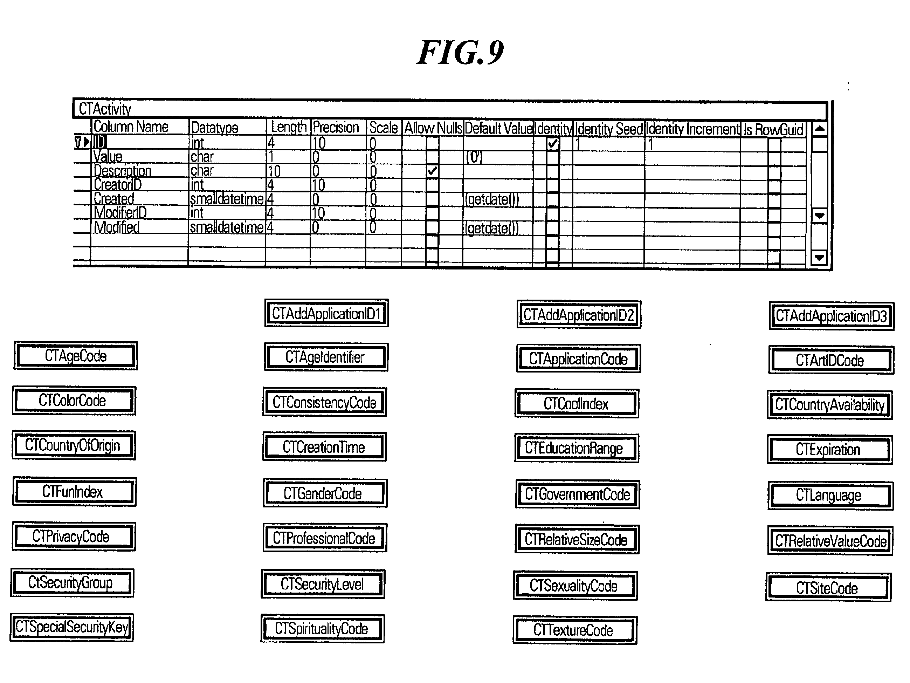

All Sequence Value Tables are designed in the same way. This is possible, because all of them have the same task: assign a description to a part of the Serial Number, so they have a mapping functionality, see Fig. 9.

The Serial Number Sequence is held in the Value column. The Description field makes the number readable and understandable for humans.

These are examples of the serial number sequences that my be defined in the respective Sequence Value Tables:
Activity, ApplicationCode, AdditionalApplicationCode1, AdditionalApplicationCode2, Addi-tionalApplicationCode3, AgeCode, AgeIdentifier, ArtIDCode, ColorCode, ConsistencyCode, CoolIndex, CountryAvailability, CountryOfOrigin, CreationTime, EducationRange, Expira-tion, FunIndex, Gender, EnvironmentCode, GovernmentCode, LanguageID, PrivacyCode, ProfessionalCode, RelativeSize, RelativeValueCode, SecurityGroup, SecurityLevel, SexualityCode, SiteCode, SpecialSecurityKey, SpiritualityCode, TextureCode.
Naturally, more sequences can be implemented, as is desired.

Now an example of a user data base of the invention will be described.

The fundamental idea is to have one overall user model, in which every user can be set into relation to any kind of content. These relations to content are implemented in using two kinds of mapping tables: The Gravity-Mappings that set a user in relation to the Natural Groups of a content. And the Peripheral-Mappings that set a user in relation to the Additional Groups attributes of a content.

By having this new User Model that corresponds to the Content Model, we are now able to implement dynamic content management systems. Here content does not have to be static anymore, content is really dynamic now, because one can constantly recalculate a contents relation to a certain user by changing the mapping attributes.

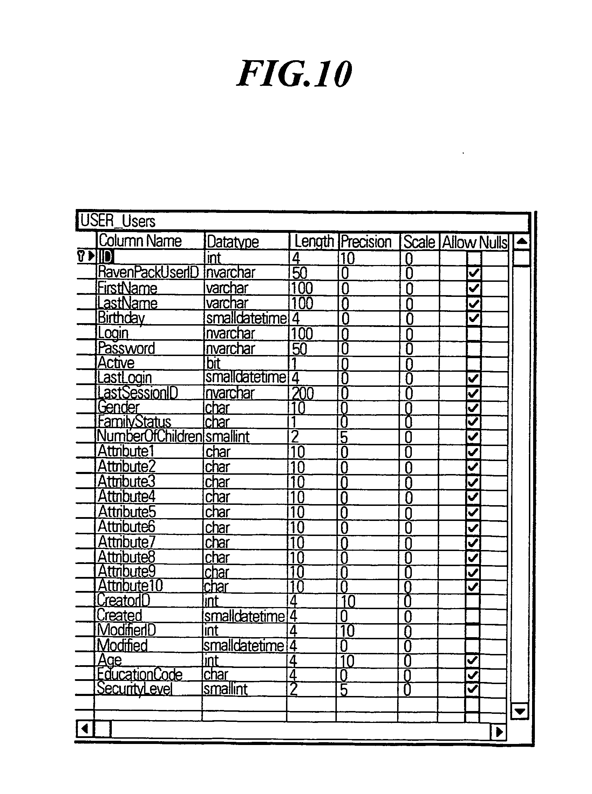

The primary user data is stored in the User Table, an example of which can be seen in Fig. 10.

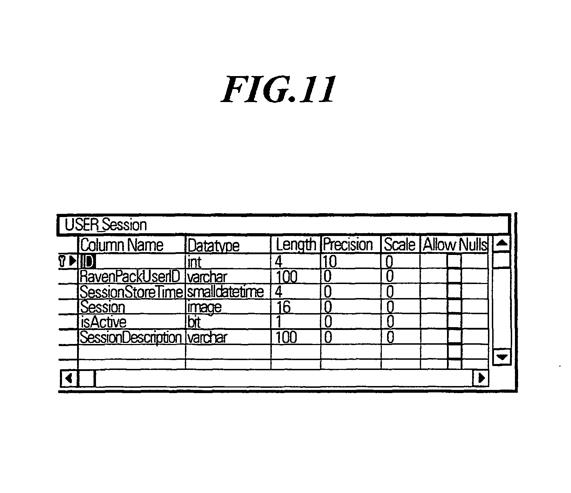

Another part of the user model is the session table (see e.g. Fig. 11). The Session Table stores user sessions, also with the ability to reactivate an old session and continue where a user has left his session at an earlier time.

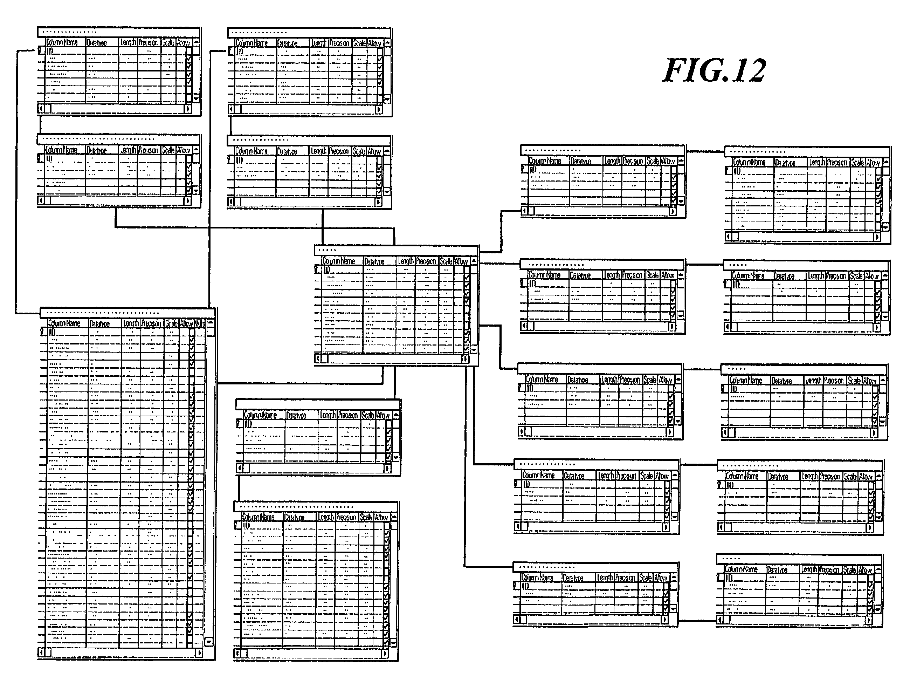

Other parts of the user model are e.g. tables that store more user information like addresses, emails, phone numbers, fax numbers, security settings (security levels and security groups), see e.g. Fig. 12.

The stored security settings are advantageous, as they may be matched to the security settings for each content (stored in the CIT Serial Number field). For every user access to content, this always allows to check access rights with great simplicity. This is a very important benefit of the presently described content and user model.

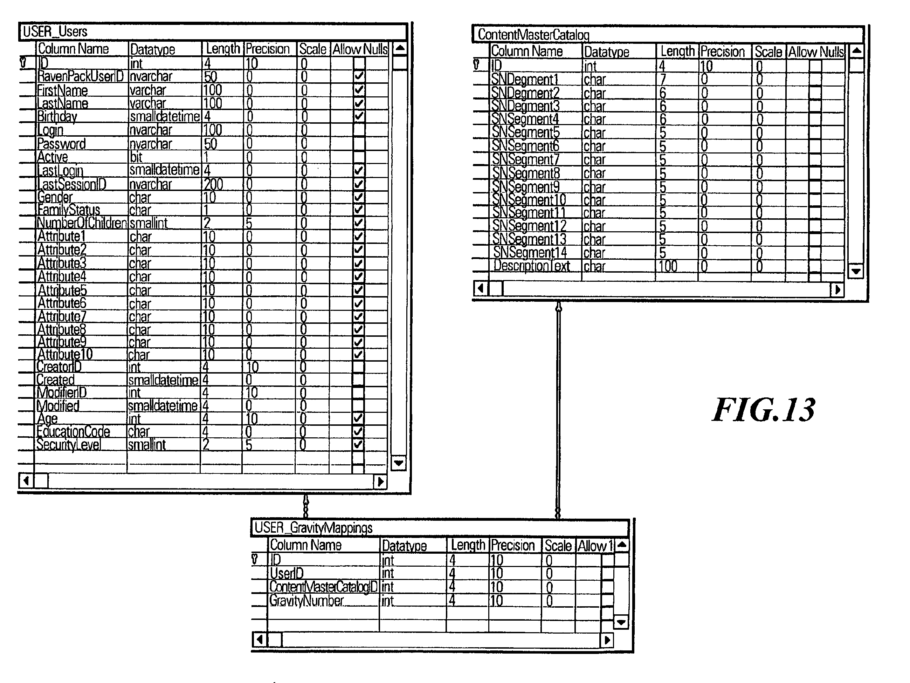

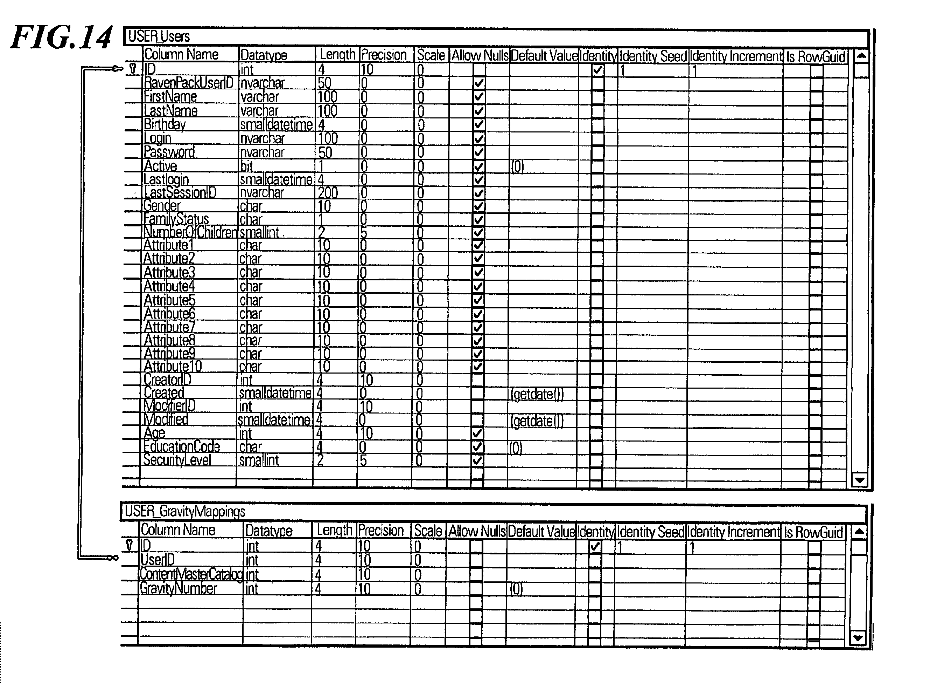

Another table that is preferably included is the so-called Gravity Mappings table, which stores the relation of a user to certain content items by establishing a relation to Natural Groups settings of the Serial Number of that content. For each content, a Gravity number (0=very low relevance, 99=very high relevance) denotes the relation of that content to a user, see e.g. Fig. 13 and 14. In other words, the user gravity table stores the "attractive force" exerted between a given user and given content by monitoring the activity, where this intensity of interaction between the user and the content is recorded by the gravity number.

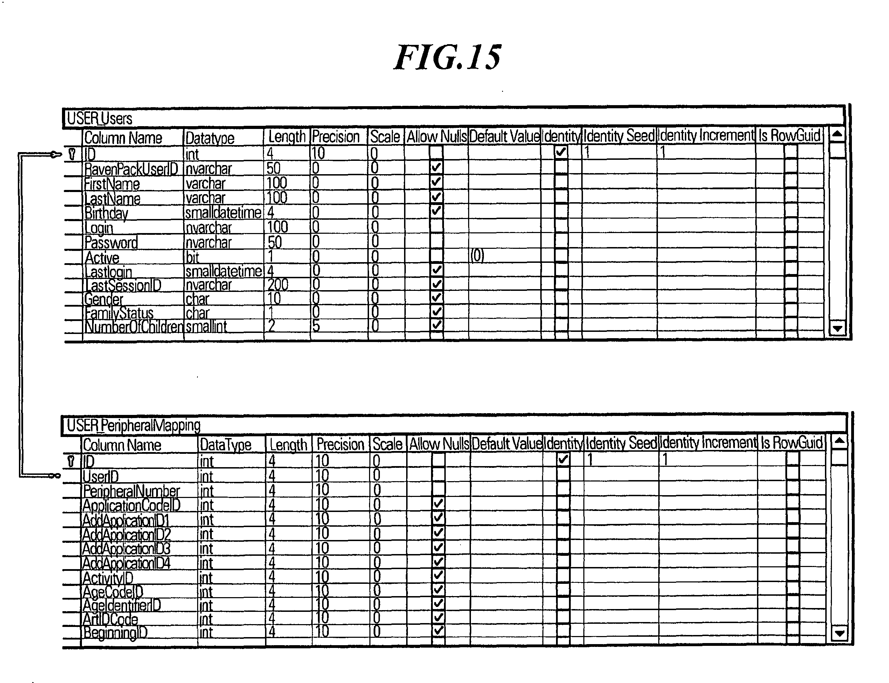

A further part of the user model is the so-called Peripheral Mappings table, which stores the relation of a user to certain content items by establishing a relation to certain Additional Groups attributes of that content. For each content, a Peripheral Number (0=very low relevance, 10=very high relevance) denotes the relation of that content to a user, also see Fig. 15.

Preferably the data base system also includes a Financial/Business Flow Database, which is the only database that can be accessed by custom implementations of some business logic elements (the Business Transaction Engines, see below). This database is customisable in the way that every company can populate it with all necessary tables it needs for its enterprise business application. The needed business applications are implemented in the BTEs that then access the tables in the Financial/Business Flow Database.

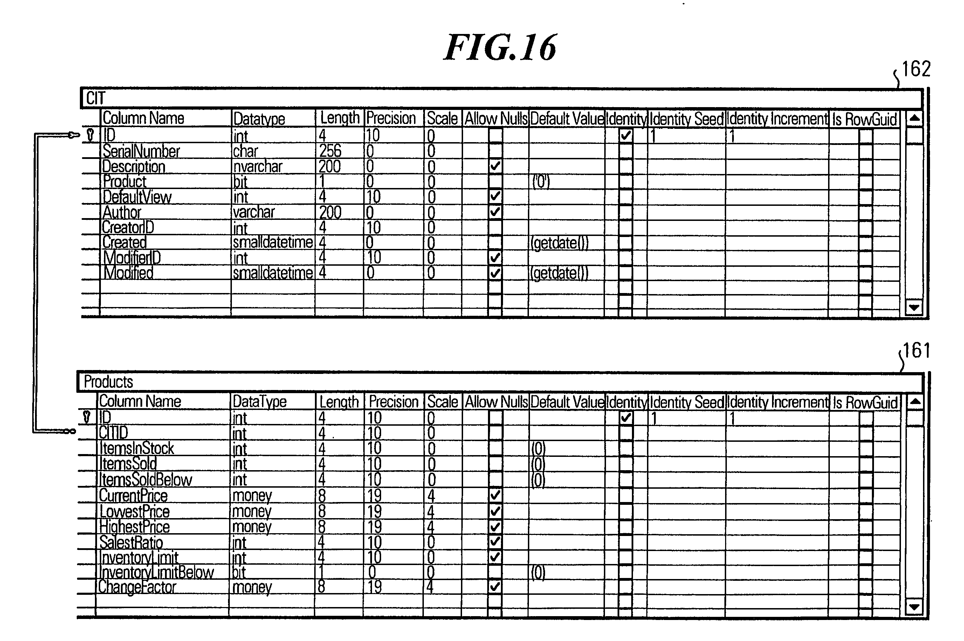

A special table in this connection is the so-called products table, which is a demonstration of having some product information available, which one can use for implementing some sample auto pricing and inventory functionality. (The sample Pricing BTE is its counterpart.) An example is shown in Fig. 16, see table 161.

The Products information is linked to contents in the CIT that have the "Product Flag" set to true, see table 162 in Fig. 16. All additional information that relates to content items and resides in any table in the Financial/Business Flow Database will be linked to the CIT later also.

### Business Operating System (BOS)

The Business Operating System (BOS) is the central intelligence unit of the entire System. It preferably implements the entire application logic and is the only system component that accesses the Enterprise Information Cluster (EIC), i.e. the data based having the above described structure.

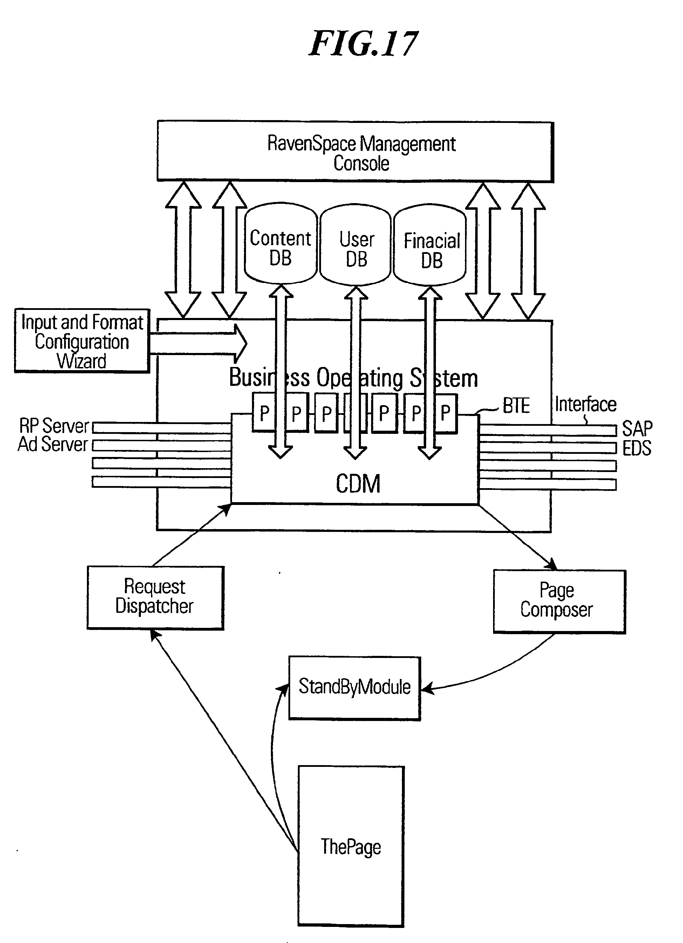

Figure 17 shows an overview of a preferred embodiment of a Business Operating System (BOS).

One of the primary design features for the BOS modular architecture is that it is highly secure. This means, it withstands any malicious attacks to insert malicious requests into the system. Only the CDM (Central Decision Module) should have access to the database in which all available information is kept. Other aspects of security include the authentication of each request with its sender.

The BOS is able to adapt to other Business Management Systems (like e.g. SAP or EDS) and external systems to may want to use the transaction functionality of the BOS. Examples are AdServer, search engines, or others.

The BOS subsystem is designed to cope with future developments. The functionality of the BOS (especially the CDM) is adaptable to all kinds of needs of any potential future customer. More specifically, any functionality, which has not been thought of during the initial implementation specification, should be able to be added to the system later at any time without modifying the system.

Although the BOS may have to process complex computations, overall speed is very fast, even when there are many users at a time.

Conventional content management systems are very static applications that cannot be adapted to a variety of different transactional needs. This means that in case the requirements for content management change, the entire system must be replaced or at least great parts of it need to be changed and undergo huge modifications.

The present invention introduces a very modular and extensible architecture for the BOS. The main features of the BOS are:
1) A very strict separation of transactional processing architecture and the actual implementation of business and application logic. This offers the ability to add or replace certain business transactional functionality to the system later at any time.
2) The ability to interface to 3rd party business management systems. So one can bridge to existing legacy systems that a company may still want to use.
3) A very open architecture for integrating external systems. This gives the ability to let other external systems use part of the functionality the BOS implements, such as offering the great search abilities for specific content to certain search engines.
4) A central management tool that performs all the necessary configurations and maintenance operations on the BOS.

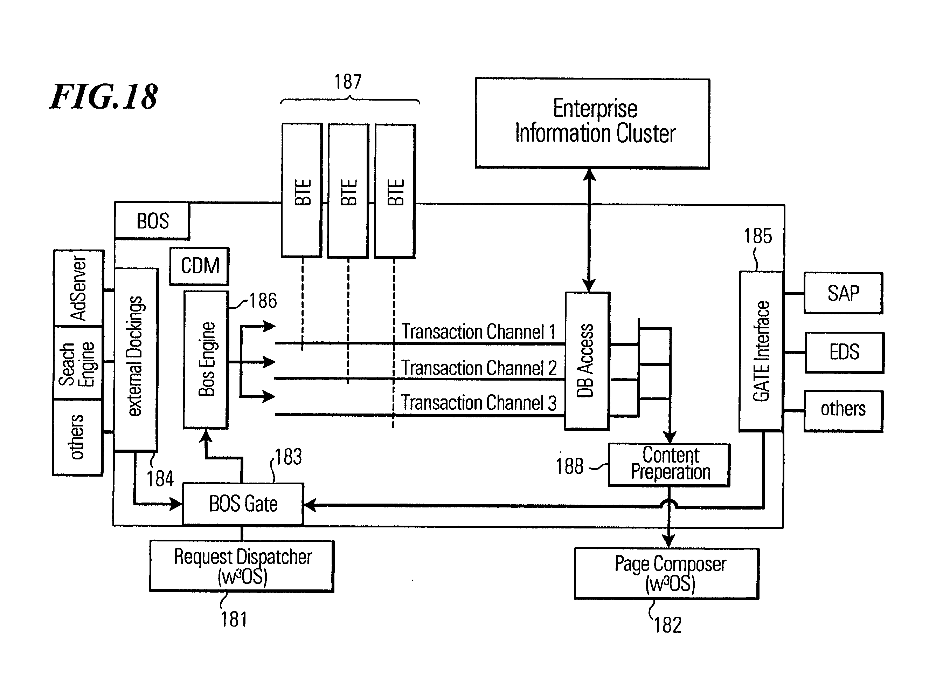

These demands led to a very modular and structured setup of the BOS that is shown in Figure 18. The Request Dispatcher 181 and the Page Composer belong to the third tier and shall be described later on. A single gate 183 is provided for handling messages entering the BOS, be it from a communication module (that comprises request dispatcher 181), from a external docking 184, or form a Gate Interface 185. A BOS engine distributes the requests to appropriate transaction channels, where a data base access involving business logic from one or more business transaction engines 187 provides data that is then prepared in an element 188.
ad 1) The actual business and content transaction functionality is totally separated from the architectural implementation that supplies it. The transaction architecture is the same at any time, no matter what the needed business logic may require at a time. Any kind of business logic is added to the system by the means of dynamic plug-ins, which are called Business Transaction Engines (BTE). These BTE alone supply the complete business logic implementation. Therefore it is easy to change, add, or even delete certain functionalities, by just activating or deactivating the respective BTE.
ad 2) The CDM offers a GATE interface to bridge to existing legacy systems of a company.
ad 3) External 3rd party systems can - if authorized - launch themselves certain requests that can enter the BOS and can be handled the same way as internal messages.
ad 4) A central management tool is also provided.

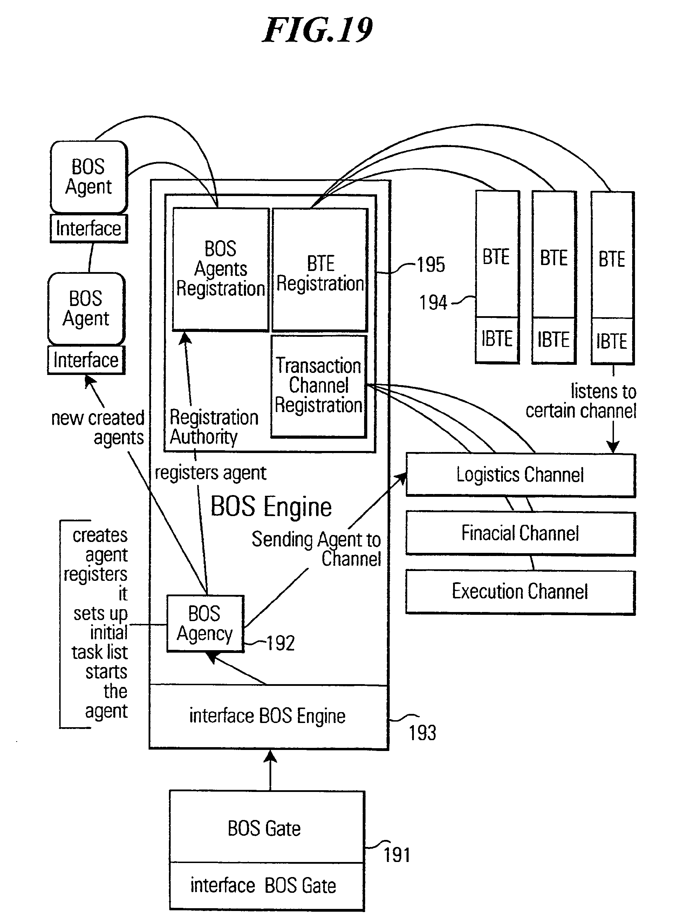

The BOS can be seen as a component encapsulated by a facade interface. It hides several components, which are described in detail in the following, see Fig. 19.

On the other hand, the modules can also be classified in a 3-tier architecture model. The GATE Interfaces and external dockings to the CDM form the first tier. They are the bridge for external systems to the BOS. The BOS Engine, the BOS Agents, and the Transaction Channels are a separated entity of application logic that only supplies the platform for business and content transactions. The transaction functionality is implemented in the BTE alone. They are the third tier and only hold the implementations of business logic in a very modular way.
The BOS Gate 183/191 is the entrance door to the CDM. It is the only way that any System Messages/Requests can enter the CDM. Everything needs to go through this gate. The BOS Gate can perform security checks, and then it forwards the System Message/Request to the BOS Agency 192. Requests that arrive at the BOS Gate can e.g. come from at least three different origins:
- The w³OS (or other Communication Channels)
- Internal Interfaces (GATES)
- External Dockings

For all these systems there exist two sub categories of gates: IN-Gates and OUT-Gates. They are the respective type of gate for incoming messages to the BOS and outgoing messages from the BOS back to a certain system.

During operation we could e.g. have the following gates at a running BOS: A W3OS-IN-Gate and a SAP-IN-Gate, which both forward incoming messages from the W3OS and an existing SAP system to the BOS-IN-Gate, and on the other hand a W3OS-OUT-Gate as well as a SAP-OUT-Gate, which delegate outgoing messages from the BOS-OUT-Gate to the correct receiving system, either the W³OS or the SAP application.

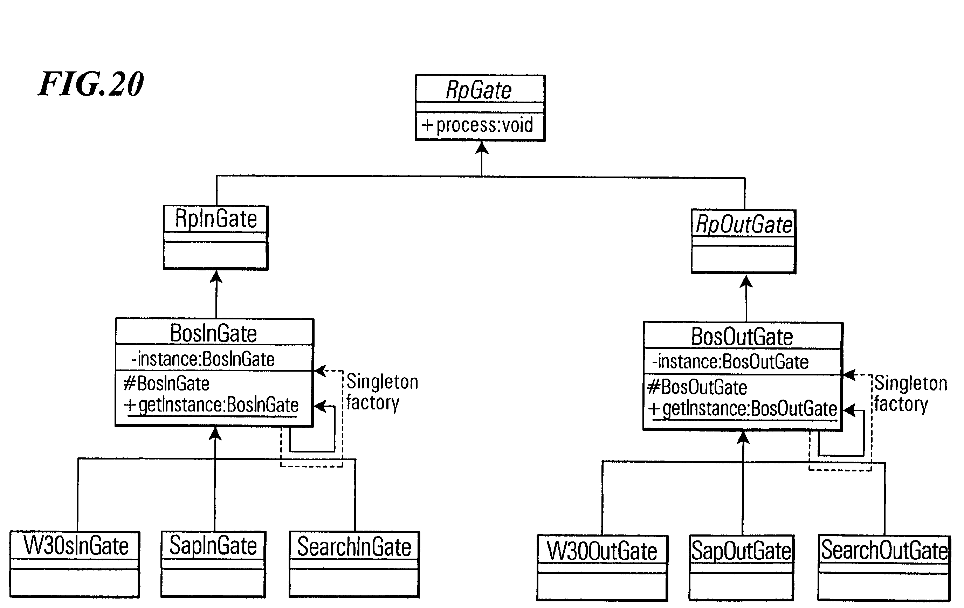

Therefore we introduce a very abstract and flexible overall-structure of general Gates, see Fig. 20.

For each pair of a certain type of IN- and OUT-Gates we want to implement the class using the Singleton-Pattern, assuring that at any given type we always have only one single instance of an in- or out-gate.

When an incoming request in translated into an internal system message at the BOS-In-Gate, it is also given along to attributes, which have to account for the requests origin and the request-answer's destination. Given this mechanism we want to be able to route certain processes very flexibly. During the processing of each request we can on the fly determine (also taking into account its origin) where to send the answer. Origin and destination might very well differ from each other.

Preferably, a separate Gate for the Visual Tools is provided. Therefore we need to account for a separate Vtools-In-Gate and a separate Vtools-Out-Gate that handle special VtoolsSystemMessages.

The BOS Agency 192 is the central initiator of any Content Transaction Management performed in the BOS. The Agency actually parses incoming requests, creates BOS Agents for each type of request, and sends off that Agent with the request to perform all the required transactional tasks. Each BOS Agent gets an initial task list based on the type of incoming request. Based on its task list, the BOS Agency sends the Agent to the respective Transaction Channels in order to access the BTE, which will perform the required tasks on the BOS Agent.

The main functionalities of the BOS Agency are the following:
- Queuing of System Messages/Request coming from the BOS-In-Gate
- Creation of BOS Agents
- Mapping of incoming System Messages/Requests to registered types of BOS Agents
- Configuration of BOS Agents
- Storage of BOS Agents
- Starting BOS Agents
- Flow-Control of BOS Agents

The creation of new BOS Agents can be initiated in three ways:
· By the BOS Gate 191 that tells the BOS Engine 193 to start a new Agent for a certain incoming System Message/Request.
· By a Business Transaction Engine (BTE) 194 during the performance of some task that requires a spin-off escalation process to start. A new BOS Agent will implement this escalation process.
· By a BTE that starts a Timer Agent that is run at certain times only, without a triggering event.

In this way it is possible to implement infinite escalation procedures.

Basically the BOS Agency always needs to make some decisions before it starts any Agents: First of all it needs to determine of what type is the incoming request and what is the corresponding Agent it needs to launch for that request. And second it needs to determine the initial destination address of the created Agent. That means it needs to determine for a certain type of request on which Transaction Channel it needs to put the Agent, so it can be picked up by the correct BTE that is listening to this channel. In order to make the mentioned decisions during the start-up of an Agent and for its flow-control, the BOS Agency makes use of the BOS Registration Authority to a great extent. It mainly uses it to look up mappings of request types to types of Agents or mappings of BTE to Transaction Channels.

By default a BOS Agent will always go through the following sequence of channels: The Logistics Channel, the Financials Channel, and the Execution Channel. But this sequence can be altered in special cases by decisions made in some BTE.

The BOS Registration Authority 195 is the central components registry of the BOS. It is often used by the BOS Agency during Agents creation and flow control and it holds information about the following components:
· Installed Transaction Channels. Any Transaction Channel that is installed using the Manager has to be registered here.
· Installed Business Transaction Engines (BTE). All installed BTE that are set active in the Manager are registered in the BOS Registration Authority. This is needed for the BOS Agency to look up what kind of BTE are installed and running and what functionality they provide.
· Existing types of BOS Agents. All types of BOS Agents are per default registered in the BOS Registration Authority. Whenever a new BTE is installed (and with it a new kind of BOS Agent) the new Agent type needs to be registered too.

Derived from this information it also contains mappings of some information:
· BTE to Channel Mapping: containing information, which BTE are installed on which Transaction Channel. The BOS Agency needs to look up this information to determine where to send an Agent so it can be picked up by a certain BTE.
· Requests to Agent Mapping: describing which classes of requests are to be handled by what type of BOS Agent. This is needed for the BOS Agency to determine what type of Agent needs to be initialised for an incoming request.

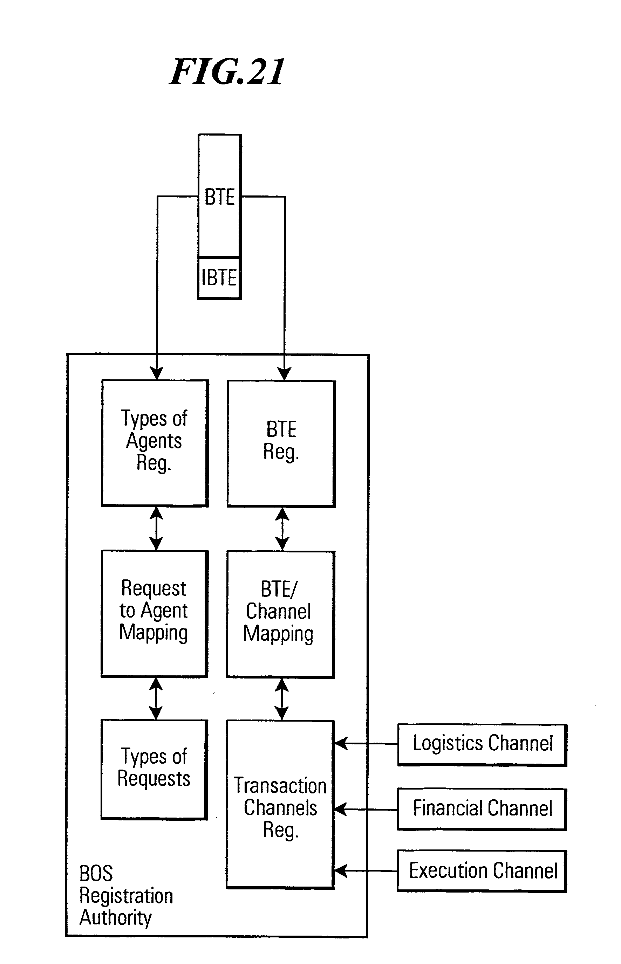

Fig. 21 shows the actions inside the BOS Registration Authority in more detail.

The BOS Session Manager manages internal sessions. We account for having different session managers for all kinds of different systems that will access the CDM in the future. One may e.g. have a separate session manager for SAP Sessions, or a different session manager for a search engine session in the BOS.

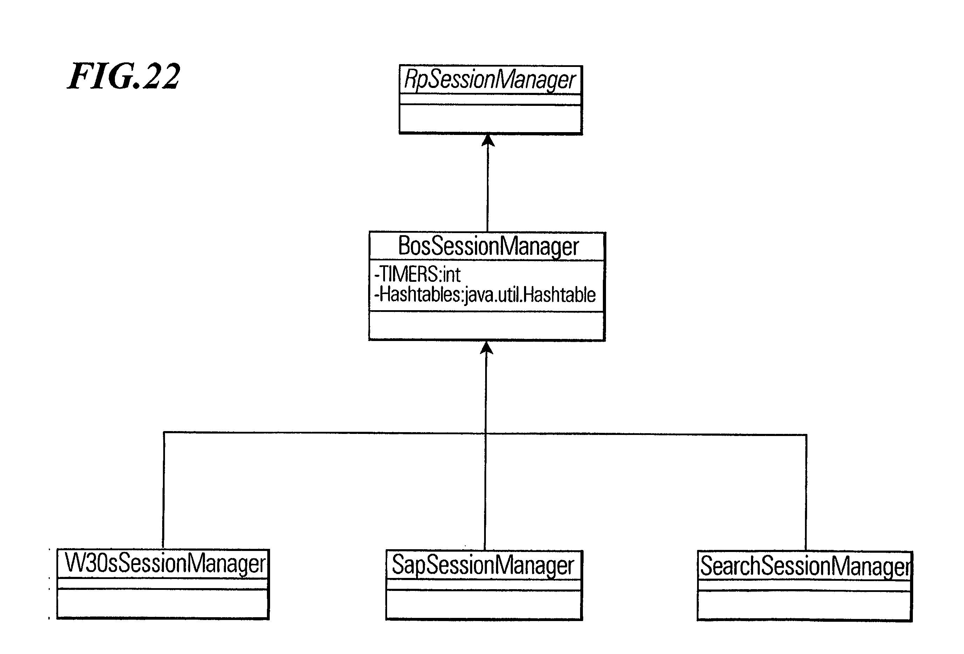

Figure 22 shows a UML Diagram of the Session Manager Hierarchy.

Content Transaction Management always takes place in the Business Operating System (BOS). It is preferably done in three steps:
· PHASE1: First all possible content serial numbers and their related information is retrieved from the content database within the EIC.
· PHASE2: Now all the necessary processing of the content serial numbers is done. Some content serial numbers may be dropped during this processing phase, due to some excluding conditions, but no additional serial numbers should be added during PHASE2. Other additional information, such as pricing for example, could be picked up from the Financial/Business Flow Database. All these different kinds of additional information are packed to the serial numbers.
· PHASE3: Here all the actual content is picked up from the Content Database and is put into a presentable shape. This is where Views step in. In this last phase all applicable content is picked up and when it is present the decisions for layouts are made, packaged and sent to the BOS Gate.

These three functional groups of STEP 1 (content information retrieval), STEP 2 (additional content processing), and STEP 3 (pickup of actual content, additional layout processing, and packaging), can be associated with the 3 Transaction Channels:

| Number of Transaction Channel | Transaction Channel Name | Content Transaction Management | EIC (database) Access |
|---|---|---|---|
| TC 1 | Logistics Channel | PHASE 1 | Content DB, Users/Dockings DB |
| TC 2 | Financial Channel | PHASE 2 | Financial/Business Flow DB |
| TC 3 | Execution Channel | PHASE 3 | Content DB, Users/ Dockings DB |

Most of the implementation of the functionality of PHASE2 is done by implementing Business Transaction Engines (BTE). Special BTEs can also be used to accomplish part of the functionality of PHASE1 and PHASE3. But the main difference is that only with the Financial Channel we want to allow custom made BTE that themselves have access to the Financial/Business Flow Database. Any BTE that are used in PHASE1 or PHASE3 have to be pre-installed default BTEs. They cannot be replaced or deactivated since they are and need to be the only ones having access to the Content DB and the Users/Dockings DB.

Transaction Channels are a way to group together certain BTEs and their functions (e.g. all financial BTEs, or BTEs that supply accounting information) and database access. By default there are three different Transaction Channels in the BOS:
1. The Logistics Channel
2. The Financials Channel
3. The Execution Channel

Normally a BOS Agent accesses these three Transaction Channels in the sequential order mentioned above. After each channel has finished execution, an Agent is routed back to the Agency with a flag indication the completion of a channel. In special cases the Agency can reroute the Agent on a path different from the default, e.g. sending it to the Financial Channel several times to pick up additional information before sending it to the Execution Channel.

A Transaction Channel itself does not perform actual work. All it does is, it has BTE sub-scribe to it and then route BOS Agents that travel on the channel to the right BTE. By introducing Transaction Channels we can limit the ability of BTE to only listen to certain channels. E.g. we could have a certain BTE only listen to the Financial Channel. Another one could be listening to Logistics Channel or Execution Channel. The decision on which channel a BOS Agent is sent originally is made by the BOS Agency.

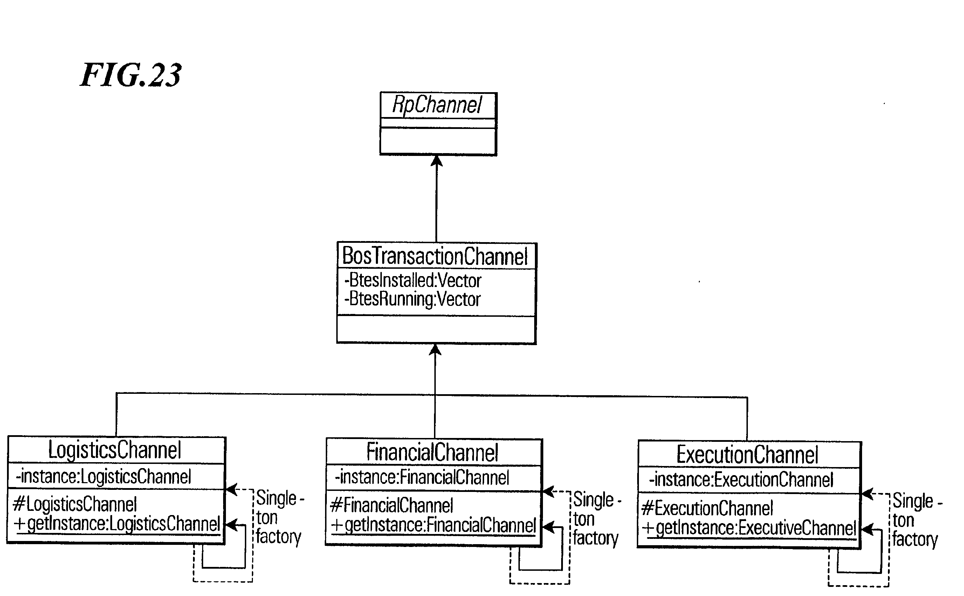

Figure 23 shows a UML diagram of the Channel Hierarchy

BOS Agents are execution objects that are created by the BOS Agency and then sent on certain Transaction Channels. An incoming request to the BOS Agency always has a matching or corresponding type of BOS Agent that is created to transport that request to the corresponding BTE. This BTE then picks up the Agent from the transaction channel and performs the necessary tasks on the request contained in the Agent.

Based on the incoming request type the BOS Agency needs to be able to decide what kind of Agent to create for this request.
Every BOS Agent needs to have three Boolean flags that indicate each time an agent has finished going through a certain transaction channel. These flags are bLChannelDone for completion of the Logistics Channel, bFChannelDone for completion of the Financials Channel, and bXChannelDone for completion of the execution channel.
The origin and destination attributes of a BOS Agent indicate where the original request came from and where the composed answer has to be sent to.
There are three different kinds of BOS Agents:
· W3OS Agents: These agents are created to handle or transport requests coming in from the Web Operation System (W3OS).
· System Agents: Certain scheduled timer events trigger the creation of System Agents. They are used to perform certain system tasks that can be perform in the background.
· BTE Agents: These agents are created to handle tasks that have been triggered during the execution of certain transaction in a BTE. This type of BOS Agent is used to implement escalation procedures.

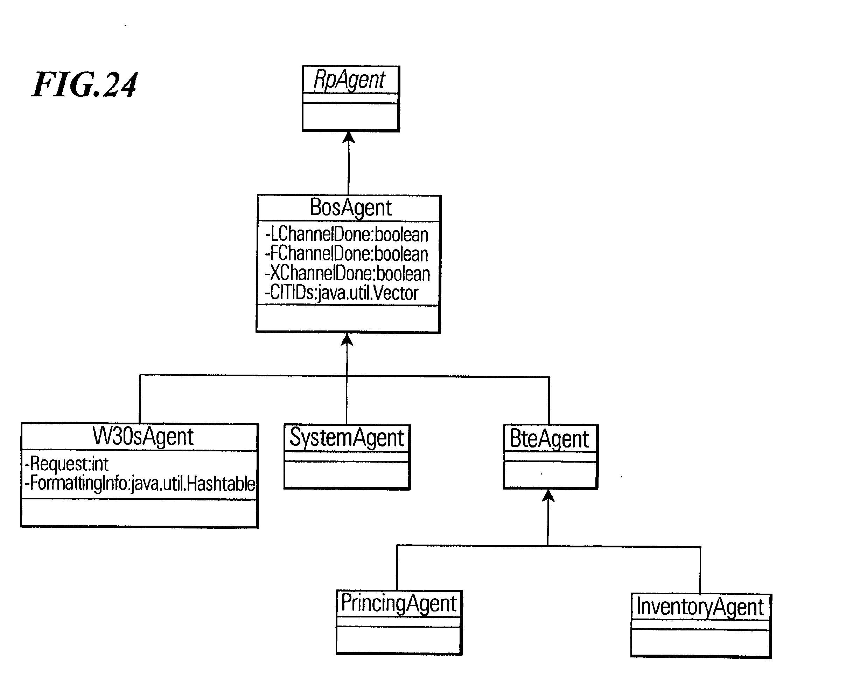

Figure 24 shows a UML diagram of the Agent Hierarchy.

Now the Business Transaction Engines shall be explained in more detail. The Business Transaction Engines (BTE) incorporate the actual business logic. Always together with a BTE and its functionality are certain types of BOS Agents that match its functionality. BTEs are the part of the system that are be able to be custom-made in order to incorporate all kinds of different functionalities needed for all the different types of business applications. Every time there is a new BTE developed with a new set of functionalities, then there will be a new type of BOS Agent that is mapped to the new BTE functions. A BTE subscribes to certain Transaction Channels and waits for BOS Agents that match. Once the contact has been established, the Agent start its perform method and invokes the functionality of the BTE to act on its data.

As described in the section on Transaction Channels, only those BTEs that have access to the Financials/Business Flow Database should be custom made. Preferably, there should not be any custom BTEs for accessing or even modifying any content data in the Content Database or any user related data in the Users/Dockings Database. Therefore, preferably, only BTEs are allowed, which are custom-made to subscribe to the Financial Transaction Channel, and not the Logistics or Execution Channels.

There are different types of BTEs. One can divide all BTE into at least two separate groups:
· System BTEs that are installed by default. These BTEs come with the base product and cannot be disabled, replaced, or taken out of the system. They are fundamentally needed for the system to function properly.
· Custom BTEs that can be plugged into the base system. They simply provide additional functionality, but can also be disabled or taken out without influencing the basic system in its functions.

Along with the grouping of System BTEs and Custom BTEs goes the distinction of BTE-access to the database. Since Custom BTEs later are to be custom developed and deployed by a number of different developers, it is desirable to restrict those BTEs from having access to vital system databases as the Content Database (Content Information Table (CIT), Content Table (CT), Master Catalog Table (MCT), and View Table (VT)) and the Users/Dockings Database (Users Table, Dockngs, Table).

On the other hand one should grant the Custom BTEs access to the Financial/Business Flow Database, otherwise the Custom BTE would not be able to make any decisions, because it does not have any information for reasoning. This distinction we make here is corroborated by the fact that we only want to allow Custom BTEs to subscribe to the Financial Transaction Channel, which has only access rights to connect to the Financial/Business Flow Database and no other database within the EIC. To sum it up, that means: Custom BTE can only subscribe to the Financial Transaction Channel and only have access to the Financial/Business Flow Database.

This means also, that Custom BTEs need to make use of some functions of the default System BTE, because they alone have access to content related and user related data. For example, a Custom BTE that needs to make some financial decisions on some products of a company must receive as an input some serial number information about the content items, which it needs to make decisions about.

One can divide all System BTEs into three groups:
1. System BTEs that subscribe to the Logistics Transaction Channel only;
2. System BTEs that subscribe to the Execution Transaction Channel only; and
3. System BTEs that subscribe to both the Logistics and the Execution Transaction Channel.

We have the following BTE in the mentioned categories:

| | |
|---|---|
| Category 1: | USER BTE, SERIAL NUMBER BTE |
| Category 2: | CONTENT BTE, VIEW BTE |
| Category 3: | VTOOLS BTE |

Examples of custom BTEs are:
INVENTORY BTE, PRICING BTE, ...

During a "normal" transaction processing done in the CDM we always have the following sequence of BTE actions: First in the Logistics Transaction Channel, the USER BTE gets all user information, most importantly the user's security settings. This information is used from here on throughout all BTE processing. Next still in the Logistics Transaction Channel, the SERIAL NUMBER BTE picks up all the content meta information. It usually will do a search for serial number ranges always taking into account the user's security setting. The SERIAL NUMBER BTE returns an initial number or Content Serial Numbers and their Content Information Table IDs. This information can now be used in all later steps of content processing by all the following BTE.

In the following steps, BTEs subscribing to the Financial Transaction Channel step in. Now they can do all their necessary functions on the content and they can also access all tables in the Financial/Business Flow Database in order to support their decisions and to pick up additional information or write information to the Financial/Business Flow Database.

After all the BTEs of the Financial Transaction Channel have finished their work and have packed all additionally needed information to the original user information and Content Serial Numbers, they forward this information to the BTE on the Execution Transaction Channel.

On the Execution Transaction Channel, the Content BTE goes through the set of Content Serial Numbers that have been passed along to it and then picks up the corresponding actual content from the Content Table within the Content Database. After that it passes all the information (user, content serial numbers, additional financial/business data, and the actual content) to the VIEW BTE. The BTE now looks at the available information and make decisions about the views to choose for this particular array of contents. Therefore it accesses the View Table, picks up the view information and then stacks all the content and their views into an individual custom page. Finally, the View BTE sends the PageData object to its destination.

Another BTE is the SerialNumber BTE. The SerialNumber BTE acts on the Logistics Channel and only accesses the Content Information Table in the Content Database.
The criteria that are important for selecting certain serial numbers by the BTE are basically some attributes within the content serial number (a certain age suitability range, ...) and also always the user's security settings. E.g. if a user's security level is 5, then only serial numbers with security settings of 5 or lower can be selected.

Another example of a BTE is a Pricing BTE. The following Pricing BTE is a very simple example of a typical Custom BTE. Basically any desired functionality can be implemented in BTE. The presently described Pricing BTE does price calculations. E.g. the price of a product increases automatically if any one of two conditions is true:
1. The number of sold items within the last 24 hours is lower than the sales ratio.
2. The inventory of that product drops below the inventory limit.
The price of the product decreases if any one of the two conditions is true:
1. The number of sold items is above the sales ratio
2. The inventory of the product was below the inventory limit and then has gone above the inventory limit.

Also the Pricing BTE subscribes to the Financial Channel and acts on additional inventory items and updates the inventory and pricing information in the Products table.

Preferably, a Database Module resides within the BOS and acts as the connector to all databases within the Enterprise Information Cluster (EIC).

Internal Interfaces (GATES) build an entry point for existing Business Management Systems like SAP or EDS to Business Operating System (BOS). They interface to legacy systems and make data transmission possible. The Internal Interfaces (GATES) enter the CDM also through the BOS GATE.

The External Interfaces and Dockings represent a way for 3rd Party applications to make use of the BOS. The External Interfaces (Dockings) also access the CDM through the BOS Gate. Sample Applications that could access the BOS are search engines, advertisement servers, or many others.

### The Communication Channels

All Communication Channels are located in the presentation tier (third tier). They are a means to interact with end users or present content to them. The system integrates all technologies available to access the BOS. Every Communication Channel accesses the BOS through its special In-Gate and on the other end receives data from its respective Out-Gate.

Each Communication Channel itself is responsible for maintaining session management and performing all those necessary tasks. Also each Communication Channel is by itself handles the proper formatting of content data received from the BOS. E.g. the Page Composer formats individual web pages for Internet browsers for the W³OS.

The Active Communication Channels only route content in one direction: from the Business Operating System to the end user. No real user interaction takes place. The Active Communication Channels are only a means of presenting data. Their main operational areas may be automated message broadcasting or advertisement.
In the following examples are given of Active Communication Channels:
· SMS-OS - A Short Message Service Operating System features messaging via cell phones and pagers.
· APM-OS - An Automatic Phone Messaging Operating System can automatically send out predefined and dynamically generated phone messages to a any-body registered with the system.
· Ad-OS - An Advertisement Operating System that can individually place custom advertisement to dedicated places using beamers, video projection or television screens.
· RTS-OS - A Running Text Operating System that manages ticker messages and running text displays for stock quotes or news.

Examples of Interactive Communication Channels that allow user interaction with the BOS are :
· W³OS - The Web Operating System (W³OS) is the main focus of Interactive Communications Technologies. It uses XML and the revolutionary above described One-Page-Web Technology to access everyone and be used by everyone via the Internet.
· PDA-OS - A Personal Data Management Operating System offers the integration of personal digital assistants and palm top computers.
· ITV-OS - An Interactive Television Operating System that will integrate interactive TV with the entire system.
· Mail-OS - A Mail Operating System that offers great reporting mechanisms, such as sending auto-generated emails that are put out by escalation procedures in the Business Operating System.
· Fax-OS - A Fax Operating System that also provides great reporting features and receiver mechanisms.
· Telex-OS - A Telex Operating System that is the gate to legacy Telex systems worldwide.
· I-OS - An Inventory Operating System that operates on the JINI architecture and can integrate home appliance devices like refrigerators.
· WC-OS - A Wearable-Computer Operating System that will feature integration of miniaturized wearable computer devices.

Now the Web Operating System will be described in more detail.
The W³OS preferably uses XML and the above described One-Page-Web Technology to access everyone and be used by everyone via the Internet.

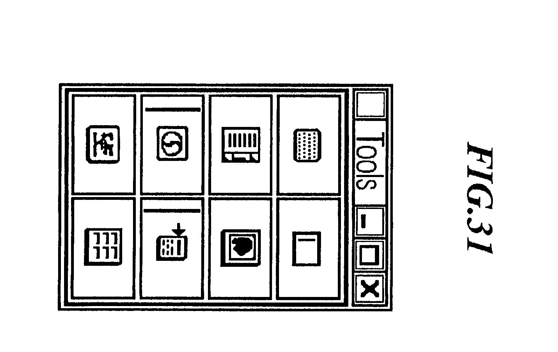

Figure 31 gives an overview of the W³OS.

The W³OS (Web (w³) Operating System) is a gate to the Internet and its in-put and output medium to Web browsers. Basing on current Internet technology with hypermedia elements and Web protocols, the W³OS employs them in a new way, following the concept of the One-Page-Web. The W³OS realizes the goal of a Web site without fixed pages - but only "one" virtual page that is created and assembled with new and changing content over and over again - by means of four basic modules within the W³OS subsystem:
· The Web server, which acts as an entry point to the system;
· The Web Security Interface (WSI), the system-internal buffer that shields the system from and to the outside (the Web server);
· The Request Dispatcher in conjunction with a W³OS In-Gate to the BOS;
· The Page Composer, which builds dynamic Web pages.

Naturally, the W³OS works in close interaction with the BOS. In the context of the three tier system, the W³OS builds up the representation layer and can be seen as the (end) user interface. The W³OS itself creates in combination with the BOS a request/response cycle. One of the main aspects of this cycle of data flow is that it is unidirectional, i.e. it can only be run with a predefined sequence of modules and stations that must be encountered, no matter what boundary conditions may appear. This one-way processing is strict, i.e. there is no stop in between, no skipping of steps, no bypasses. There is only one entry point and only one exit. This concept ensures that no malicious intruding is possible, be it in the middle of the chain of progress or from behind.
In addition to that, the WSI is responsible to thoroughly check any input at the very entry of the cycle. The Standby Module is also located in the Web Security Interface, as well as the Response Keeper. Both of them are explained below, along with the other modules.

The "first" Web interface of the system consists of a Web server. This can be any commercially available one that supports a Java Servlet engine. Another possibility is a specific Java Web server. The system should at least feature IIS or Apache as Web servers, and any Servlet engine as an adapter to the Java environment of the system. Alternatively, a system specific Java Web server may provide a maximum of security still at the Web server level because of unlimited control and configuration of the server. This integrated Web server means a stand-alone Web solution.

The Manager application (seamlessly integrated in the system) allows location transparent administration of the Web server; one can configure various security settings such as IP address filtering, denial of service counter measures, or logging functions, or performance settings.

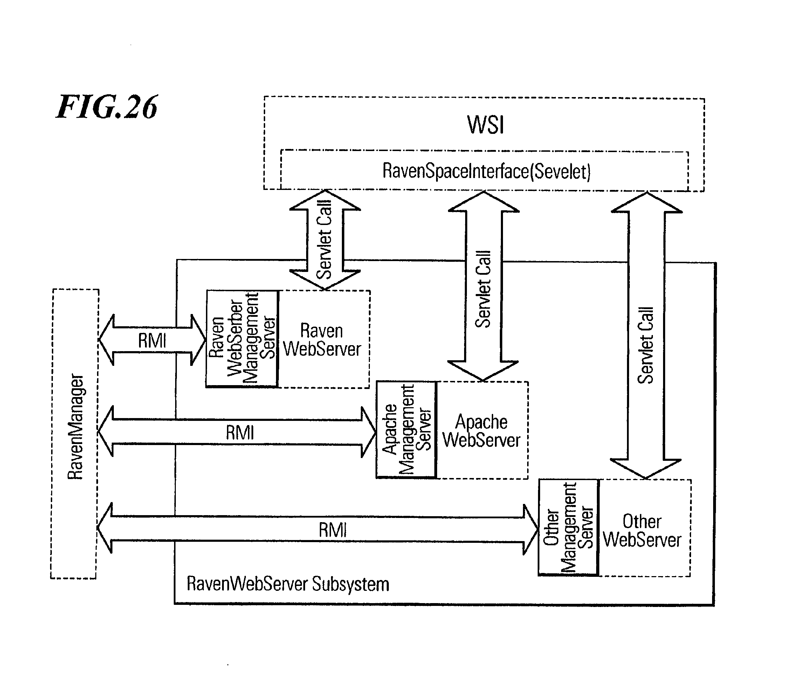

Figure 26 shows a schematic representation of the above described WebServer concept.

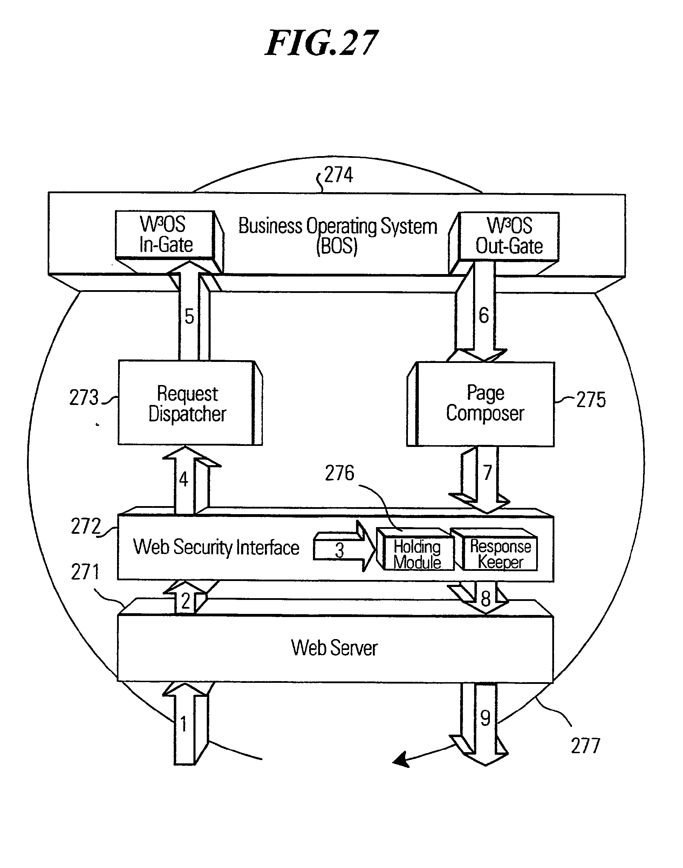

Figure 27 is a schematic representation of the concept of unidirectional data flow for security reasons. As can be seen, an external request (arrow 1) enters the system in Web server 271, whereupon a message (arrow 2) is passed to the security interface 272. On the one hand, the external request is put on hold (arrow 3) in a holding module 276, while on the other a message (arrow 4) is passed to a request dispatcher 273. The request dispatcher generates an internal request and sends it to the BOS (arrow 5), where it is processed as described above in detail. The internal response from the BOS is output (arrow 6) to a page composer 275, whereupon an external response is produced (arrows 7, 8, 9). As indicated by the large arrow 277, this is a one-way loop that does not provide any possibility of back-tracking or the like.

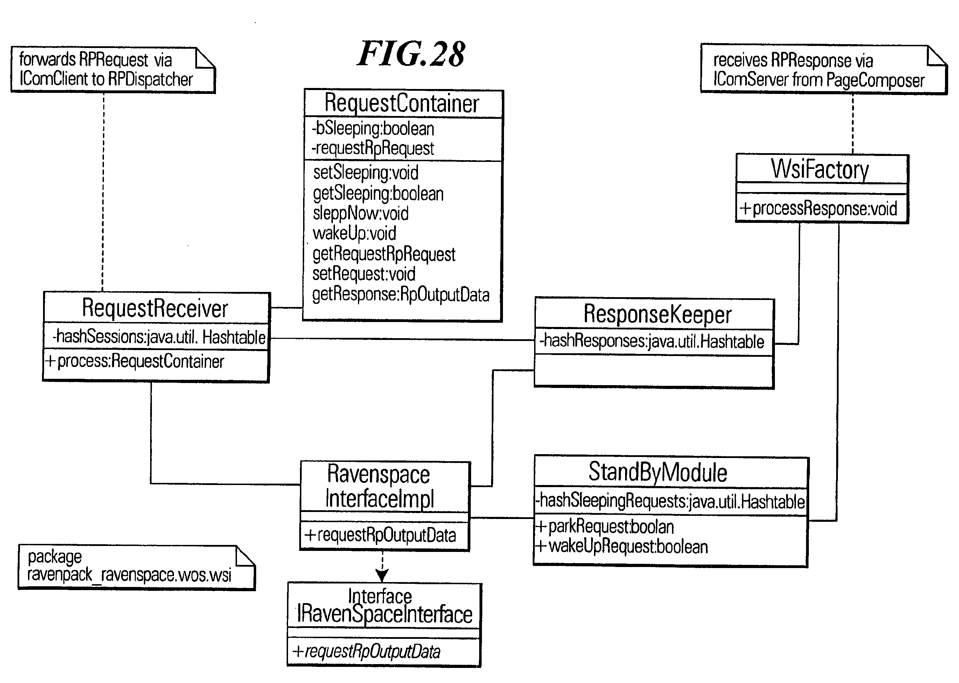

The Web Security Interface 272 is the "second" interface behind the Web Server 271 and Servlet and acts as a barrier between the inner modules of the system and the outside beginning with the Web server. The WSI is the actual interface to the system, which is also pointed out by the submodules and classes of WSI (see Fig. 28):
· RavenSpaceInterface. This class is the only connection of the WSI to the Web server and the Servlet. It is used for input an output.
· RequestReceiver. This second class of WSI acts as a central absorber for all requests entering the system. These requests can either be requests for completely new data or subsequent requests, i.e. requests that are automatically fired as a consequence of a previous response. An example for this are pictures embedded in a Web page: They cannot be sent to the user's browser along with the main HTML page but are requested by links that are embedded in that page. The browser can detect these links written in the page and will autonomously send a second request for each picture. The RequestReceiver can distinguish between requests for pages and requests for data to be embedded in already delivered pages. Furthermore, the RequestReceiver checks for every request and user if access to the system is granted or declined for a variety of reasons, from exceeding the maximum number of user sessions allowed to user session time outs.
· RequestContainer. This class contains either the initial request that must be suspended (so the connection to the system seems to be stalled from a user's point of view) or a subsequent request as described above a predefined response object must be found for.
· StandByModule. This class represents the "Holding Module" and is the main element to "break" the connection from user to system while a request is processed. The StandByModule suspends the execution thread of requests although the contents of the requests have been passed further into the system and are actually still "alive".
· ResponseKeeper. The ResponseKeeper contains all of those additional data that cannot be sent to the user's browser in parallel with the actual page; this applies e.g. to pictures or other elements that cannot be directly embedded within the HTML page. The ResponseKeeper is located in the WSI so subsequent requests are stopped back at this stage and are not required to be passed further into the system.

While the RequestReceiver passes requests that have been proved to be valid and acceptable on to the Request Dispatcher (RPDispatcher at the class level), there is another class called WSIFactory that receives responses that come back from the BOS and the Page Composer (see Fig. 28). The main idea behind the W³OS is realized here in the WSI: to "break off" the connection between user and system once a request is ready to be processed by The system. In contrast to current commercially available solutions that attempt achieve a dynamic generation of Web pages (without obtaining with the granularity and user-specificity of the system of the invention), the present system and the W³OS do not maintain the thread of each request "alive" while it is being executed and processed in the system and the response is generated. Rather, the logical connection between the user's browser and the inner modules of the system is disrupted. While conventional applications bear an inherent possibility of tracking the execution flow deep into the program and business logic, the system of the invention prohibits this by only simulating to the user (or to his browser) a constantly active and as-expected (yet idle) execution of the request. In fact, all important data of the request and the session data are passed on to the next module in a separate thread while the original request is kept in a suspended state in a neutral zone: the StandBy or Holding module, which has, located in the WSI, no connection to the core system.

After the request has been processed throughout the application logic and system modules, it will arrive in form of a response again back at the WSI. The WsiFactory is the entry gate for this second half of execution of a request. By means of the unique session ID that has been assigned to the initial request and its duplicate that has been sent throughout the core system parts, the WsiFactory can find the suspended initial request and "wake it up" again. At this point, the connection from the user to the system is "restored", and the response is transmitted to it. The initial request is activated as if the response was generated by itself; the RavenSpaceInterface returns the request back to the caller as if this was an immediate return.

Since the data source (the source for the responses) is totally decoupled from the interface that is visible to the Web server and the client browser, it is also not possible to directly link to resources. The usual way a browser receives objects that cannot be embedded in the HTML text file is that these files and elements are denoted by a reference in the HTML file, and the Web server can load the desired data from disk. Common Web browsers automatically form subsequent requests to an HTML page that query, step by step, all embedded and referenced elements.

As for the system of the invention, all application data are stored in the EIC (possibly on different computers), and the Web server has absolutely no access to any data. It is obvious that this is a crucial improvement in security since the Web server cannot act as a gate to hacking into application environments and their hard disks. But how can files and binary data be provided for subsequent requests? One possibility is to create separate system internal requests that do not query XML/HTML data but only the searched particular file or datum, but this would mean a massive amount of requests for only one element each. Rather than that, the WSI preferably solves this "problem" by temporarily storing these files and referenced data exclusively for the preceding HTML request at the WSI Response-Keeper.

There are two basic flows of events in the Web Security Interface that help to better explain the features of this module:
· Receiving and processing of requests for Web pages ("generic" requests)
· Receiving and processing of requests for files and other data, which are to be embedded into Web pages. These requests are automatically fired by Web browsers upon receipt of Web pages with references. ("media" requests)

No matter which of these two request types arrives at the RavenSpaceInterface (being passed by a calling Servlet), they are immediately forwarded to the RequestReceiver. This module, in turn, starts analysing the request. Every request features an identifier that describes the type of the request. For any request, first the session ID is checked.

This (external) session ID is an encrypted unique identifier for every request that contains the user name and the timestamp of the latest preceding request of that session.

The RequestReceiver holds a list of all currently logged in users and their sessions (a new session is spawned at every login and whenever the user "forks" browser sessions, i.e. opens new browser windows from existing ones). By means of the time stamp the RequestReceiver can determine whether the request is valid and may be accepted for this session of this particular user. For every user, there is an upper limit of concurrent sessions; the WSI takes care of that new logins and forks do not exceed this boundary. From this point of view, the WSI realized basic session management since it also automatically terminates session (i.e. does not accept following requests) when they are timed out.

### Generic Requests

If the RequestReceiver detects a login, logout, or other generic request, it creates a RequestContainer object that stores the initial request. At the same time this RequestContainer is returned to the RavenSpaceInterface, the contents of that request are read out and passed on to the communication interface of the WSI that will send this system-internal request to the Request Dispatcher (see 0). This latter flow of data is contained in a totally separate execution thread and is independent of the RequestContainer. RavenSpaceInterface automatically calls getResponse() on the returned RequestContainer, which causes the container to store itself in the StandByModule (under a specific key, a request ID) and then to enter a "suspend" mode.

When the Page Composer (see 0) has generated the HTML or XML output/response string, it sends the response as an RpResponse object back to the WSI. The WSIFactory accepts this message and spawns a new thread inside the WSI. The StandByModule is queried with the request ID key and can this way find the initial RequestContainer that has been stored with that key. The HTML or XML/XSL part of the response can be transferred immediately to the original request that is stored in the RequestContainer. After that, the RequestContainer's suspend state is terminated. The RequestContainer then runs in still the first thread that invoked RavenSpaceInterface; getResponse() of that RequestContainer can return to RavenSpaceInterface, that, in turn, reads out the initial request (which now contains the response string) and passes it back to the Servlet that initialized the request.

All other parts of the response that could not immediately be transmitted to the Request-Container/Request are data elements that cannot be embedded in the created page. The Page Composer wraps and stores all these data in specific objects, which can be extracted from the Response object and be stored in the ResponseKeeper module. The Responses are kept under a special key that matches the "link" that has been inserted in the HTML/XML page instead of the usual URL that points to a location on a hard disk. The requests that follow upon this HTML/XML response query the "media" data by means of the link/key of the ReponseKeeper.

### Media Requests

The flow of events and data for "media" requests is quite similar as for "generic" requests. These requests are also analysed by the RequestReceiver. When the validity of a request has been proved, the RequestReceiver detects that it is a media request and immediately asks the ResponseKeeper if there is a Response object for this request. When a positive answer is returned, a RequestContainer is created and the media request is assigned to it. Other than in the previous case, the content of the request is not read out and sent to the Dispatcher in a separate thread. Rather, the RequestContainer is simply returned to the RavenSpaceinterface.

The Interface, in turn, calls getResponse() on the RequestContainer as it always does. The RequestContainer sees that its Request is a media request and contacts the Response-Keeper to get the appropriate Response object. Since the RequestReceiver has already ensured that there is such a Response, the RequestContainer can select the Response and delete it from ReponseKeeper so it can't be requested a second time. The RequestContainer can immediately return the response to the Servlet without going to the StandBy-Module or being suspended.

From the perspective of the RavenSpaceInterface, there is no difference between generic and any other requests since all of them are put in RequestContainer that returns a response no matter what request is concerned.

Now the Request Dispatcher will be described in more detail. While a RequestContainer with a generic request is stored in the StandByModule and is being suspended, the initial request data are forwarded to the Request Dispatcher. This module acts as another buffer between interfaces and core system parts (BOS). In addition to that, the Dispatcher assigns an internal session identifier to the request. This way, a fully qualified session management can be made at the BOS.

The point is that user data are only available at the BOS since all databases may be accessed by the BOS and not by any other module. Because of this requirement, the W³OS needs a two-way session management: a simple session management at the WSI that decides which requests to accept or to reject (already described above), and a more detailed session management, which is realized inside the BOS.

Another security requirement of the system is it to avoid critical data to be visible by the end user, so the internal session ID is not passed to the user's browser with the response, and consequently is not available as a parameter of requests. Rather, the less crucial external session ID that only contains user name and a time stamp can be mapped to the internal session ID that is the key to all session data such as a request history, user security settings and so on. As already mentioned, all of this logic is implemented in the BOS.
The Request Dispatcher is connected to the W3OsInGate of the BOS. This way, the W³OS uses a normal gate of the BOS to send data to the core module of RavenSpace. The BOS and CDM will analyse the request in greater detail. User settings are specified based on the user information that come with the request. In addition to that, an Agent is created and started to carry out the request. A response page is composed, several BTEs are employed to collect the data that must be displayed on the page. For details, see the above description of the BOS.

Now the Page Composer will be described in more detail. Once the BOS and the ViewBTE have retrieved all data that has been requested by the original request (the ViewBTE has also selected the appropriate data for the Page Com-poser to be able to compose the actual page), an RpPageData object is created with all data necessary for the page. The request is sent in combination with the RpPageData to the Page Composer.
With all data that is contained in the RpPageData, the Page Composer is able to build the XML document tree. The actual data to be placed on the page is delivered in a separate sequential data structure. The Page Composer can match both data elements to form the page. In addition to that, the BOS might have selected style sheets and an XSL file that is fitting perfectly for the particular user.

An important benefit of the Page Composer is: it can compose any page with more or less "hints" and instructions given by the BOS. This means, the Page Composer does not decide what has to be displayed. This is the very task of the BOS. But the PageComposer can determine and fix how to display it. The degree of how much is proposed and prescribed by the BOS can vary. In the end, the Page Composer is able to put together anything that is provided by the BOS and automatically specify how to arrange and represent it even if not all details are given.
This way, the Page Composer can dynamically create pages and format them accordingly. Style sheets and XSL files are available at the Page Composer. The degree of independence of the Page Composer can be selected. In any case many settings can be done dynamically, from font colors depending on the user's settings, font size and style, background colors, sizes of paragraphs and pictures, and so on, as well as colors depending on the time of the day, and many more.

Whenever the Page Composer comes across some data that cannot be embedded in the XML file, it creates Response objects that will later be stored in the ResponseKeeper at WSI. At the same time, appropriate "links" that match the Response objects ID's are inserted in the XML document. Once all XML strings have been assembled and the actual data elements have been inserted as far as possible, the XML document is either translated to an HTML string using the appropriate XSL file, or both XML document and XSL file are stored on a newly created RpResponse object. Response objects with referenced elements are also put to that RpResponse before it is sent to the WSI to be passed to the original response and to store the Responses in the ResponseKeeper.

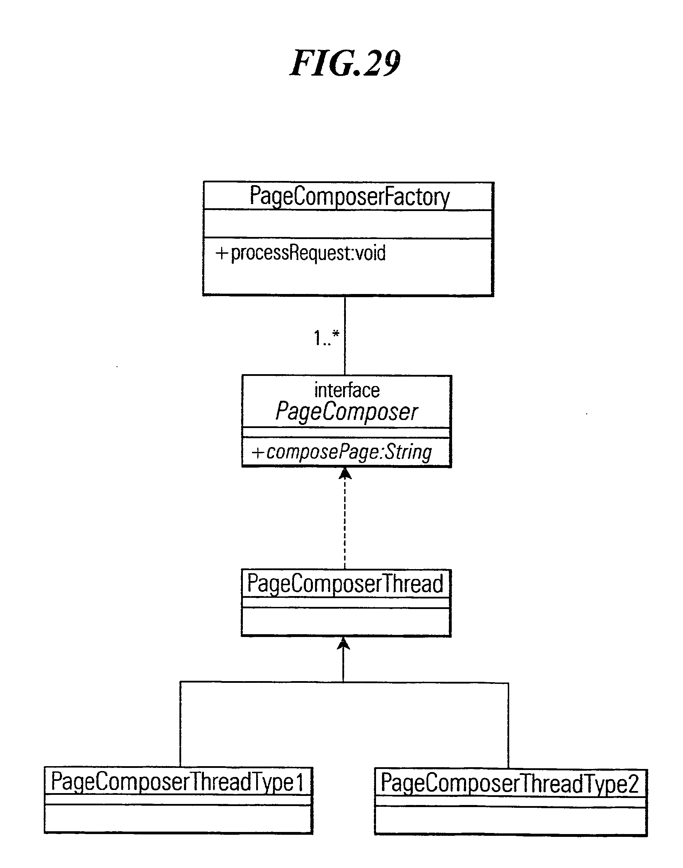

The Page Composer (PC) implements the thread concept, i.e. there is a factory object acting as a gate to the module. This factory creates new threads that carry out the execution of the functionality of that module. In the case of the PC, these are PageComposerThreads, see Fig. 29.

For communication between BOS (W3OsOutGate) and PC, there is the well-known Communication wrapper model. Consequently, there is a IRmiServer Implementation on PC side (not displayed in the figure) that finally forwards all data to the PageComposerFactory.

After the BOS/CDM has finished the retrieval of data and views, the RpRequest with the new RpPageData object can be passed on to the PC. The concrete threads are implementations of the PageComposer interface, which has only one method template: 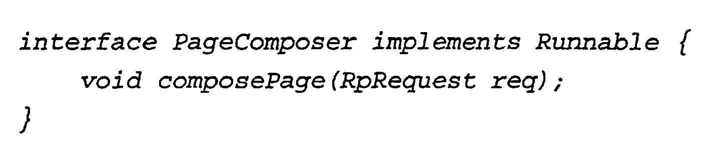 It is sufficient to introduce a single PageComposerThread class that implements this interface and its method.

In the View BTE, all representations for required content and all necessary XML strings have been collected. The View BTE handles the views and determines which XSL file to use for formattings (i.e. larger fonts for the elderly, bright colors for children,...). Finally, it arranges all retrieved XML substrings and all actual data to a sequence (the elements of it to be put into a vector).

This vector arrives at the PC. It is now an easy task for the PC to compose the page. First, create two pointers, one of them pointing to the first element of vecXmlStrings, the other one to the first element of vecPageData. Furthermore, we need an empty XML file (the "XML stack"). Then, the following algorithm is processed: Take the element of vecXmlStrings where the pointer is currently set to. Keep this XML string (in memory), and put in on a stack.

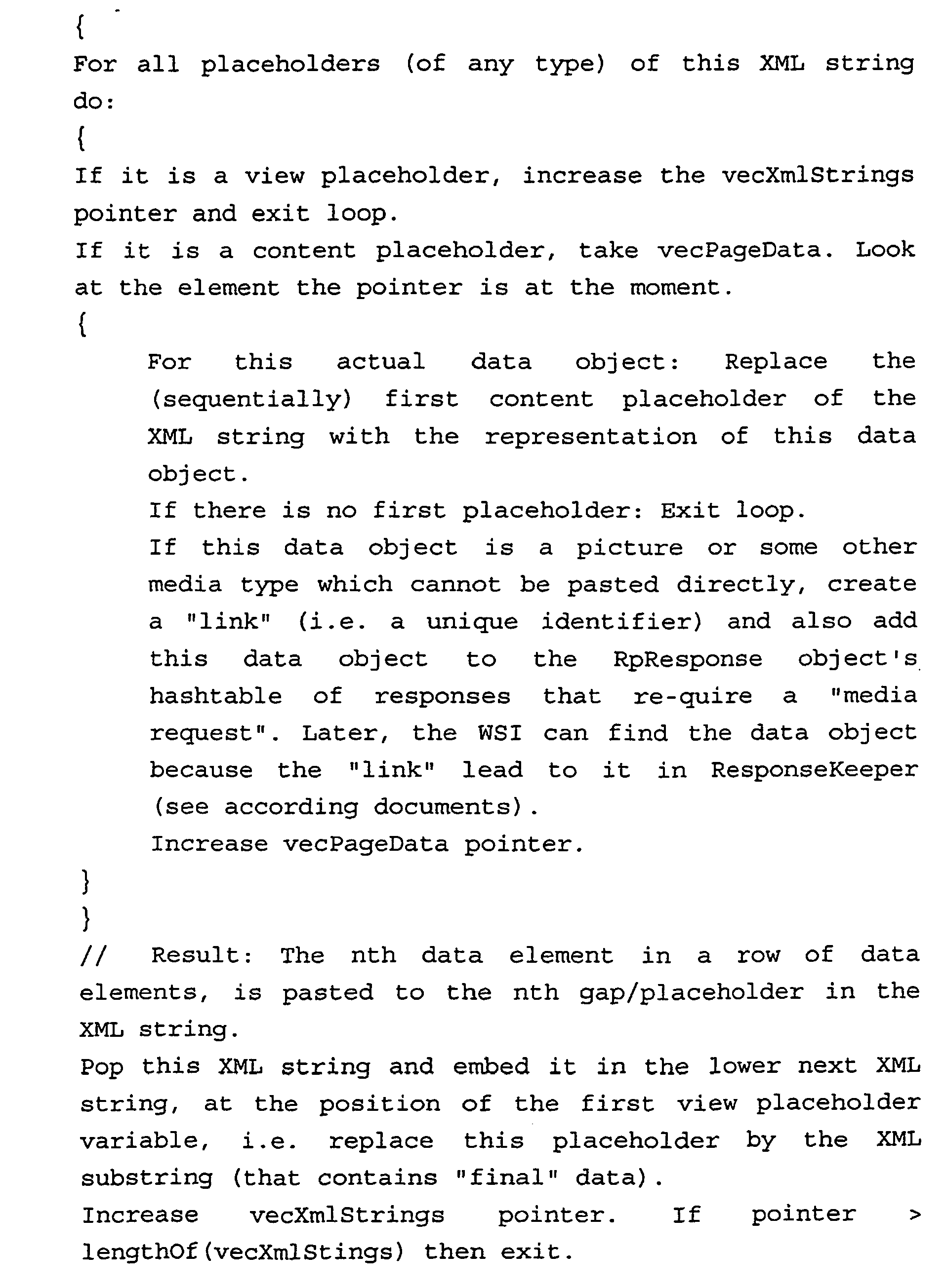

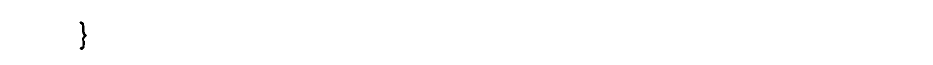

When there is no element left, the according view should be "finished", i.e. there should not be a placeholder that has not be replaced. In other words: both vecXmlStrings and vecPageData must be used completely. If this is not the case, this is an error that has to be handled.

It is obvious that the CDM has to arrange the elements in the XML strings vector to be used like a stack. Every new XML string opens a new level. Once we come to "end" views, i.e. XML strings that require basic data between their tags, we can take the elements of the page data vector one by one (we just have to remember where we stopped before in the sequence, so we need a process pointer).

So the PC simply has to nest and pile data elements and XML strings to finally form a full XML document. Depending on the concrete piece of data, the PC has to either insert it (text, buttons, even references) or to create an object for the RPResponse vector of follow-up responses (e.g. for picures, ..., -> handling media requests).

If e.g. a button will lead to another request if pressed, the appropriate request for content must be used. Generally, this information (link) will be provided by the CDM. The PC should encrypt this link (which is actually a substring of the SerialNumber, a list of several SerialNumbers, or a ViewID) before inserting it in the view/XML file.

Some additional information that must come with each subsequent request (in this case, every request after the login request) is the (external) sessionID (e.g. with *<input type=hidden name="sessionID" value="SAWAERONYBAD§$SDF§$BXC">*).

Once the process of composing the page in terms of XML strings and actual data is done and the RpResponse object has been created, the PC has to find out how to format the page (because the XML file only says how to arrange the data on the page, not how to display it). The RpPageData object features the fields iXslId and iSSId, i.e. one ID for the XSL file to use, one ID for the style sheet to use.

Then, the XML file that has been composed must be translated to HTML. We can do this by means of our XSL file and a translator.

The W³OS has the following characteristics and benefits:
· Absolute security because the logical connection from user to the system is disrupted while the request is being processed.
· The Web pages do not contain conventional references and links that provide an in-sight to system internal (disk) structures. This goal is reached because all data of a system is accessed only by the BOS that decides what is allowed to be responded on a request and to which user, respectively. The granularity of data allows highly dynamic web pages in every aspect possible.
· The system and the W³ OS do not need prefabricated HTML pages and structures because everything can be created on the fly dynamically and with maximum granularity. In the end, this means the system does not work with a variety of pages but with only one page (One-Page-Web).
· Style sheets and XSL files to format pages can be defined in any desired number and chosen dynamically.

Despite of all these innovative features, then system and the W³OS is still compatible with all popular browsers. On the other hand, future developments on this area are no hurdle because with XML the most recent technology has already been employed.

### Other Subsystems

The VisualTools represent a subsystem that handles
· Input of contents;
· Configuration and change of contents;
· Deletion of contents;
· Search for contents;
· Configuration of views for contents;
· Applying views and filling them with content.

All of these tasks can be done visually. The VTools work closely with the CDM since they operate on its databases. It is a requirement that only the CDM has access to the system's databases - therefore the VTools have to rely on CDM functionality for communication with the databases.

The VTools consists of three basic tools:
· VisualContentManager [VCM] (formerly "Input Tool", contains items 1-4 above)
· ViewComposer [VC] (item 5 above)
· PageComposer [PC] (item 6 above).

Hereby, VisualContentManager can be seen as an application to generally manage the content databases. Since the user records kept in the user databases are also contents, Visual-ContentManager can be used to administer user data as well.
The ViewComposer, on the other hand, allows arranging of contents on a page visually. Featuring drag-and-drop functionality just as the VisualContentManager, the ViewComposer can resize contents (or placeholder for contents) to group sets of data to form a "view", i.e. a template for that set of contents. The user can also design "default views" for contents without a specific "view". The ViewComposer writes to the databases used by the PageComposer.

The PageComposer takes kind of an exceptional position among the VTools. More or less, it actually belongs to the W³OS package. Since the PC is in fact highly interdependent with the VC, primarily, it can be seen as a part of the VTools from a logical point of view.

### Data Formats for VisualTools

The VisualTools are heavily interacting with contents and views. Therefore, the functionality of the VTools depends on the design of the ContentDatabase.

In the EIC there should at least be basically three system databases:
· the Content Database
· the Business/Financials Database
· the Users/Dockings Database
The VTools operate on tables of the ContentDatabase, covering:
· the static Content Master Catalogue tables (content types, content attributes, ...) ;
· the CIT (Content Information Table), containing the Serial Number and meta information such as the default view;
. the CT (Content Table), listing all the items (representations) of that content and references to views for that content;
· the ViewTable, containing views, XML files and XSL style sheets, references to other views, and view descriptions

### Example

A server defined by a certain Serial Number and ID (14532) in the ContentInformationTable (CIT) could be represented by a picture, a short description, and a price, as well as by a "Buy Now" button. The picture is a view of type (ViewID) 001, the short description has ViewID 008, the price tag is retrieved by the Financials/Logistic database before the selection of views is done. The "Buy Now" button is described by a specific SerialNumber which is listed in the Con-tent Information Table with ID (CITID) 13254.
The CIT would look like this:

| ID | SerNo. | DefaultView | Au thor | Creator ID | Created | Modif ierID | Modified |
|---|---|---|---|---|---|---|---|
| 14532 | 0001230.. | 231 | abc | 8932 | 5/1/00 | 8932 | 5/28/00 |
| 13254 | 000010.. | | xyz | 3624 | 11/23/99 | 3345 | 3/4/00 |

The CT would contain, among many others, the following rows:

| ID | CITID | View ID | Type | TextData | BinaryData | ExtraSec |
|---|---|---|---|---|---|---|
| 123 | 14532 | 0001 | RPPicture | | 10010... | 006 |
| | | | | | | |
| 124 | 14532 | 0008 | RPShDesc | Server A | | |
| | | | | | | |
| 125 | 14532 | 0231 | Assembly | | | |
| 456 | 13254 | 0025 | RPButton | Buy Now | | |

The CT will also contain columns for CreatorID, Created, ModifierID and Modified (as in the CIT shown above), but this has been omitted for lack of space in the present document.

The ViewTable has a number of static entries for basic types without references, like text, heading, short description, picture, button, and so on, and room for user-defined views (single aggregations and page views).

| ViewID | XMLString | Description |
|---|---|---|
| 00001 | <RPPicture></RPPicture> | RPPicture |
| | | |
| ... | | |
| 0008 | <RPShortDescription> </RPShortDescription> | RPShortdescription |
| ... | | |
| 0025 | <RPButton></RPButton> | RPButton |
| | | |
| ... | | |
| 0067 | <RPPriceTag></RPPriceTag> | RPPriceTag |
| | | |
| ... | | |
| 0231 | <LeftSmallNav ... >0001</LeftSmalINav><RightTop ...>0008</RightTop><RightBot> | Default View for Servers |
| ... | <Left>0067</Left><Right>13254:0025 </Right></RightBot> | |

Generally, requests for web pages can be of two different types:
a) Requests for views, i.e. "filled views": predefined pages with a specific set of contents; the XMLString must only contain references to content; references to views are only allowed if the content is prefetched by another BTE, as is the case for price tags, for example. Requests for views only contain a ViewID; appropriate con-tent is retrieved via content ID's (CITID) or pre-fetched and matched to a ViewID.
   A regular request for a view takes this route:
   1. Look up the ViewID
   2. See the XMLString. If there are references to serial numbers, look up the serial numbers and their assembly view(s) as described below. If there are references to views, see if there are already objects representing that type of view.
   3. Repeat step 2 and nested requests for views or SerialNumbers until all open references lead to basic view types like text, pictures, and so on.
b) Requests for a number of single contents and/or assemblies look like this (SerNo = part of a SerialNumber, VID = ViewID): 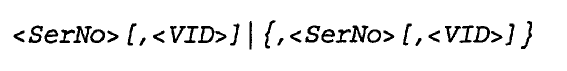 Such a request can therefore contain one or more SerialNumbers and ViewIDs if there is no DefaultView or a view other than the default should be used. If there is a request for a set of serial numbers, some subgroups of the SerialNumbers may form assemblies. In the end, a set of views/assemblies for the SerialNumbers is re-turned, and the CDM/BTE must find a page view that fits all contents.

A request for a SerialNumber is treated as follows:
1. Look up the SerialNumbers that match the substring passed with the request. When the appropriate entry in the ContentInformationTable is found, see if there is a DefaultView ID.
2. Use the ViewID passed with the SerialNumber, or, if available, the transmitted ViewID to look up (in the ContentTable) the actual content defined by the SerialNumber. If there is no ViewID or default ViewID, look for the first view entry in the ContentTable.
3. Any view for a SerialNumber stored in the ContentTable is found by means of the CITID (which matches the ID in the CIT), in combination with the ViewID. If this ViewID denotes a basic view type like a picture, look up the definition for that view in the ViewTable, extract the XML string, and pass both the XML string and the actual content item to the PageComposer.
4. If the selected view is rather an assembly or a user-defined view instead of a basic view type, look up the definition of the view in the ViewTable. Extract the XML string.
   o For all references to basic view types contained in the XML string, look up the appropriate entry (same ViewID) in the CT. Replace the placeholder (the reference to the view) by the XML string of that view (tags for the particular basic view type). Pass both to the PageComposer.
   o For all references to user-defined view types, look up the definition of that view in the ViewTable. Find actual contents required by the view as de-scribed at this item 4; first look in the original CT.
   o For all references to SerialNumbers or Content ID's, look up the appropriate entry in CIT or CT. If a ViewID is provided along with the reference (like 12323:0054), information can directly be fetched from the CT (otherwise the indirection over CIT must be taken) . Proceed as described from 3. on.
   o If there is an unresolved reference, i.e. a reference with no actual content with that particular ViewID, the data for that reference must have been fetched in previous steps inside the BOS/CDM. For example, the price tag of the above mentioned server sample is kept within the Financial/Logistics database. The actual price is retrieved from there already when the BOS Agent was in the Financial BOS Channel. The price data must provide an identifier that allows the View BTE to associate the data with a placeholder.

Finally, all XML sections and tags and the actual contents must be passed to the PageComposer. It is the task of the CDM (i.e., a BTE) to sort all XML code templates and the actual data. At this point, an appropriate XSL file can be chosen to fit the user's needs (e.g. large font for 60-yr old man, blue background colors in the morning, and so on). Also, the BTE must be arranged in the "right" order, i.e. in a way that the PageComposer can easily and recursively compose the end page (see the PageComposer chapter of this document for details).

Now the VisualContentManager (VCM) will be described.
The VisualContentManager is the main tool to administer the EIC databases. Its most important functionality is to import existing data to the data model. There are two different approaches to implement this application:
· Data import wizard
· Self-composing (classical) application with cut-and-paste and data configuration fields.

We shall concentrate on the second solution.

The VisualContentManager can import the most common files and data types into the system. Thus, the VCM is the tool to convert existing data to content as in terms of the present system of the invention. This procedure is necessary because the representation of data inside the system differs from "normal" ones. So in essence, the VCM is a user interface for writing to the system's main databases (ContentDB). It is not a task of the VisualContentManager to configure "views" for contents, i.e. to format data. This is in the field of duty of the View-Composer.

Secondly, the VCM offers the possibility to visually change certain attributes of any content. This is very similar to the import/input described above. The only difference is that the user does not open a file or create new data but retrieves the desired content from the ContentDatabase so it can be edited.

It is just a next step that the administrator is not only able change a content but also to delete it.
Besides, there is another functionality embedded in the edit/delete function: a search tool. Because some content is kind of encoded by its serial number, there must be a powerful means to retrieve any given data by certain keys, attributes, or "substrings" of that content.

So it is obvious that all components of the VCM operate on the SerialNumber. The input tool has to create a valid SerialNumber, and all tools configure the SerialNumber, change it, or look for it.

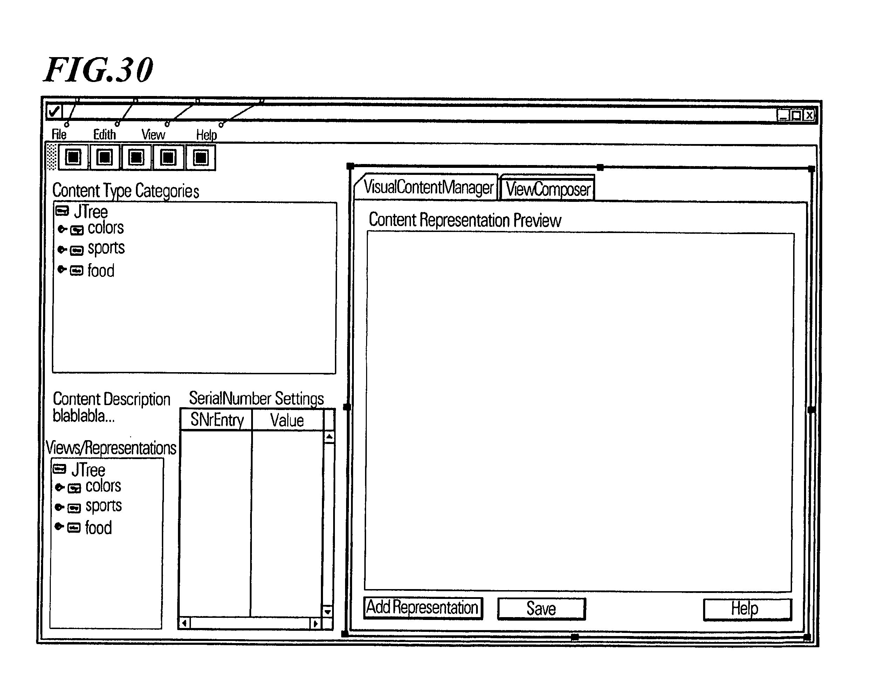

Fig. 30 shows an example of how a graphical user interface could look: on left hand, all contents available so far (in the ContentDB) are displayed in a tree. This is possible because the content master and sub types allow for a hierarchical classification of contents.

The user (in this case, the administrator) can insert a new content, choosing the super "folder" (content type) and inserting a new child element. Every content is a leaf in this content tree. Nodes and leaves can be renamed and deleted. With drag&drop functionality, contents can be drawn from one "subfolder" (or subtree) to another one. What is more interesting, though, is the search function.

When the user presses the "Search..." button, he is first presented a window where he can choose between various search criteria like content data type (image, text, heading...), content type name (category or subcategory names), security settings, country indicators, and any other attribute available.

After having chosen his search criteria, the user gets to a window with combo boxes for the actual content attributes. He must also be able to search for ranges and sets of data (e.g. all contents created between 1/1/1999 and 3/31/1999, all contents with country codes 21-24) as well as for any possible combinations (e.g. content created in 1998 with security level 3-5, generally valid from 12pm to 6pm on workdays, with any special settings for residents of Sweden). It might also be possible to extend the search on views for contents (e.g. content for people ranging 18-25 with view "Cool View 3" - see below for more in-formation about views).
To be able to present a list of possible attributes, the VCM must have a table of currently known attributes. Alternatively there is a free text search for the user; he can simply ask for a content with certain attributes and get a return, or none, or maybe the nearest fit.

All important attributes of a certain content that is configured at a time are listed in the "Details" table (above: "SerialNumber settings"). This catalogue bases on the serial number. However, its rows do not match the entries of the SerialNumber. Rather, they present a more user-friendly way of handling the codes and topics contained in the SerialNumber string. Instead of encoded numbers, the administrator can choose among descriptive items. Here is how the most important settings are handled:
· The Content Master Type and Content Subtypes are set implicitly configured with the Tree control on the left side. With simple drag&drop operations, the administrator can easily classify contents and configure the type.
· The Active/Inactive setting can be set to signalize that this content is available and "active" or not.
· The Security ID, consisting of Security Group and Security Level, is a 4-digit number. Their meaning should be more descriptive for the VCM, though. So there could also be an extra window that pops up on a click on the right side of the table in the "Security" row.
· The Age Suitability ID can be set with the help of an extra window popping up when the user clicks in the right corner (marked with "...") of the right cell of an entry in the "Details" table. This is the way also used by other tools (see VisualBasic editor, Together,...) to handle more complex entries.
· The Education Range setting is a 4-digit code describing upper and lower educational limits for the content.
· The Language ID is not displayed as a three-digit code (e.g. "002" for Spanish) but as text ("Spanish"). It ise possible to specify combinations of languages (maybe there is a text in English and Spanish
· Date/Time Beginning (12 digits), Date/Time Expiration (12 digits). For these settings, the user should be presented the dates in usual date formats (not 12 concatenated numbers).
· Country Availability Code. Similar to Language ID, the user can choose among a list of countries as well as combinations of countries. This might of course again require a separate window.
· Country Exclusion Code. See Country Availability Code.
· General Application Code describes what this item is mostly used for (very general). One could e.g. offer descriptions suitable for the scenarios, such as "Databases", "Information Technology" (for the servers), "Information", "Entertainment" (for the articles of the newspaper scenario), and so on. The user should be able to choose among descriptions like these.
· Historical Creation Date/Time (14 digits), Historical Expiration Date/Time (14 dig-its). Same as for Date/Time Beginning/End, but down to seconds.
· The Special Security Key is a seven digits access code to this content, and can be entered in the VCM via a password textbox.

All attributes and their meaning (ID's coding like 000=English, 001=German,... and so on) are obviously meta-data that might be stored in a meta-database (Content Master Catalogue, see above).

### Views/Representations

The elements that are stored in the CT are displayed in the Views/Representations tree. The user can select one entry (leave) of Views/Representations, and this view is displayed in on the right side, on the VCM tab pane.
The user can also enter new views for this content. Adding/importing content can be done
o By means of the toolbox for the VCM (Figure 31). This toolbox is not displayed in the above screenshot; however, it should be shown whenever the user selects the VCM tab.
o With a file dialog box that inserts e.g. a picture in the VCM pane.
o With cut & paste functionality, maybe in combination with the toolbox. E.g. The user can choose text box and then paste some text to it.

With the help of the toolbox for the VCM, the administrator can easily create buttons, text fields, selection boxes, radio buttons, paragraphs, headings, pictures and tables. All of them can be seen as pieces of context. Other kinds of content might be created and loaded via the file dialog box. Whatever the user adds or imports, the VCM pane offers the possibility to edit it within certain limits.

The "Add Representation" button adds the specific representation of this content that is currently shown on the VCM pane, to the View/Representations tree. In parallel, the representation is stored in the ContentTable. The appropriate ViewID (this is a basic view type!) is configured and set on the fly.

Similar is "Save". The only difference is that there is no new entry to the Views/Representations tree, but the currently selected entry is updated (also in the CT!).

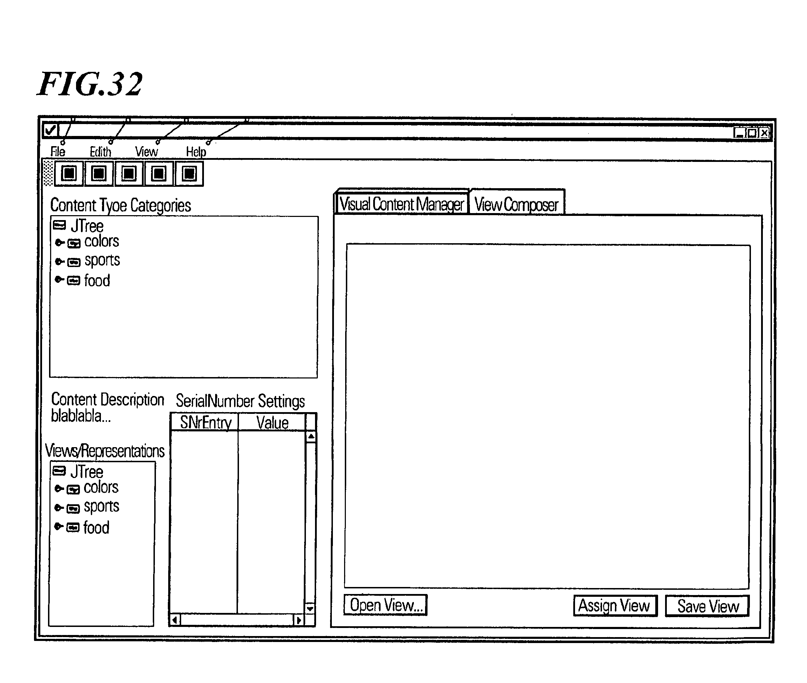

The ViewComposer (see Fig. 32) is the tool to configure "views" for content. As such, the VC creates templates for pages that are requested by the W3OS. The views are analyzed and processed by the PageComposer (PC) so an actual, dynamic web page can be generated.

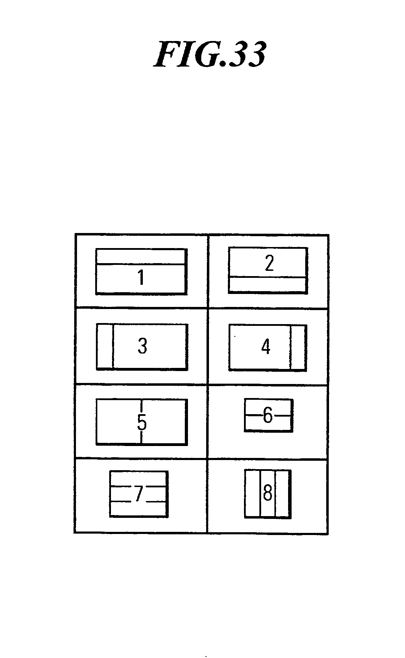

Views can be filled or empty. The VC can be used to create both, though. Basically, it uses the frames depicted in Figure 33.

These views can be realized by means of DTD's, XML files and XSL files. One may have the following structures:
1. One DTD file for View No 1,2,6
2. One DTD file for View No 3,4,5
3. One DTD file for View No 7
4. One DTD file for View No 8
5. An empty XML file for each of the above views, with just a tag definition (tags will correspond to priority numbers as will be passed by CDM to PC in RPPageData)
6. XSL file for each of the above views as can be represented in HTML 4.0

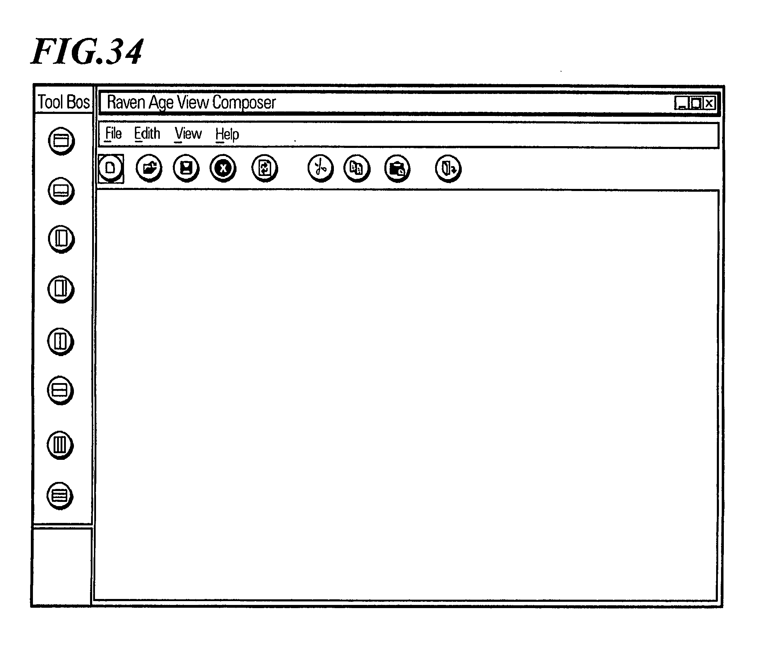

The user can create empty views with the help of the frames available in the frames tool-box. This is the same toolbox as shown in the previous version of the VC (Figure 34). Like the toolbox for VCM, the frames toolbox is not shown in the screen example for the combined VCM/VC tool but should be displayed when the user selects the VC tab.

Empty views are generated by repeatedly selecting a frame from the toolbox and inserting it into existing frames (recursively). Empty views are always page views, i.e. views that represent a template for an entire web page. They can only be saved (button "Save") in the ViewTable but not be assigned to content.

The VC also allows creating views that are directly linked to content or other views. The user begins just as with empty views, i.e. creating a template. But now, the initial frame for the view need not be an entire web page but can be smaller, so as to create an assembly, i.e. an aggregation of views. When the frame for the view has been created (using the toolbox), the user can select content and representations/views of that content. "End" elements are shown in the Views/Representations tree; the user can select one entry and "paste" it into one frame on the VC pane.
There is always a "starting point" content, i.e. the user selects some specific content and then begins to create a view for it. He can paste views/representations of that content as well as any other views/representations of other views. Similarly, the user might be able to press the right mouse button in a particular frame on the VC pane and be presented a list of all available views. This way, the user can create nested views, and views that contain "external" references, i.e. references to views of other content.

Just straightforward, filled page views that are not related to some specific content contain only external references. There are two ways of storing views:
o Storage in the ViewTable. It "Save View" is pressed, the current view is stored only in the ViewTable. All references to nested views are stored relatively, all references to contents or concrete views/representations are stored with the ContentID and the ViewID of the CT (i.e., stored as external, absolute links).
o Storage with a specific content. In this case, the view would be stored in the CT. The question is which content this view belongs to: To the CT of the "starting con-tent", or the currently shown content and its View/Representations view? The starting point would be logical because the user might have begun the creation with adding concrete views/representations of the first content. Any content select after the initial content would have led to absolute references /external links. So, we might ask the user (after pressing "Assign View") if he wants to assign the view to the current content or to the first content. According to that, either the first references become absolute, or the latest.

In any case, all these selections of contents, retrieval of views, storage of views,... require communication with the database (over the BOS/CDM). The format of these requests and message will be described soon.

The user can not only create new views with the VC but also open an existing view and change its references, which results in a new view. This new view can be assigned to the content and will be listed in the Views/Representations tree (i.e. be stored in the CT of that content). Similarly, the user can open an existing view and assign it without changes to the content.

Still another scenario is that when the user can open a specific content, he is presented the list/tree of views/representations. He selects one entry and the view is shown on the VC pane. He can now select another content and sees its views/representations tree (= CT). He can assign the view to that CT; the references would be updated to point to the local entries of CT. Consequentially, the user must be warned if there are missing views/representations that would be referred to.

In the following, a more detailed description of the functionalities of the Visual-Tools is given. Starting from some use cases that cover the most important scenarios of the VTools, we can analyze the tasks of the VTools and finally define the data model.

### Use Cases

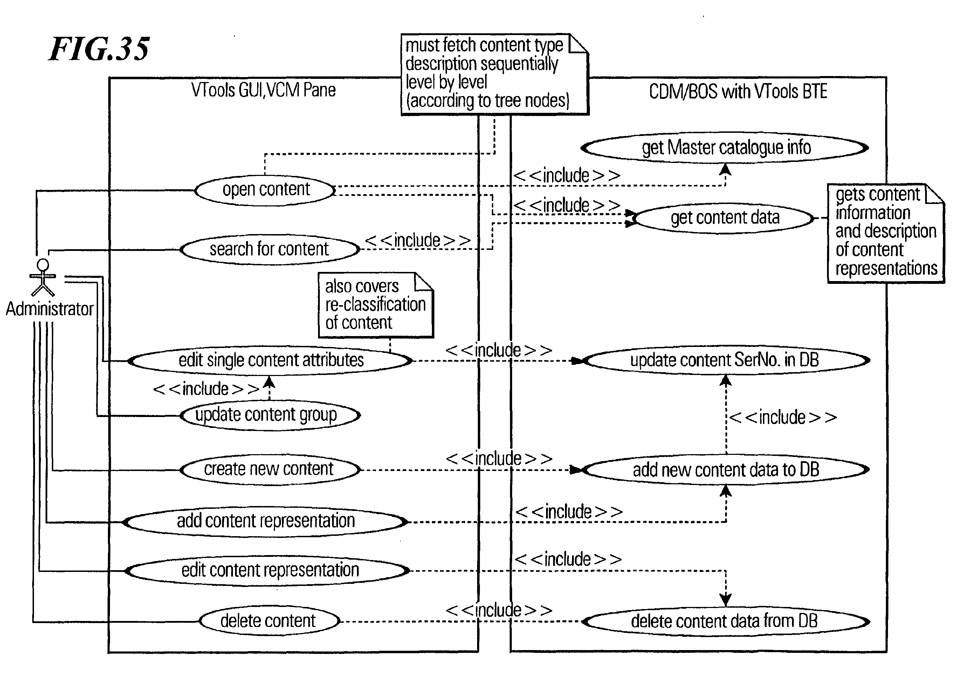

Figure 35 schematically shows use cases for VCM. One can identify the following use cases for the VisualContentManager. Most use cases consist of some action on the GUI (graphical user interface) side and some complementary on the side of BOS/CDM. As we will later see, one needs a VTools BTE in the BOS.
· Open Content. This use case is applied when the Administrator browses the content types tree of the VCM/VC GUI. The Administrator queries several content master and sub types and eventually gets to a leaf representing an actual content object. So the Open Content use case consists of two sub cases:
   o Browsing content in the content type tree. For every new tree level opened, the master catalogue information about that level must be fetched. Whenever some portion of the master catalogue is available for the VTools GUI it is kept in memory so subsequent tasks of the GUI can handle both descriptions of master catalogue entries and the codes themselves. The point here is that the VTools GUI must present the user readable descriptions of content and content attributes. On the other hand, content attributes are stored encoded in the content database. The content master catalogue, which is also kept in the content database, maps serial number codes to descriptions.
   o Opening actual content. In this case, the VTools BTE must retrieve all infor-mation from CT and CIT, i.e. the serial number, the default ViewID, and descriptions of the views must be transferred to the VTools GUI.
· Search for content. A very special use case treats the search for content. Since the serial number and all attributes of content allow a very specific and detailed search, this tool is very powerful. Because of the complexity of the search functionality, it is separated from the VCM pane and works in different windows. (see below)
· Edit single content attributes. The administrator must be able to edit several content attributes. After having pressed "Save", the settings are encoded with help of the parts of the content catalogue that is available to the system. So the VCM up-dates the serial number. Then these new data are transferred to the CDM, and the CT is updated accordingly.
· Update content group. This is the main use case for the military/security scenario. The administrator can select a group of content by providing a subset of content keys. The VCM then must generate a message to the CDM to change the attributes of all en-tries in the CT accordingly.
· Create new content. The administrator can (by means of the VCM toolbox) create new content. In this case, the VCM must encode the settings as to create a new serial number. In general, the content type of the new serial number can base on some existing (and available) content type codes. At the CDM, new records for the CT as well as for the Content SN Description Table must be generated. A new content ID must be generated, too.
· Add content representation. When the administrator adds a new representation for a specific content, the VTools must generate a message that passes the actual data to the CDM. There, the representation is stored in the CIT. If it is the first representation, is must be set as the DefaultView in the CT.
· Edit content representation. The Administrator can select a view/representation from the list/tree in the lower left corner of the VTools GUI. In VCM mode, the representation is displayed on the VCM pane. The user can change the item or replace it by another one. When the Administrator presses "Add representation" again, he is asked if he really wants to replace the old view/representation. If so, the VTools GUI adjusts settings if necessary (View ID & type) and replaces the view/representation entry. If the Admin presses the "Delete" button, the representations currently shown is deleted from the list and the View Table in the database at EIC.
· Delete content. The VC offers the possibility to delete selected contents. Maybe this functionality can also be combined with the update content group scenario in terms of "deletion" as a very special update. But nonetheless, the Administrator can at least "load" a content and choose to delete it. Then, that particular content is deleted from the CT, and at the same time, also all entries of its representations in the CIT are deleted. If there are views (assemblies) associated with only that content, they are removed from the ViewTable, too.

### Use cases for VC

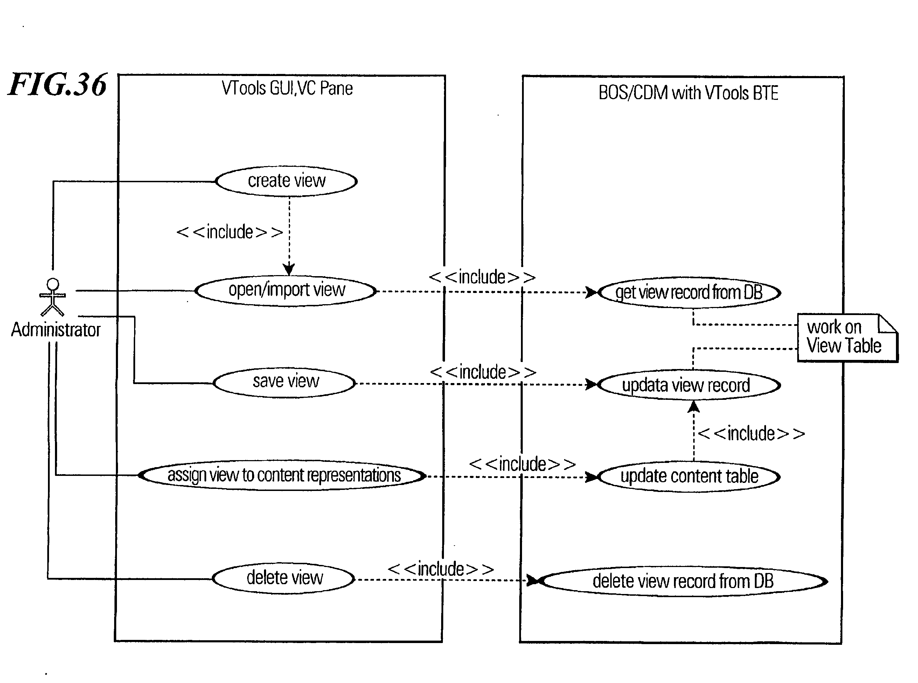

Figure 36 schematically shows use cases for VC. The use cases for the ViewComposer also consist basically of some action on the GUI and, additionally, a flow of events on the BOS/CDM. The VC could use the VTools BTE for its purposes, too. The Administrator is again the only actor involved.
· Create view. With the VC, the Administrator can create a new view. The VC offers a set of frames that can be nested. This way, the Administrator can set up complex views recursively.
· Open/import view. During the process of creating a new view, views that already exist and that are stored in the View Table can be opened and inserted in a frame (i.e. to be nested into another view). The Administrator can press "Open view" to start a view browser shows all views that are available in the ViewTable. At the VTools BTE, the view descriptions must be queried from the ViewTable to display them in the browser window. There must be messages from the VTools GUI to the BTE to ask for the descriptions, and messages back carrying them. If a view is re-quested to be opened, its record must be fetched and sent back to the VTools GUI.
· Save view. When the Administrator clicks on "Save view", the currently shown view is "encoded" as to be saved in the ViewTable, i.e. the references to other views are collected and prepared to be stored in the XMLString field. Description and XSL string have to be sent to the database; if there is already an entry for that view in the ViewTable, the VTools BTE must update it.
· Assign view to content representations. When the Administrator has changed a view or created a new one, this view can not only be saved in the view table but also as a representation or default view of a content. In this case, the Administrator can press "Assign View", and a new entry is added in the CT of the Content that is currently shown in the content type tree and the views/representations tree at the bottom. At the side of the VTools BTE, this means that there is a new record for a new view/representation of that content. Any links or references in the view must be adapted to fit to the CT.
· Delete view. The Administrator can delete a particular view when it is shown in the VC pane. In this case, the view would be removed from the ViewTable, but there is a error message displayed for the Administrator if he tries to delete a view that is referenced by other views.

To carry out the use cases mentioned above, additional data structures are used to integrate the VTools into the system environment.

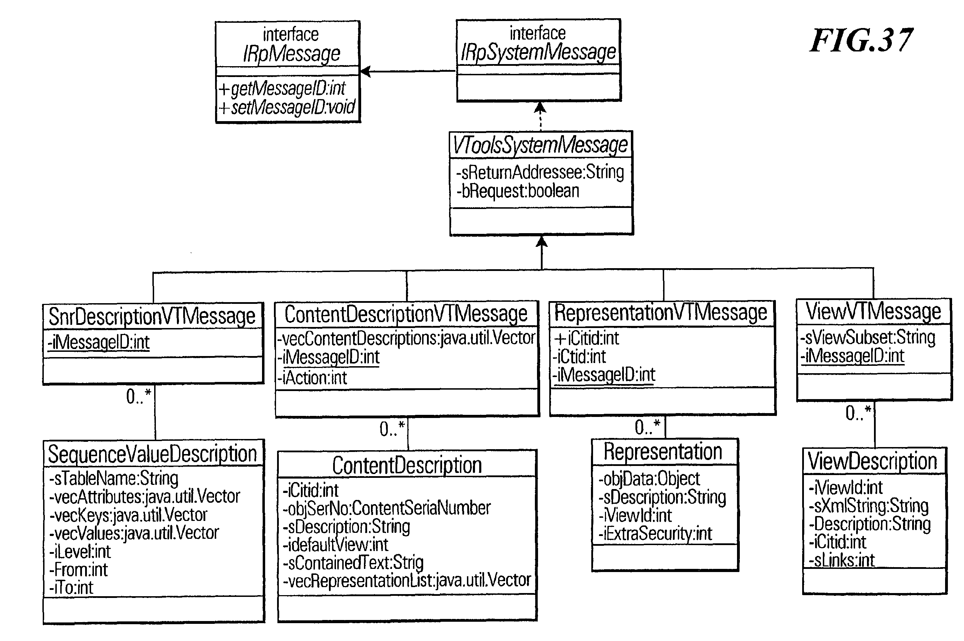

For the VTools to communicate with the BOS/CDM, an implementation of RpSystemMessage: VtoolsSystemMessage is introduced, see Fig. 37.

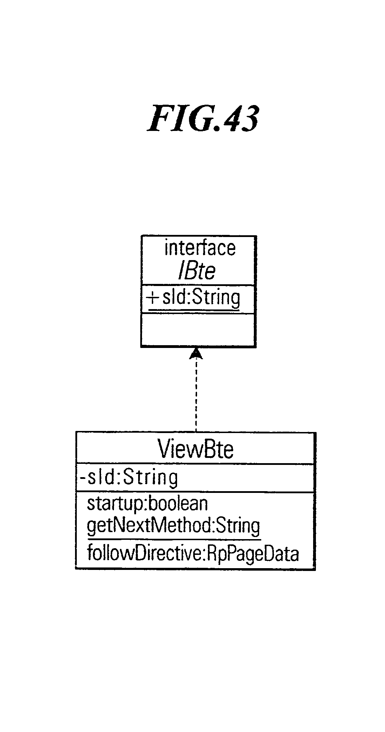

The messages that are used and required by the VTools are all child elements of IRpSys-temMessage. Since the VTools communicate directly with the BOS/CDM, there are no other IRpMessages that deal with some data from or for the VTools. Common attributes of VToolsSystemMessages are:
· objReturnAddressee: either IComServer - the VToolsInterface instance - or the initial sender (some class of VTools GUI). If it is the IComServer (as displayed in Figure 43), the VToolsInterface must know the original sender, otherwise we need an additional field that contains the "address" of this initial sender (either in form of some ID or the actual class name).
· bRequest indicates if this is a request to the BOS or some answer. "true" means this is some message to the BOS/VTools BTE, "false" means if it is a message back from there to the VTools GUI elements. We might have to think about if this is enough to distinguish different VToolsSystemMessages.
· nMessageID. This is an unambiguous identifier for the "request type" as required by the BOS registration authority to find out which BosAgent this message must invoke. The agency method getAgentNameForRequestType(int iRequestType) needs this ID..

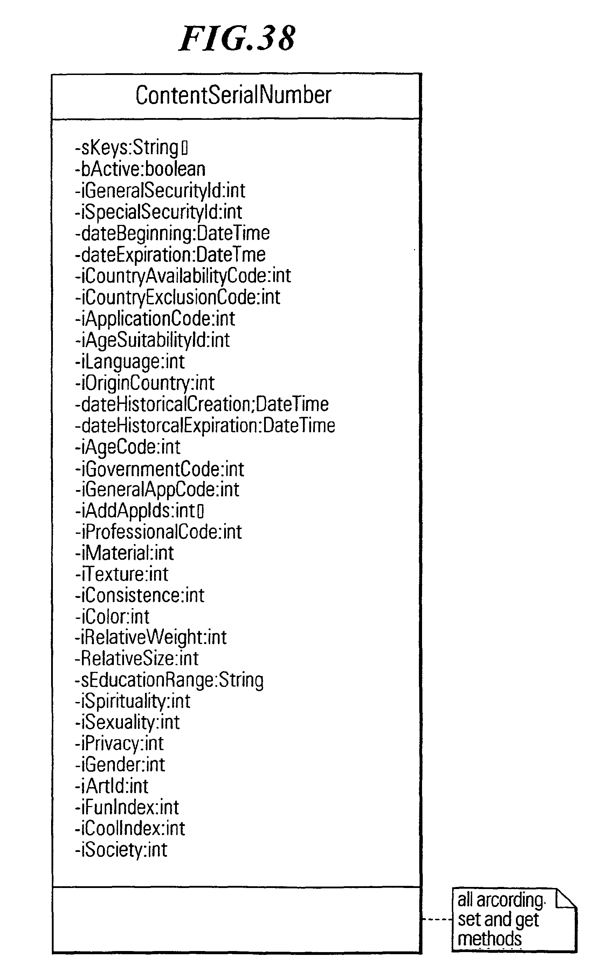

VToolsSystemMessages can be classified into four basic groups that correspond directly to the data tables used. This is because, if we summarize the tasks described in the use cases, we can identify the following principal data flows:
· Requests for serial number descriptions (from the ContentMasterTable). Are SnrDe-scriptionVTMessages. There might be several serial numbers requested. These re-quests are needed to successively build up the content type tree. Beside of that, the VTools GUI must know all "Additional Group" Serial Numbers and their meanings. Because of this, it seems reasonable that the VTools should fetch all these tables and information at startup time because the data is needed all the time.
· Responses for these requests. They may contain a (sub)set of serial numbers and their description. The subset covers a whole segment in the tree of serial numbers. The VTools GUIs need both the serial number key and the value (the description) because once a new content has been created or some content attributes have been altered, the VTools should not send back (to the BOS/CDM and finally the da-tabases) descriptive text but only the changed serial number itself (in ContentDe-scription object). The View BTE (or Serial Number BTE?) must create a SnrDescrip-tion object to be assigned to the SnrDescriptionVTMessage.
· Requests for content descriptions (i.e. content information and data about the representations) are sent to the BOS when the VCM wants to display an actual content. The ContentDescriptionVTMessage contains the serial number of the content to be returned (the number is known because it was fetched before with an SnrDescrip-tionVTMessage).
· Responses for these requests contain a non-null ContentDescription object. In essence, this return object contains the attributes of the CT record for the specific content. Beside of that data, there is a vector with all descriptions of representa-tions for that content (not the data of representations themselves!). The Content-Description object contains the serial number in form of a ContentSerialNumber object (see Figure 38).
. On the other hand, ContentDescriptionVTMessages with ContentDescription objects can also be used to update or save content.
· When a search for contents is done, we must find several contents that fit specific search criteria. The encoded representations of these search criteria are created still at the VCM (this can be done since the VCM has to have a list of all serial number substrings and their meanings, see below). So the VCM encodes all the search criteria and forms a serial number that matches them. Additionally, it can provide a "sContainedText" string that allows to do a full-text search, i.e. to search for some expression throughout the entire database.
· If the administrator wants to see a specific representation of a content, the VTools GUI fires a RepresentationVTMessage that requests that representation. Consequently, it carries a CITID and the ID of the CT so it can find the required representation.
· The response to a RepresentationVTMessage contains a Representation object, which in turn contains the actual data.
· Vice versa, the VTools GUI itself can send such a Representation (encapsulated by a RepresentationVTMessage) filled with some newly created element that must be stored in the database.
· The fourth type of VToolsSystemMessage is ViewVTMessage. These messages' task is to transport information about views. These information can be
   o Short descriptions (names) of views. When, for example, the administrator wants to open a view and starts the view browser, the VTools GUI must know about all views available. They would send a ViewVTMessage to the VTools BTE to return a list of all views.

Short descriptions are ViewDescription objects, but their sXmlString mem-ber variable is empty (null). As described above, these ViewVTMessages are requests for descriptions of views. The return ViewVTMessage contains a vector of ViewDescriptions.
o Full view information. Once the admin wants to open a specific view (selecting it in the view browser), the VTools GUI creates a ViewVTMessage request with the (short) ViewDecription for that view. The BOS/CDM/VToolsBTE responses with the appropriate (full) ViewDescription, i.e. including the XML string. NOTE: If this becomes to complicated, and the XML strings are very small anyway, an alternative could be to go with a full ViewDescription already returned when opening the view browser.
   · When the administrator has created a new view with VC and pressed the "Assign view" button, that view must be stored in the view table. First, the VTools GUI must resolve all links in the view XML string (also "external" ones). Then the description is stored in the GUI-internal list of views (this way, one can store the entire bunch of views as late as the VTools are shut down, before that, one only works on local data). Third, the GUI sends a ViewVTMessage with a (full) ViewDescription to the VTools BTE to have the view written to the ViewTable. [NOTE: the VTools GUI is responsible for creating new View Ids for user-defined views.] Fourth, the VTools BTE also has to store the data of the view in the CT. For that purpose, the CITID and additional links are part of the ViewDescription object. If there are no "external" links (links to representations of other contents), the slinks string is empty.
   · When a view should be saved without being assigned to a content (as a representation), it is either an empty view or a filled view with references to contents (i.e. their default view or some selected representation). In both cases, if the admin presses "Save view", the VTools GUI produces a ViewVTMessage with a ViewDesription with empty nCitid and empty sLinks. The VTools GUI has created a new unique View ID for the new view.

### VTools & BOS/CDM Interfaces

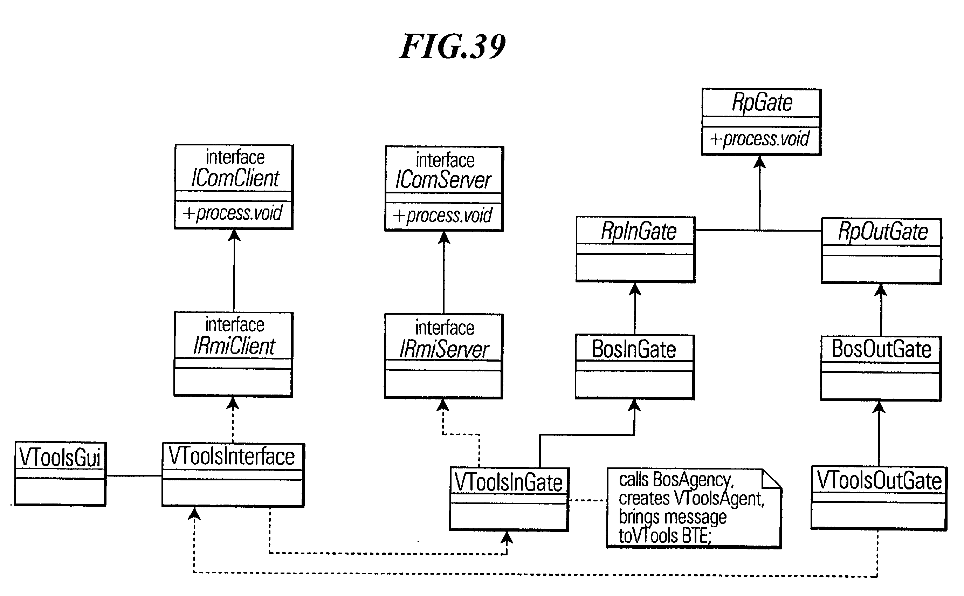

How are the VToolsSystemMessages passed from VTools GUI classes to BOS/CDM (and finally the BTE) and vice versa? Since the two components could be separated, or at least run in different Java Virtual Machines, they have to communicate via RMI or other remote procedure call implementations. We can use the communication wrapper principle introduce for intra-W3OS communication. Adapted to the VTools component and the BOS/CDM including the Gate structure it looks like shown in Fig. 39. On the left of Figure 39 one can imagine the VTools objects and classes. If they want to send some VToolsSystemMessage to the BOS, they must contact the VToolsInterface, which is the IComClient implementation of the VTools component. But at the same time, the VToolsInterface is also an IComServer for incoming VToolsSystemMessages (not shown in diagram). The class that wants to send its VToolsSystemMessage to the BOS calls VToolsIn-terface.process(theVToolsSystemMessage).

In the namespace of BOS, an instance of IComServer is registered that is exclusively implemented for VTools communication tasks. This is the VToolsInGate, which extends BosIn-Gate and implements IRmiServer (if RMI is the communication technique). The (singleton) instance of VToolsInGate (resp. its registration key) is known to the VToolsInterface; so it can get in contact with the VToolsInGate.

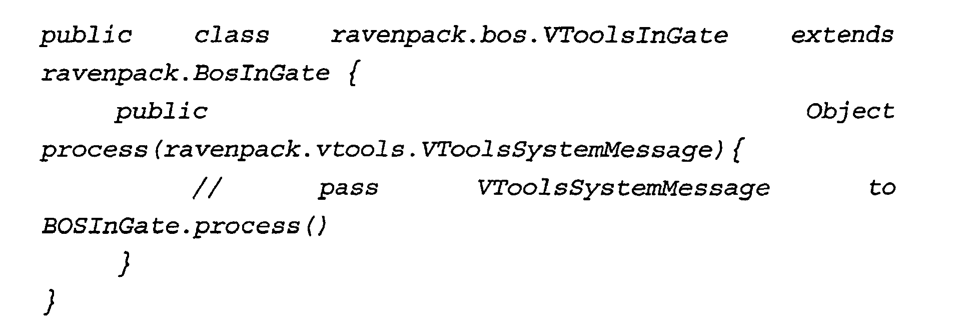

Once the VToolsInGate has received the VToolsSystemMessage, the procedure is the same as for all RpSystemMessages being processed by the BOS (see the documentation provided by the BOS team):
1. The VToolsSystemMessages is passed up to the BosInGate (with BosIn-Gate(processobjVToolsSystemMessage) and, from there, Agency.getInstance () .process(objVtoolsSystemMessage) is called.
2. Inside the Agency the method returnAgentName ("VToolsSystemMessage") is started. There, a hashtable is looked up. This hashtable must map objects/messages of type VToolsSystemMessage (or simply the message ID string) to the string "VToolsAgent", which is the return value for this method.
3. Then, this string and the initial VToolsSystemMessage are passed to the BosFactory. The BosFactory finally creates an instance of VToolsAgent (extending Thread) and assigns to it the original VToolsSystemMessage. How this VToolsAgent looks like in detail is described in the next chapter. Anyway, the VToolsAgent is passed on to the RequestScheduler. Only if the thread is allowed to run it is started; otherwise the ready-to-run VToolsAgent is put into a queue.
4. The VToolsAgent calls Agency.getChannelsForAgent (this). This method looks up in another hashable that can return the list of channels relevant for the VToolsAgent. The return object is of type ChannelSequence with BosTransactionChannel.
5. The VToolsAgent calls getNextBte(this) on the returned channel. The BosTransac-tionChannel will return the name of the next BTE to be called in for our VToolsAgent with his particular VToolsSystemMessage. In general, this is "VToolsBte".
6. Now the VToolsAgent can call the static method VToolsBte.getNextMethod(this). This will return a description of the method (including syntax) the VToolsAgent has to call next. One can find a description of the VToolsBte class below.

This flow of events necessary to find, for each VToolsAgent that can carry one of the VToolsSystemMessages introduced above, the appropriate sequence of transaction channels, BTE's and BTE methods, shows what has to be configured at the BOS to make communication between the VTools and the final VTools BTE work:
· A mapping table at the BOS registration authority to find out that all our four VToolsSystemMessages require a VToolsAgent.
· A mapping table at the BOS registration authority to find out the next trans-action channel for a VToolsAgent, regarding which VToolsSystemMessage it carries and what is the purpose of it.
· A table at each transaction channel that returns the next BTE for each VToolsAgent in a particular state (i.e. with a specific VToolsSystemMessage and the history of this and that BTE having visited so far).
· A method with a case decision that determines what is the next method that should be called by the VToolsAgent.

Back to the communication structure: Once the VToolsAgent has finished his tasks, having passed the Execution Channel, it will have to call VToolsOutGate.process(this). The VTool-sOutGate knows by the objReturnAddressee (or by default) that the IComServer to contact is exactly the initial VToolsInterface instance.

Since the process(VToolsSystemMessage) in the beginning (called by some VTools GUI ob-ject) returns when the message has been passed to the VToolsInGate, there are two ways to ensure that the response for the message gets back to the sender:
1. The VTools GUI thread that sends the message is suspended at VToolsInterface and resumed when the response arrives. Of course, this means that VToolsInterface must not be a singleton class.
2. The VTools GUI object that sends the message calls VToolsInter-face.process(theVToolsSystemMessage), which returns after VToolsInGate returns. The VTools object has to suspend itself and "listen" to some "IN port", which can be a method that automatically resumes the thread. This method is called by the VToolsInterface when the response has arrived. In this case the sReturnAddressee field of VToolsSystemMessage must contain a unique identifier for the initial sender.

The second solution is preferable.

### VtoolsAgent

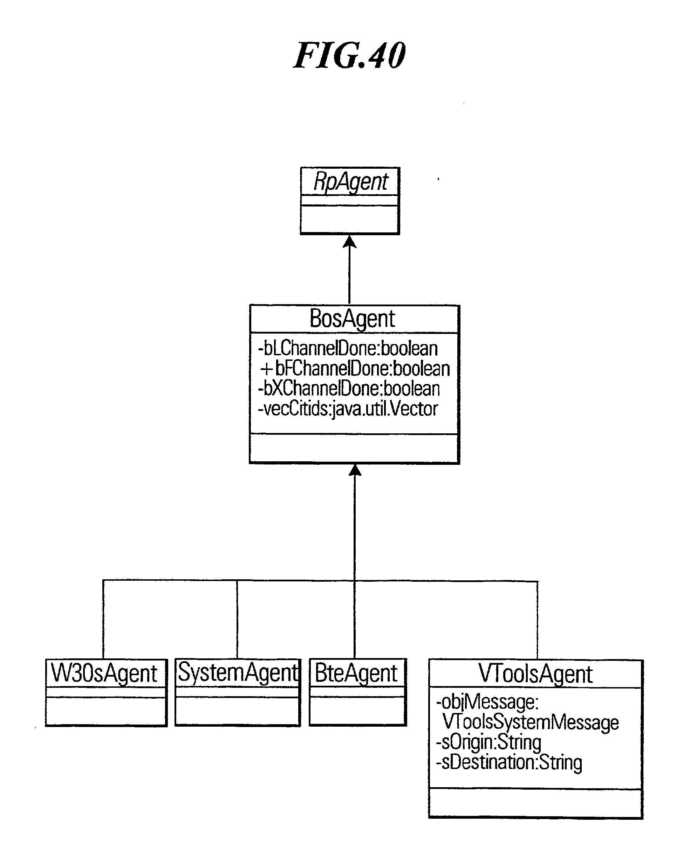

The Agent that takes VToolsSystemMessages through the BOS/CDM is a special BTE separate from the three groups already mentioned in the BOS Specification paper (W³OS Agents, System Agents, and BTE Agents). Nevertheless, he is a fully compliant BOSAgent (see Figure 40).

For our VToolsAgent, sOrigin and sDestination are both "VToolsInterface" re. the string that represents the registration name in the (RMI) namespace. All other attributes of VToolsAgent are just the same as for any Agent.

### VTools BTE

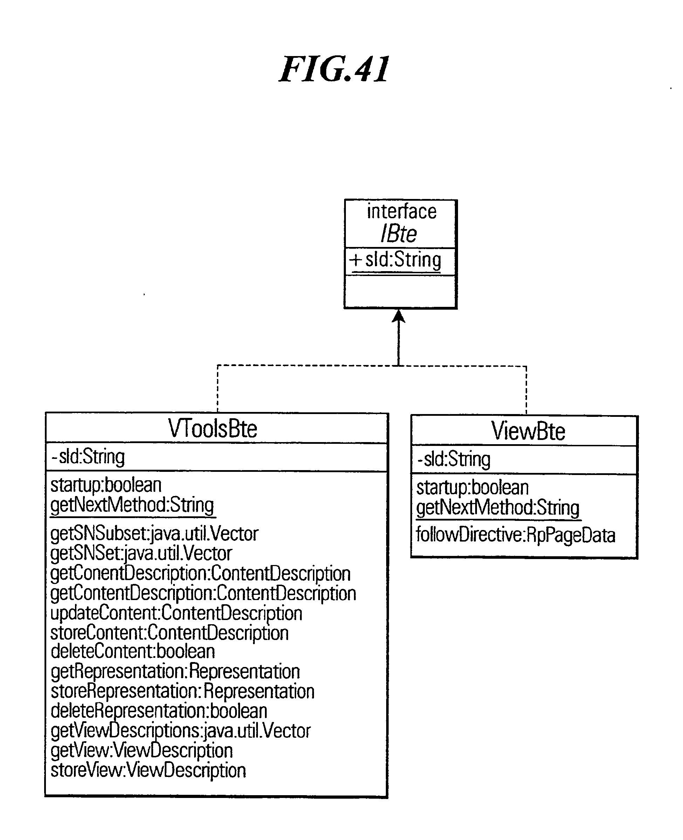

The VTools BTE is one of the two BTEs that are responsible for "visual tasks". From our point of view, we can divide up these tasks into two basic groups:
· Configuration and administration of contents and views (basically, the tables Con-tentTable, ContentInformationTable, and ViewTable are concerned here). This is the task of the VTools BTE.
· Reading data out of the tables to create a web page or document. This must be done by the View BTE described in the next chapter.
So the VToolsBTE may look like shown in Fig. 41.

### Starting up Vtools

When the VTools are started, a SnrDescriptionVTMessage is sent to the VTools BTE to fetch all Serial Number (meta) descriptions, i.e. entries from ContentMasterTable, for at least the first level of content types (i.e. the first seven digits of the serial number). When the user travels further down the content type tree, more SnrDescriptionVTMessages are fired to get more data from ContentMasterTable.

SnrDescriptionsVTMessage can also request several key-value pairs of all SequenceValue tables, i.e. the tables that describe the codes of serial number fields beyond content type (content types are stored in ContentMasterTable, a very special SequenceValueTable, see the upcoming content model document). In the end, a SnrDescriptionVTMessage can have one or more SequenceValueDescription objects with data from several different Se-quenceValue tables.

The request can also consist of SequenceValueDescription objects - but here, these objects do not contain values but only a set of keys or a key with wildcards to denote a range in the table. The response always consists of the same SnrDescriptionVTMessage with one ore more SequenceValueDescription objects with (in turn) vectors of keys (serial number se-quence codes) and in another parallel vector, their values = descriptions from ContentMas-terTable or other SequenceValueTables.

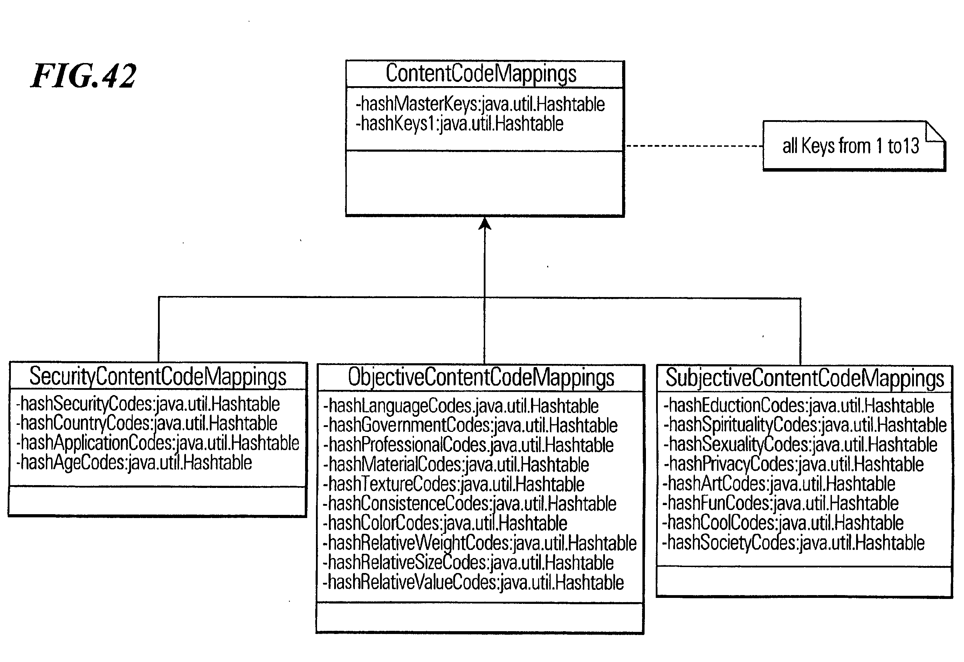

Figure 42 shows ContentCodeMappings.

Codes of serial number sequences can be matches at VTools side by means of ContentCodeMappings (see Figure 42 - ContentCodeMappings). The ContentCodeMappings can be hold by VTools to handle ContentSerialNumber objects and their attributes.

### Loading content information and opening content

Content descriptions must be loaded when the administrator clicks on a lowest node in the content type tree because their leaves denote actual contents.

While for all interior nodes of the content type tree, the VTools have to load descriptions of the next lower node level (content sub types - they are requested be means of SnrDe-scriptionVTMessages that fetch information from SequenceValueTables), in this case, the VTools must create a ContentDescriptionVTMessage with ContentDescription objects that describe the contents to open (the content entries in CIT that belong to the content sub-type). To explain that this ContentDescriptionVTMessage is to open some contents (and not to update them or to search for them), the iAction field of it is set with the integer constant for opening contents (e.g., CONTENT_DESCRIPTION_OPEN_CONTENT).

The VTools send this ContentDescriptionVTMessage to the BOS/VTools BTE, where an appropriate database query is done. The results are ContentDescriptions that contain all necessary information from CIT and the descriptions of the according entries of CT (vecRepre-sentationsList). They are sent back to the VTools enclosed in the original ContentDescrip-tionVTMessage. The VTools now can display all leaves of the node that was clicked on in the Content type tree (the leaves are displayed with the Content Description strings).

When the admin clicks on one leaf, it is very easy to open that specific content: the VTools only have to display the Descriptions of all representations of that content in the View/Representation list in the lower left corner.

### Creating new content

Creating new content clears the VCM panes and lets the administrator edit all settings. At this point, he can edit the content settings and add/load representations or alter them. Finally the content and its representations are stored in the database when the admin has pressed "Save".

### Editing content and saving it

See "Creating new content" from "edit settings" on. The user/admin can edit the settings of the content by means of the content details table.

### Editing the representations list

The administrator can load new representations (like existing pictures - they are displayed on the VCM pane), or create new representations (like text fields, headings and so on, with the toolbox). Each representation can be edited on the right side (on the VCM pane), and after that be added to the representations/view list of that content. The administrator can save the representations list by saving the content.

### Deleting content

When a content is deleted, the administrator gets a warning message. When he says OK, the content and all its representations are deleted.

### Searching for Content

The system features the functionality to search for a certain group or cluster of content. This is a very important function of the entire system as it allows searches of very high granularity. We want to show this. Later, there is a search functionality via web pages, i.e. the end user can enter a list of keywords, and will see what contents fit to them. These searches are preformatted, though, i.e. there is already a button that fires exact this query.

At the VTools side, a search that is much more detailed is presented. We offer the administrator the possibility of a search down to the granularity of every single content detail.

A three-step procedure is visible to the administrator:
1. At the VCM, the admin can choose "Search..." from the menus and will be shown a window with checkboxes indicating what content attributes should be looked for.
2. After heaving chosen the key attributes, we present the administrator a window with drop-down boxes with all possible values for the keys. To be able to do this, the VTools have lists of 1) all content types and their descriptions, and 2) all serial number sub-strings/sequences (codes for sequences 15-51, see document "Serial Numbers") and their values (i.e. all sequence value tables, see "Serial Numbers", p. 12). For attributes with ranges, the window offers 2 comboboxes each, one "From:", one "To:".
3. When the administrator has chosen his key values, the search is started. VTools formulates a query (which is actually a ContentDescriptionVTMessage that is sent to the BOS/VTools BTE). This query returns ContentDescriptions for all contents that fit the search criteria.

ad 1. The first window with checkboxes should be designed so as to offer a preselection of attributes that can be chosen later. It is reasonable to group the mass of check-boxes that might be possible. In addition to that, one could reduce the number of choices as follows (groups/selections) :
a. General Content Attributes
   a. Content Types
      2. Basic Content Attributes
   a. General Security ID
   b. Special Security ID
   c. Date/Time Beginning and Expiration [range attribute]
   d. Country Availability
   e. Country Exclusion
   f. Age Suitability
      3. Objective Content Attributes
   a. Country of Origin
   b. Historical Creation and Expiration Date/Time [range attribute]
   c. General Application ID
   d. Additional Application Ids
      4. Subjective Content Attributes
   a. Education Range [range attributes]
   b. Fun Index
   c. Cool Index

Now that we know all codes and descriptions of all serial number attributes, we can offer the user a combo box for each attribute that contains all possible values. For example, the Country Availability Code box lists all countries and all combinations of countries that are known to the system as serial number attributes.

For the "General Content Attributes", which encloses all master and sub keys, there might finally be 14 boxes that are filled depending on each parent. This means, depending on what is chosen in the Master Key box (e.g. Computer Manufacturer), the second box (Sub Key 1) is loaded accordingly, i.e. with the names of all Computer Manufacturers available. Once the user selects e.g. "Compaq" there, the third box is loaded with Compaq's subcategories on level 1, which might be {Products, Company, Internals,...}, and so on.
As already mentioned, range attributes require two selections.

When the administrator has made all settings, he can press "Search" at the bottom of the window. The VTools create a ContentDescriptionVTMessage whose ContentDescription object contains a serial number that matches all selected criteria. We can build up the serial number because we know the codes for all values that have been chosen. Matching all selected criteria means, all provided attribute values are set, and the rest is filled up with 0's. At the VTools BTE, a SQL query is formulated by means of the ContentDescription. The CIT will return a number of content descriptions, i.e. CITID and description of the content, its full serial number and maybe also the default view. These are passed back to the VTools GUIs, which store the list of results. It would be great if this list could be displayed to the user so he can select one and press OK, and finally this content is loaded into the VCM window so it can be updated and viewed.

There is one aspect to this search: In the form described above, we have a simple AND search, i.e. we look for all contents that have attribute 1 and attribute 2 and so on. Maybe we could have an additional OR button that switches to "OR"-mode. Of course, even then we still aren't able to formulate complex queries (this AND that AND (NOT that OR NOT LESS THAN that OR GREATER OR EQUAL THAN that))... A third window is possible that lists again all selected values and offers the user the possibility to combine them with AND, OR, NOT, GREATER, LESS,... constructions. For each AND set of attributes, one can send one ContentDescription query object, for each OR set one needs different ContentDescriptions. For all NOT attributes one needs inverse codes, so another way is be to have a flag in the ContentSerialNumber object for that attributes. Similar flags could also be used for GREATER, LESS and so on.

### Editing/Updating Groups of Content

Editing groups of content is kind of an extension to changing existing contents. It will also be required for scenario no. 2. Editing consists of a) a search and b) an update of the out-come of the search.

When doing a content group update, the administrator might select "Update Content Group..." from the VCM/VC menus and is first presented the same window as for the search case. He can choose what content fitting which criteria should be updated. The second window is also the same: here the administrator can choose what attributes should be valid and set for the bunch of contents that must be updated. It is also possible to skip both of these steps, which signifies that the following update concerns all contents.

At the point where in the search use case the actual search is started, here in the update case, again a window similar to the first of the search process appears. Now the administrator can select which attributes should be changed and updated. After checking off these attributes, the administrator is presented another window that offers the possibility to additionally enter new values. So one has two "sides" for each attribute, one displaying the values to search for ("old values"), the other one possible replacements ("new values"). Only values that are listed in the SequenceValue tables are allowed, i.e. values with keys that are known to the system.

If one wants to update all contents that have to do with some topic, e.g. "Persian Gulf Crisis", one may employ a new security ID.

In the first step, one would "search for" all contents of sub category (content type sub key no. ?) "Persian Gulf Crisis" or General Application Code denoting "Persian Gulf Crisis". Based on this selection, one can choose in steps 3 and 4 that General Security ID should be changed from, say, 5 (average security) to 9 (maximum security).

This can be done by
1) sending a ContentDescriptionVTMessage to BOS with one (AND combinations of at-tributes) or several (OR combinations) ContentDescription objects that contain a pattern for serial numbers to search for.
2) Inside the VTools BTE, one gets the return from the database: all contents for the update. At the VTools BTE, all serial number sequences of the previously returned search result are overwritten (contents for the update) and the content data is written back to CIT.
3) The ContentDescription objects for the return message to VTools are all changed contents.

### View BTE

The View BTE is responsible for finding the appropriate layout and display for any request. Most generally, the W³OS will send a request for a page to the BOS. The W³OS is designed to look up what is requested, reset prices and product specifics, cause escalation Agents, communicate with external interfaces, ..., all based on a page request. In the end, some result page must be sent to the PageComposer who arranges all elements that must be displayed on one page.

Whatever has been happening in the BOS and in the Channels before the W3OsAgent arrives at the View BTE is irrelevant. The only task of ViewBte is to process whatever is passed to it to a output suitable for the PageComposer (PC).

We can distinguish the following general data passed to ViewBte:
1. View IDs. Requests with only a view ID are requests for "filled" views. Starting from a view, we can find several "hardcoded", i.e. absolute, references to serial numbers as described next.
2. SerialNumber references: Either a plain serial number (will cause the system to automatically use the default view (DefaultViewID field in CIT)) or a serial number AND a viewID (in this case, don't use the default view ID but the one being passed). We always need a viewID because a pure Content object cannot be represented in any fashion. A content has always one or more representations. These representations are records/rows of CT. Each of these had an ID (unique in CT). Additionally, all entries of CT have a field CITID that maps the ID of their content meta-data in CIT.
   Finally the W30SAgent can have a whole set of serial numbers or just one ViewID when arriving at the View BTE.

Figure 43 shows a view BTE. Basically, the View BTE has the following tasks, in general:
· Looking up a view by ViewID to extract its XML string
· Looking up serial numbers to get their default view or some other representation view in order to finally get actual representation data

In the end, every action of the View BTE results in getting some view's XML string. There is basically an escalation inside the View BTE. Starting with one serial number, the View BTE can finally find
· references to other serial numbers, or
· references to views with references to representations of the initial content, or
· references to views with other serial numbers as references.

Starting with a ViewID, there can only be references to serial numbers, but they, on the other hand, can in turn have references to other views and/or serial numbers as described above. All in all, we have circular and recursive structures there:

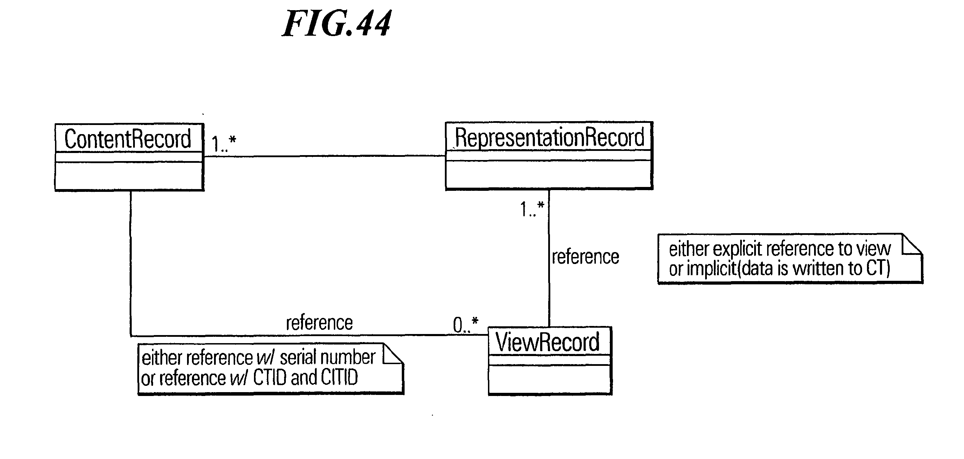

Figure 44 shows relationships between content, representation, and views.

The entry points here is, as already mentioned, either a serial number, or a view ID. Anyway, a tree will be spawned from the initial content or view. The "search" terminates when we come to a CT where either all references can be found within (i.e. the view has only references to data stored in that record) or when some reference points to a basic view instance (e.g. some actual picture element) in the CT.
One can also imagine the references, relationships and nesting of views as a tree. There is some root, the nodes are views, and the leaves are actual data elements. This tree is the same that is later used to compose the page. The point is that on the way from root to leaves, there are also XML substrings.

Summing up, we always have, as a result for every request, be it for some content or view:
· a set of XML strings
· a set of basic view instances, e.g. picture data, text data, header strings,...
We will always pick up XML strings on the way down from the entry point. If there are references contained within a pair of tags, they are resolved and will lead to another view (with another XML string) or another representation, which is:
· either an assembly view that contains basic types (the
view entry for that basic representations need not be looked up since we agreed on having a full XML string down to the basic types), or
· simply a basic type (for this type, we have to look up the XML string in the View-Table).
In the end, we always terminate at some CT.

Let's call, from now on, the serial number or the view ID that is passed to the ViewBte a Directive. A Directive can be a serial number, a serial number with a view ID (denoting not to take the default view but the passed one), a CITID of CT or a CT ID/CITID pair, or a ViewID or a ViewID/CT ID pair.

Here is the structure of ViewBte:

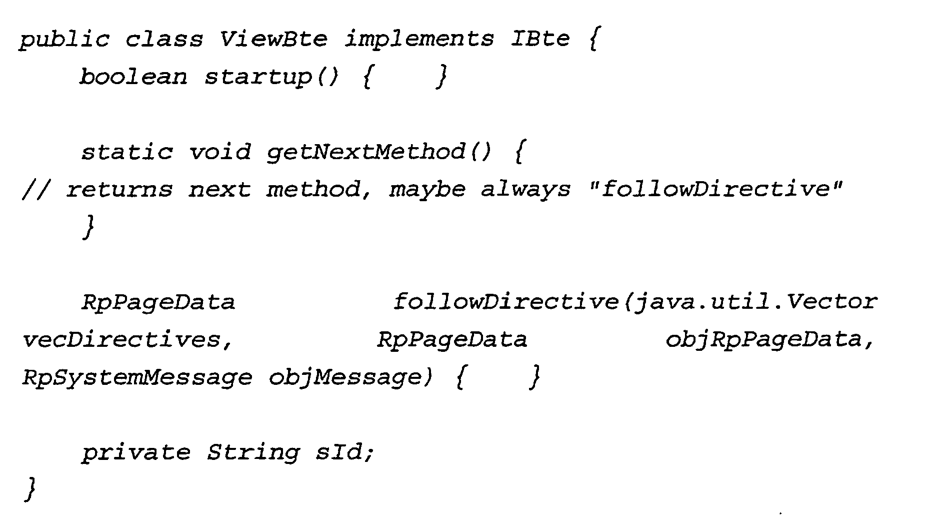

When the ViewBte receives a directive (followDirective), it starts to look up the entry point. From there on, it travels down the references of the relationship three. Here is the flow of events:
The initial Directive arrives at the View BTE along with an empty RpPageData object and the RpSystemMessage that initialized the Agent.
This is the iterative process the ViewBte goes through:
1. Analyze the Directive.
2. If it is a serial number, or ContentInformationTable ID (=CITID in CT), or Content-Table ID/CITID pair, it classifies, in the end, some representation (serial numbers will also lead to a representation).
   a. If it is a serial number, ViewBte has to look up the serial number and check the security settings of the security code sequence contained in the serial number (make a query with "... where <security_part_of_serial_number> = security_id_value_of_user ..."),
   b. If it is a entry in the CT (denoted by CT ID, maybe in combination with a CITID), look up the ExtraSecurityID field of that record of CT. The user's security setting (which must be compared to the security level of the directive/record) can be retrieved from the W3OsMessage.
   Once these security checks are done, proceed:
   a. If the reference may be used as a directive (security clearance OK), look it up. If it is a serial number without extra ViewID, navigate to the row of that serial number in CIT and take the DefaultViewID. If there is a ViewID passed, use it. ViewID and CITID will lead to a specific record in CT. If there is a ExtraSecurity setting, proceed with it as described above: compare it with the user's security settings.
      i. If it is valid, check the ViewID of the representation. Take this ViewID as a new directive and go on with 3. After having returned from there, proceed.
      ii. If it is not valid, append the CT ID of an error message representation in CT (maybe there are separate entries in CT that are error mes-sages and error pictures,...) to the vecPageData vector of RpPageData and return.
   b. If the security settings indicate that this directive must not be used, also put the error message CT ID to vecPageData.
3. If it is a view ID, look up the view definition in the view table. Read the XML string and append it to the vecXmlString vector of RpPageData. Put a placeholder variable between the tags. The placeholder is later at the PageComposer necessary to put actual data to the right place in the XML document. Every placeholder variable will be replaced by actual data.
   a. If there are references contained in the XML string: For all references in the XML string DO:
      i. If there is a reference to a serial number, the placeholder variable is a content placeholder. Go on with 2. After the return proceed with the next reference.
      ii. If there is a reference to another view within the XML string, replace the reference with a view placeholder. Then proceed with 3 on the reference. Then, proceed with the next reference.
   b. If there are no references contained in the XML string: Go one step back to the origin of the reference that led to this view. This must be a record in CT. For all tags in the XML string of that view DO in the order of tags from left to right: Check if there is (in the CT) a basic view instance within the same CITID group whose type matches the tag.
      i. If yes, add the CT ID to the end of the vecPageData vector of the RpPageData object. Proceed.
      ii. If no, this is an error! (Add the error message CT ID to the vector)

The algorithm terminates when there are no more references to views or serial numbers. This will be in step 3.b.
The result of this procedure should be the following: Step by step, and down the later hierarchy within the page (this is always a tree structure), the View BTE finally gets down to XML strings and records in CT with actual data. In the end, there are two filled vectors:
· VecXmlStrings, which contains all XML substrings that have been found, starting from the root (depth first order of all XML strings necessary for the page)
· VecPageData, which contains CT IDs of all those rows/records that contain actual data that is being used in the later page.

It is important that the order of both vectors is correct and corresponding. We don't have a 1:1 relationship between the elements of vector 1 and vector 2, for example we have a view with references to 3 serial numbers: There is one XML string, but the 3 serial numbers lead to 3 representations, i.e. entries in CT. Consequently, there are three elements of vecPageData that belong to one element of vecXmlStrings.

Beside of finding all XML strings and links of all actual data, the View BTE must also determine which XSL file to use later at the PC. We will have several XSL files for several user groups, depending on age, education level, home country,... Nevertheless, each XSL fits to any XML file that can be produced and composed from the XML strings being stored with the views. The View BTE chooses, depending on the user profile, which XSL file to use. The View BTE can additionally determine a Style Sheet to use. In any case, the View BTE writes at least to the iXslID field of RpPageData. These Ids used to distinguish XSL files for different user groups are defined from View BTE and PC. Later we will have to propagate these information from BTE to PC (if we have a GUI at BTE side where the administrator can create new XSL files for a user group) or in one step with the RavenManager application for PC.

Once the ViewBte is terminated with a specific directive, it returns the filled RpPageData to the Agent, who has to go on to the ContentBte. This BTE will analyze all elements of vecPageData and replace every CT ID with the actual data that is stored there.
The reason why ViewBte must not fetch actual data (but only deliver CT IDs) is that the access to real content data must be exclusive to some extra BTE that has only this functionality.

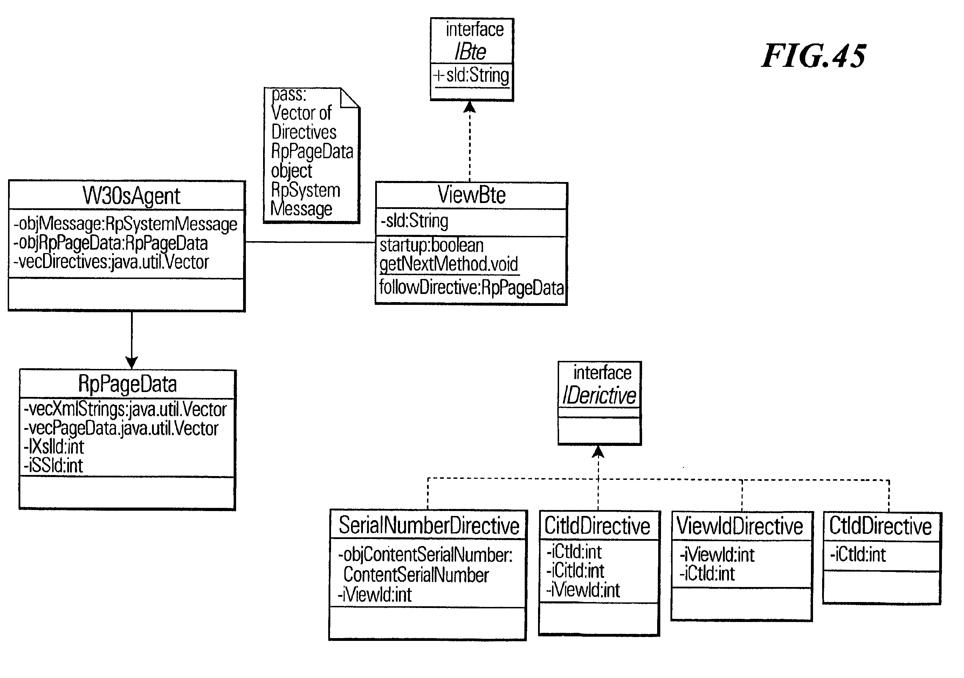

Figure 45 shows the ViewBte, W3OsAgent, and Directive.

### Manager

A Management Console is responsible for starting up and shutting down the BOS. The CDM may be controlled and configured by the management console as well, which takes over all administrational tasks in any case. Especially installation and configuration (as well as deinstalling) of Business Transaction Engines (BTE) are handled via the Manager. Any errors occurring are swallowed if possible so the systems retains stable under every condition. Exception messages are logged, though, and can be evaluated later.

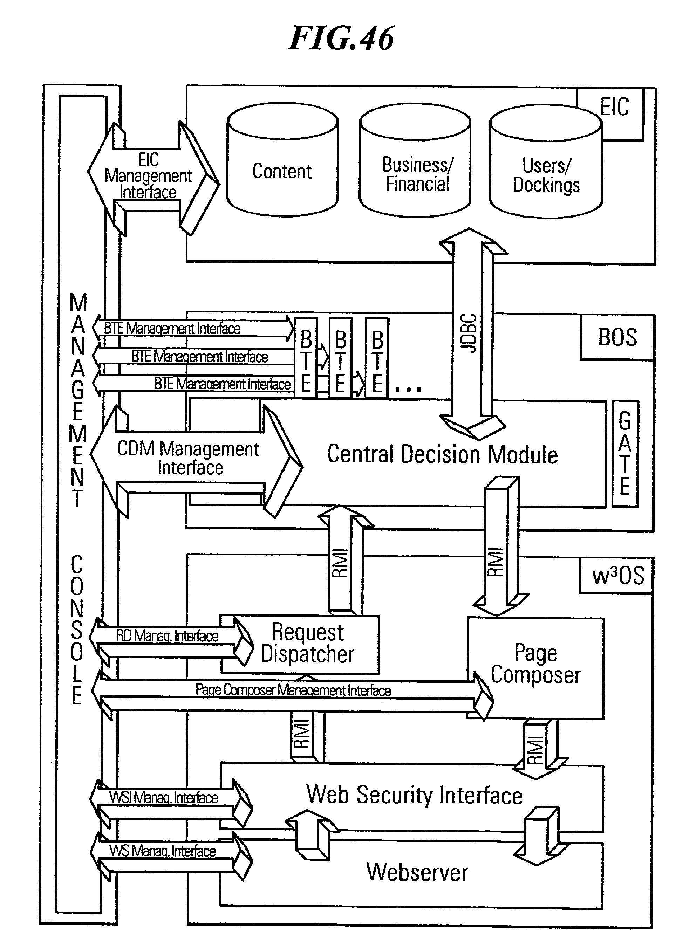

Figure 46 gives a schematic overview of the Management Console.

The Manager is the central controlling unit for the system administrator to configure and monitor the entire system.
The Manager works as a container of control panels for all the modules and plug-ins. It is only a framework of GUI, adds these functionalities: administration access controlling, coordination of control panel of different components.
For each components that is configurable through the Management Console, a Java interface (ManagementServer) is designed to facilitate management. The component uses a specialized class (e.g. WebServerManagementServer) to implement this interface.

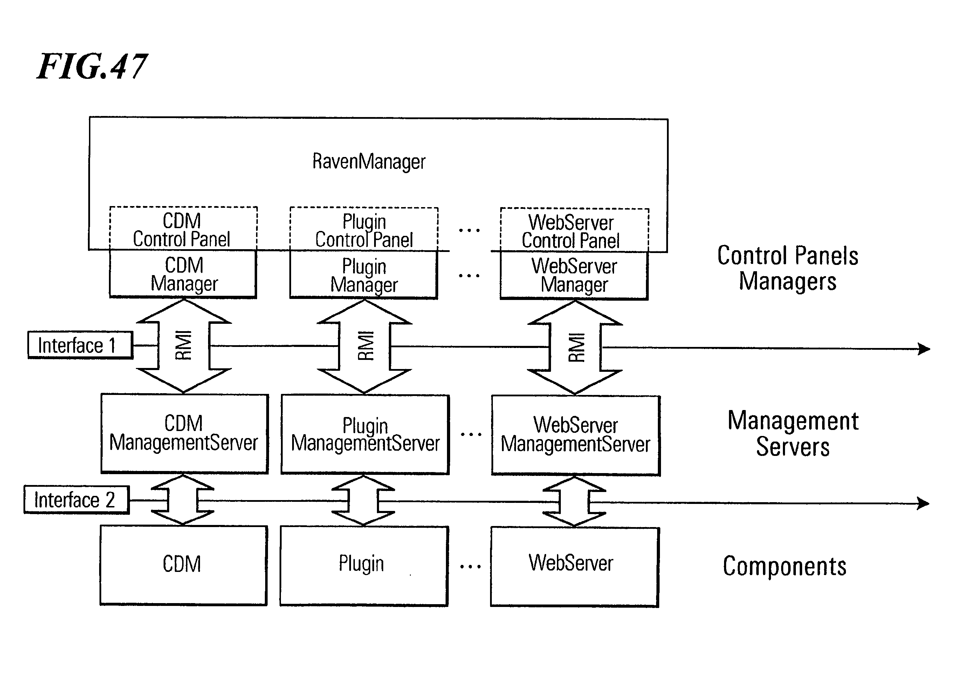

Figure 47 shows the Communication Architecture of the Manager.

Here we only define the interface 1 in the figure, the definition and implementation of interface 2 is up to the individual component developer.

### Scenario Description

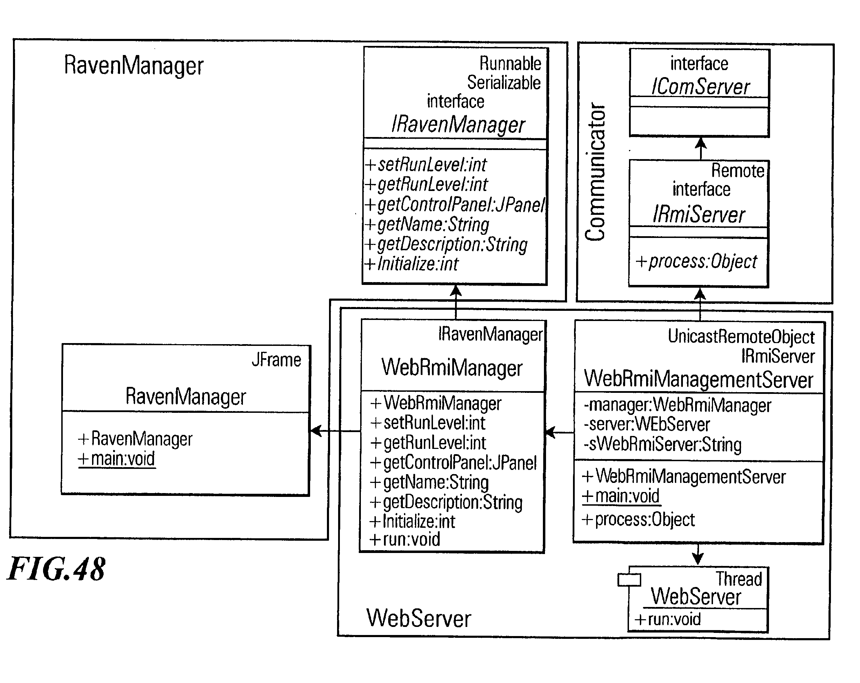

Here we can give a scenario description of how this scheme works.
1. In the platform where component resides, startup RMI registry server with 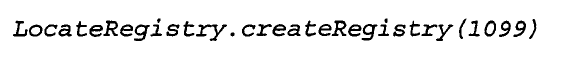 Note: here we will not use the utility program rmiregistry any more.
2. Startup the ManagementServer, usually after the initialization, it should register itself to a dedicated RMI name (e.g. WebServer) by some code like 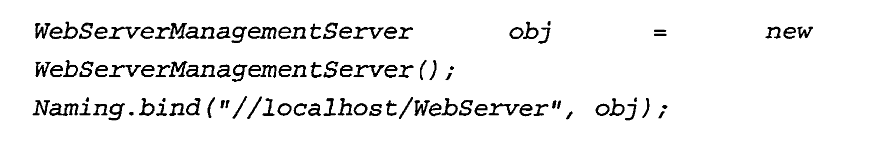 to enable RavenManager to use remote ManagementServer object.
3. Now run the RavenManager, it will use some code like 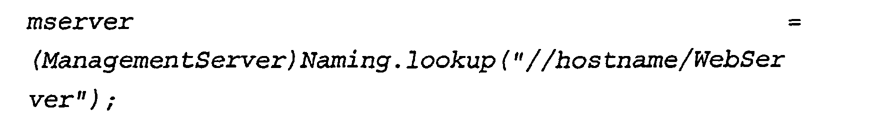 to retrieve a reference for the management server (e.g. *WebServerManage-mentServer*).
4. RavenManager call the *process()* method of that server to get a manager for that management server. 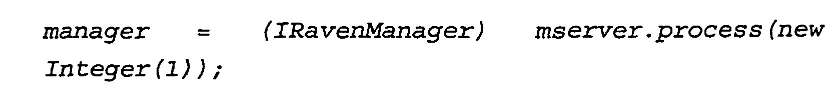 Note: here no longer return a *JPanel,* because of these reasons. First, to avoid that too complex "Callback" for dynamic GUI and interactive response with adminstratrors. Second, to separate the functions of UI between management task.
5. RavenManager will call the manager's *initialize()* method to build a control panel, start a new thread to do some periodic task (if necessary). 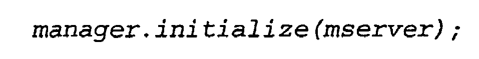
6. Now RavenManager can get the name, description, server status information and control panel from the manager. 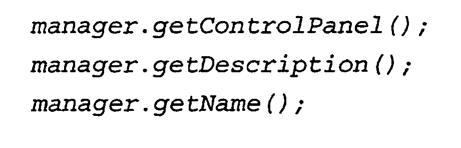 Figure 48 schematically shows the Communication Interfaces.

Basically, every ManagementServer constructs a manager, when being remotely called, it returns this manager to the Manager. When the administrator wants to configure or monitor the status of that component, the manager returns a control panel, through which the administrator can interactively configure and monitor that component. The Manager can start and stop dedicated servers by calling some methods of that manager.

### Naming Conventions of ManagementServers and Managers

For each component in the system, there will be a ManagementServer and Manager for the purpose of remote management. To make naming clear and uniform, it is possible to use following naming conventions: for XXX component (e.g., Web server) using RMI/COBAR communicator model, the ManagementServer will be XXXRmiManagementServer /XXXCobarManagementServer. (e.g. WebRmiManagementServer /WebCobarMan-agementServer). Whereas Manager will be XXXRmiManager / XXXCobarManager (e.g. WebRmiManager).

### The Encryption Engine

An Encryption Engine is the module that provides encryption and key mechanisms to the entire system. It is utterly flexible and extensible in the way that the algorithms used can at any time be exchanged to more powerful implementations in the future.

All communication between the system components is preferably encrypted.

### The Communication Interfaces

The system is a distributed system that uses RMI communication between all of its components.

The way this is implemented is also very flexible. The communication interfaces use communication wrappers that encapsulate the underlying technology completely. It is no problem to replace RMI by CORBA at any time.

## Claims

1. A method of presenting data that are stored in a data storage device (2) of a data server (3) to a user, said user accessing said data server over a network, where in the process between accessing the server and presenting the data, at least one data path is used over which control data associated with the selection of data is sent, said at least one data path being unidirectional.

2. The method of claim 1, **characterized by** the steps of:
establishing a connection with the user via a communication module (1) ;
receiving a user identification identifying the user;
transferring the identification to an input module (4) that is arranged to only receive data from the communication module(1), but not to send data to the communication module (1);
transferring the identification and/or data derived by processing the identification to a data selection module (5), said data selection module (5) being arranged such to only receive data from said input module (4) but not to send data to the input module (4), to access said data storage device (2) and to determine which data in the data storage device are to be presented to the user on the basis of the information received from the input module (4).

3. The method of claim 2, **characterized in that** the communication module (1) transmits a selection page to the user after having established the connection, and **in that** in the step of transferring the identification to the input module (1) additional data are transferred that are associated with a selection on said selection page.

4. The method of claim 2 or 3, **characterized in that** the data selection module (5) transfers the data to be presented together with data associated with the display preparation of the data to be presented, to a page preparation module (6) that is arranged to only receive data from the data selection module (5) but not to send data to said data selection module (5), and which then prepares the data to be presented in the form of a display page.

5. The method of claim 4, **characterized in that** the page preparation module (6) transfers the data to be presented together with information associated with their display to the communication module (1), which then transmits the prepared page to the user.

6. The method of one of claims 2 to 5, **characterized in that** during a step of data selection the data selection module (5) transmits the user identification to a remote second server and receives from said remote second server information associated with data to be selected for the user identified by the identification.

7. The method of claim 1, **characterized by** providing said data server with a three tier software architecture, where a first tier comprises at least one database containing data to be presented, a second tier comprises one or more modules for implementing application logic for processing data and for accessing the database in said first tier, and a third tier comprises one or more modules for exterior communication and processing of data for display.

8. The method of claim 7, **characterized by** providing said third tier with a plurality of communication modules, each module being arranged to provide a communication channel to a respective network.

9. The method of claim 8, **characterized in that** said plurality of communication modules comprise active modules for establishing active communication channels for sending data into the respective network connected to the respective active module, and interactive modules for establishing interactive communication channels for sending data to and receiving data from the respective network connected to the respective interactive module.

10. The method of claim 7, **characterized by** providing said second tier with a software architecture that separates software elements for processing data transactions from software elements that implement application logic.

11. The method of claim 10, **characterized in that** said software elements for processing data transactions form a basic transaction architecture, and said software elements that implement application logic are plug-ins arranged to be plugged into said basic transaction architecture.

12. The method of claim 10 or 11, **characterized in that** data transactions are conducted by means of agents on which said software elements implementing application logic perform tasks.

13. The method of one of claims 7 to 12, **characterized by** providing said second tier with a gate module, which is arranged such that all messages into said second tier must pass through said gate module.

14. The method of one of claims 7 to 13 **characterized by** providing said third tier with a network interaction module for interactive communication to a communication network over which users of said communication network send requests for data, where said network interaction module receives external requests from said communication network, generates an internal request associated with said external request, passes said internal request to said second tier for processing of said internal request, suspends said external request until an internal response to said internal request is received, and generates an external response to said external request after having received said internal response.

15. The method of claim 14, **characterized by** providing said network interaction module with
- a network server module for receiving said external requests from said communication network and sending said external responses into said communication network,
- a security module connected to said network server module for receiving exterior requests from said network server module, said security module comprising a holding module for holding suspended external requests, and
- a request dispatcher module connected to said security module for generating said internal requests on the basis of external requests and for passing said internal requests to said second tier, where the flow of information from said security module to said request dispatcher module and from said request dispatcher module to said second tier is unidirectional.

16. A computer program product comprising a computer program arranged to perform the method of one of claims 1 to 15 when executed on a computer.

17. A data server (3) for presenting data that are stored in a data storage device (2) of said data server (3) to a user over a network, where said data server (3) is arranged in such a way that in the process between accessing the server and presenting the data, at least one data path is used over which control data associated with the selection of data is sent, said at least one data path being unidirectional.

18. The data server of claim 17, **characterized by**:
a communication module (1) for establishing a connection with a user, which is arranged for receiving a user identification identifying the user;
an input module (4) for receiving the identification transferred by the communication module (1), said input module (4) being arranged to only receive data from the communication module (1), but not to send data to the communication module (1);
a data selection module (5) for receiving the identification and/or data derived by processing the identification, said data selection module (5) being arranged to only receive data from said input module (4) but not to send data to the input module (4), to access said data storage device (2) and to determine which data in the data storage device (2) are to be presented to the user on the basis of the information received from the input module (4).

19. The data server of claim 18, **characterized in that** the communication module (1) is arranged to transmit a selection page to the user after having established the connection, and is arranged such that in the step of transferring the identification to the input module (4) additional data are transferred that are associated with a selection made by the user on said selection page.

20. The data server of claim 18 or 19, **characterized in that** the data selection module (5) is arranged to transfer the data to be presented together with data associated with the display preparation of the data to be presented, to a page preparation module (6) that is arranged such that it may only receive data from the data selection module (5) but cannot send data to said data selection module (5), and which is arranged to then prepare the data to be presented in the form of a display page.

21. The data server of claim 20, **characterized in that** the page preparation module (6) is arranged to transfer the data to be presented together with information associated with their display to the communication module (1), which is arranged to then transmit the prepared page to the user.

22. The data server of one of claims 18 to 21, **characterized in that** the data selection module (5) is arranged to transmit the user identification to a remote second server and receive from said remote second server information associated with data to be selected for the user identified by the identification.

23. The data server of claim 17, **characterized by** having a three tier software architecture, where a first tier comprises at least one database containing data to be presented, a second tier comprises one or more modules for implementing application logic for processing data and for accessing the database in said first tier, and a third tier comprises one or more modules for exterior communication and processing of data for display.

24. The data server of claim 23, **characterized in that** said third tier comprises a plurality of communication modules, each module being arranged to provide a communication channel to a respective network.

25. The data server of claim 24, **characterized in that** said plurality of communication modules comprise active modules for establishing active communication channels for sending data into the respective network connected to the respective active module, and interactive modules for establishing interactive communication channels for sending data to and receiving data from the respective network connected to the respective interactive module.

26. The data server of claim 23, **characterized in that** said second tier comprises a software architecture that separates software elements for processing data transactions from software elements that implement application logic.

27. The data server of claim 26, **characterized in that** said software elements for processing data transactions form a basic transaction architecture, and said software elements that implement application logic are plug-ins arranged to be plugged into said basic transaction architecture.

28. The data server of claim 26 or 27, **characterized by** agents arranged such that data transactions are conducted by means of said agents on which said software elements implementing application logic perform tasks.

29. The data server of one of claims 23 to 28, **characterized in that** said second tier comprises a gate module, which is arranged such that all messages into said second tier must pass through said gate module.

30. The data server of one of claims 23 to 29 **characterized in that** said third tier comprises a network interaction module for interactive communication to a communication network over which users of said communication network send requests for data, where said network interaction module is arranged to receive external requests from said communication network, to generate an internal request associated with said external request, to pass said internal request to said second tier for processing of said internal request, to suspend said external request until an internal response to said internal request is received, and to generate an external response to said external request after having received said internal response.

31. The data server of claim 30, **characterized in that** said network interaction module comprises
- a network server module for receiving said external requests from said communication network and sending said external responses into said communication network,
- a security module connected to said network server module for receiving exterior requests from said network server module, said security module comprising a holding module for holding suspended external requests, and
- a request dispatcher module connected to said security module for generating said internal requests on the basis of external requests and for passing said internal requests to said second tier, where the flow of information from said security module to said request dispatcher module and from said request dispatcher module to said second tier is unidirectional.

## Patentansprüche

1. Verfahren zum Darstellen von Daten, die in einer Datenspeichervorrichtung (2) auf einem Datenserver (3) gespeichert sind, für einen Anwender, wobei der Anwender auf dem Datenserver über ein Netzwerk zugreift, wobei im Prozess zwischen dem Zugriff auf den Server und dem Darstellen der Daten zumindest ein Datenpfad verwendet wird, über den Kontrolldaten, die mit der Auswahl von Daten assoziiert sind, gesendet werden, wobei der zumindest eine Datenpfad unidirektional ist.

2. Verfahren nach Anspruch 1, **gekennzeichnet durch** die Schritte:
- Herstellen einer Verbindung mit einem Anwender über ein Kommunikationsmodul (1);
- Empfangen einer den Anwender identifizierenden Anwender-Identifikation;
- Übertragen der Identifikation an ein Eingabemodul (4), das dafür ausgelegt ist, Daten vom Kommunikationsmodul nur zu empfangen, aber nicht Daten an das Kommunikationsmodul zu senden;
- Übertragen der Identifikation und/oder Daten, die durch Prozessieren der Identifikation erhalten werden, an ein Datenauswahlmodul (5), wobei das Datenauswahlmodul (5) so ausgelegt ist, dass es Daten von dem Eingabemodul (4) nur empfängt, aber nicht so, dass es Daten zum Eingabemodul (4) sendet, um auf die Datenspeichervorrichtung (2) zuzugreifen und zu bestimmen, welche Daten in der Datenspeichervorrichtung dem Anwender auf Basis der vom Eingabemodul (4) empfangenen Informationen präsentiert werden sollen.

3. Verfahren nach Anspruch 2, **dadurch gekennzeichnet, dass** das Kommunikationsmodul (1) nach Herstellen der Verbindung eine Auswahlseite an den Anwender überträgt und **dadurch**, dass beim Schritt des Übertragens der Identifikation an das Eingabemodul (1) zusätzliche Daten übertragen werden, die mit einer Auswahl auf der Auswahlseite assoziiert sind.

4. Verfahren nach Anspruch 2 oder 3, **dadurch gekennzeichnet, dass** das Datenauswahlmodul (5) die zu präsentierenden Daten zusammen mit Daten überträgt, die mit der Anzeigevorbereitung der zu präsentierenden Daten assoziiert ist, an ein Seitenvorbereitungsmodul (6), das dafür ausgelegt ist, Daten nur vom Datenauswahlmodul (5) zu empfangen, aber nicht Daten an das Datenauswahlmodul (5) zu senden, und welches dann die darzustellenden Daten in Form einer Anzeigenseite vorbereitet.

5. Verfahren nach Anspruch 4, **dadurch gekennzeichnet, dass** das Seitenvorbereitungsmodul (6) die darzustellenden Daten zusammen mit Informationen, die mit ihrer Anzeige assoziiert sind, an das Kommunikationsmodul (1) überträgt, welches dann die vorbereitete Seite an den Anwender überträgt.

6. Verfahren nach einem der Ansprüche 2 bis 5, **dadurch gekennzeichnet, dass** während eines Schrittes der Datenauswahl das Datenauswahlmodul (5) die Anwender-Identifikation an einen entfernten zweiten Server überträgt und von dem zweiten entfernten Server mit für den durch die Identifikation identifizierten Anwender auszuwählenden Daten assoziierte Informationen empfängt.

7. Verfahren gemäß Anspruch 1, **gekennzeichnet durch** Versehen des Datenservers mit einer 3-Tier-Software-Architektur, bei der ein erster Tier zumindest eine Datenbank umfasst, die zu präsentierende Daten enthält, ein zweiter Tier ein oder mehrere Module zur Implementierung von Applikationslogik zur Verarbeitung von Daten und zum Zugriff auf die Datenbank in dem ersten Tier umfasst und ein dritter Tier ein oder mehrere Module für externe Kommunikation und Verarbeitung von Daten zur Anzeige umfasst.

8. Verfahren nach Anspruch 7, **gekennzeichnet durch** Versehen des dritten Tiers mit einer Mehrzahl von Kommunikationsmodulen, wobei jedes Modul so ausgelegt ist, dass es einem entsprechenden Netzwerk einen Kommunikationskanal bereitstellt.

9. Verfahren gemäß Anspruch 8, **dadurch gekennzeichnet, dass** die Mehrzahl von Kommunikationsmodulen aktive Module zum Herstellen aktiver Kommunikationskanäle zum Senden von Daten in das jeweilige, mit dem entsprechenden aktiven Modul verbundene Netzwerk und interaktive Module zum Herstellen interaktiver Kommunikationskanäle zum Senden von Daten zu und Empfangen von Daten aus den mit dem jeweiligen interaktiven Modul verbundenen jeweiligen Netzwerk umfasst.

10. Verfahren nach Anspruch 7, **gekennzeichnet durch** Versehen des zweiten Tiers mit einer Software-Architektur, welche Softwareelemente zum Verarbeiten von Datentransaktionen von Softwareelementen trennt, die Applikationslogik implementieren.

11. Verfahren gemäß Anspruch 10, **dadurch gekennzeichnet, dass** die Softwareelemente zum Prozessieren von Datentransaktionen eine grundlegende Transaktions-Architektur bilden und die Softwareelemente, welche Applikationslogik implementieren, Plugins sind, die dafür ausgelegt sind, in die grundlegende Transaktions-Architektur eingeklinkt zu werden.

12. Verfahren nach Anspruch 10 oder 11, **dadurch gekennzeichnet, dass** Datentransaktionen mittels Agenten durchgeführt werden, auf denen die Applikationslogik implementierenden Softwareelemente Tasks durchführen.

13. Verfahren nach einem der Ansprüche 7 bis 12, **gekennzeichnet durch** Versehen des zweiten Tiers mit einem Gattermodul, das so ausgelegt ist, dass alle Nachrichten an den zweiten Tier das Gattermodul passieren müssen.

14. Verfahren nach einem der Ansprüche 7 bis 13, **gekennzeichnet durch** Versehen des dritten Tiers mit einem Netzwerk-Interaktionsmodul für interaktive Kommunikation zu einem Kommunikationsnetzwerk, über welches Anwender des Kommunikationsnetzwerkes Anfragen bezüglich Daten senden, wobei das Netzwerk-Interaktionsmodul externe Anfragen vom Kommunikationsnetzwerk empfängt, eine mit der externen Anfrage assoziierte interne Anfrage generiert, die interne Anfrage an den zweiten Tier vor Verarbeitung der internen Anfrage weiterleitet, die externe Anfrage suspendiert, bis eine interne Antwort auf die interne Anfrage empfangen ist und eine externe Antwort auf die externe Anfrage erzeugt, nachdem die interne Antwort erhalten worden ist.

15. Verfahren nach Anspruch 14, **gekennzeichnet durch** Versehen des Netzwerk-Interaktionsmodules mit
- einem Netzwerkservermodul zum Empfangen der externen Anfragen vom Kommunikationsnetzwerk und Senden der externen Antworten in das Kommunikationsnetzwerk,
- ein mit dem Netzwerkservermodul verbundenes Sicherheitsmodul zum Empfangen externer Anfragen aus dem Netzwerkservermodul, wobei das Sicherheitsmodul ein Haltemodul zum Halten suspendierter externer Anfragen umfasst, und
- ein Anfragenabwicklermodul, das mit dem Sicherheitsmodul verbunden ist, zum Erzeugen der internen Anfragen auf Basis von externen Anfragen und zum Weiterleiten der internen Anfragen an den zweiten Tier, wobei der Informationsfluss vom Sicherheitsmodul zum Anfragenabwicklermodul und vom Anfragenabwicklermodul zum zweiten Tier unidirektional ist.

16. Computerprogrammprodukt, das ein Computerprogramm umfasst, ausgelegt für das Durchführen des Verfahrens eines der Ansprüche 1 bis 15, wenn auf einem Computer ausgeführt.

17. Datenserver (3) zum Präsentieren von Daten, die in einer Datenspeichervorrichtung (2) auf dem Datenserver (3) gespeichert sind, einem Anwender über ein Netzwerk, wobei der Datenserver (3) in solch einer Weise ausgelegt ist, dass im Prozess zwischen Zugreifen auf den Server und Präsentieren der Daten zumindest ein Datenpfad verwendet wird, über welchen mit der Auswahl von Daten assoziierte Kontrolldaten gesendet werden, wobei der zumindest eine Datenpfad unidirektional ist.

18. Datenserver nach Anspruch 17, **gekennzeichnet durch**
- ein Kommunikationsmodul (1) zum Herstellen einer Verbindung mit einem Anwender, das dafür ausgelegt ist, eine den Anwender identifizierende Anwenderidentifikation zu empfangen;
- ein Eingabemodul (4) zum Empfangen der **durch** das Kommunikationsmodul (1) übertragenen Identifikation, wobei das Eingabemodul (4) dafür ausgelegt ist, Daten vom Kommunikationsmodul (1) nur zu empfangen, aber nicht, Daten an das Kommunikationsmodul (1) zu senden;
- ein Datenauswahlmodul (5) zum Empfangen der Identifikation und/oder von **durch** Prozessieren der Identifikation abgeleiteten Daten, wobei das Datenauswahlmodul (5) so ausgelegt ist, dass es Daten vom Eingabemodul (4) nur empfängt, aber nicht Daten an das Eingabemodul (4) sendet, um auf die Datenspeichervorrichtung (2) zuzugreifen und zu bestimmen, welche Daten in der Datenspeichervorrichtung (2) dem Anwender, basierend auf der vom Eingabemodul (4) empfangenen Information, zu präsentieren sind.

19. Datenserver nach Anspruch 18, **dadurch gekennzeichnet, dass** das Kommunikationsmodul (1) so ausgelegt ist, dass es eine Auswahlseite an den Anwender überträgt, nachdem die Verbindung hergestellt ist, und so ausgelegt ist, dass beim Schritt des Übertragens der Identifikation an das Eingabemodul (4) zusätzliche Daten übertragen werden, die mit einer durch den Anwender auf der Auswahlseite gemachten Auswahl assoziiert sind.

20. Datenserver nach Anspruch 18 oder 19, **dadurch gekennzeichnet, dass** das Datenauswahlmodul (5) dafür ausgelegt ist, die zu präsentierenden Daten zusammen mit den mit der Anzeigevorbereitung der zu präsentierenden Daten assoziierten Daten an ein Seitenvorbereitungsmodul (6) zu übertragen, das so ausgelegt ist, dass es Daten von dem Datenauswahlmodul (5) nur empfangen kann, aber nicht Daten an das Datenauswahlmodul (5) senden kann, und das dafür ausgelegt ist, dann die zu präsentierenden Daten in Form einer Anzeigenseite vorzubereiten.

21. Datenserver nach Anspruch 20, **dadurch gekennzeichnet, dass** das Seitenvorbereitungsmodul (6) dafür ausgelegt ist, die zu präsentierenden Daten zusammen mit den mit ihrer Anzeige assoziierten Informationen an das Kommunikationsmodul (1) zu übertragen, das dafür ausgelegt ist, dann die vorbereitete Seite an den Anwender zu übertragen.

22. Datenserver nach einem der Ansprüche 18 bis 21, **dadurch gekennzeichnet, dass** das Datenauswahlmodul (5) dafür ausgelegt ist, die Anwender-Identifikation an einen entfernten zweiten Server zu übertragen und vom zweiten entfernten Server Informationen zu empfangen, mit Daten assoziiert sind, die für den durch die Identifikation identifizierten Anwender auszuwählen sind.

23. Datenserver nach Anspruch 17, **gekennzeichnet dadurch, dass** er eine 3-Tier-Software-Architektur aufweist, bei der ein erster Tier zumindest eine Datenbank umfasst, die zu präsentierende Daten enthält, ein zweiter Tier ein oder mehrere Module zur Implementierung von Applikationslogik zur Verarbeitung von Daten und zum Zugriff auf die Datenbank in dem ersten Tier umfasst und ein dritter Tier ein oder mehrere Module für externe Kommunikation und Verarbeitung von Daten zur Anzeige umfasst.

24. Datenserver nach Anspruch 23, **dadurch gekennzeichnet, dass** der dritte Tier eine Mehrzahl von Kommunikationsmodulen umfasst, wobei jedes Modul so ausgelegt ist, dass es einem entsprechenden Netzwerk einen Kommunikationskanal bereitstellt.

25. Datenserver gemäß Anspruch 24, **dadurch gekennzeichnet, dass** die Mehrzahl von Kommunikationsmodulen aktive Module zum Herstellen aktiver Kommunikationskanäle zum Senden von Daten in das jeweilige, mit dem entsprechenden aktiven Modul verbundene Netzwerk und interaktive Module zum Herstellen interaktiver Kommunikationskanäle zum Senden von Daten zu und Empfangen von Daten aus den mit dem jeweiligen interaktiven Modul verbundenen jeweiligen Netzwerk umfasst.

26. Datenserver nach Anspruch 23, **dadurch gekennzeichnet, dass** der zweite Tier eine Software-Architektur umfasst, welche Softwareelemente zum Verarbeiten von Datentransaktionen von Softwareelementen trennt, die Applikationslogik implementieren.

27. Datenserver gemäß Anspruch 26, **dadurch gekennzeichnet, dass** die Softwareelemente zum Prozessieren von Datentransaktionen eine grundlegende Transaktions-Architektur bilden und die Softwareelemente, welche Applikationslogik implementieren, Plugins sind, die dafür ausgelegt sind, in die grundlegende Transaktions-Architektur eingeklinkt zu werden.

28. Datenserver nach Anspruch 26 oder 27, **gekennzeichnet durch** Agenten, die so ausgelegt sind, dass Datentransaktionen mittels der Agenten durchgeführt werden, auf denen die Applikationslogik implementierenden Softwareelemente Tasks durchführen.

29. Datenserver nach einem der Ansprüche 23 bis 28, **dadurch gekennzeichnet, dass** der zweite Tier ein Gattermodul umfasst, das so ausgelegt ist, dass alle Nachrichten an den zweiten Tier das Gattermodul passieren müssen.

30. Datenserver nach einem der Ansprüche 23 bis 29, **dadurch gekennzeichnet, dass** der dritte Tier ein Netzwerk-Interaktionsmodul für interaktive Kommunikation zu einem Kommunikationsnetzwerk umfasst, über welches Anwender des Kommunikationsnetzwerkes Anfragen bezüglich Daten senden, wobei das Netzwerk-Interaktionsmodul so ausgelegt ist, dass es externe Anfragen vom Kommunikationsnetzwerk empfängt, eine mit der externen Anfrage assoziierte interne Anfrage generiert, die interne Anfrage an den zweiten Tier vor Verarbeitung der internen Anfrage weiterleitet, die externe Anfrage suspendiert, bis eine interne Antwort auf die interne Anfrage empfangen ist und eine externe Antwort auf die externe Anfrage erzeugt, nachdem die interne Antwort erhalten worden ist.

31. Datenserver nach Anspruch 30, **dadurch gekennzeichnet, dass** das Netzwerk-Interaktionsmodul umfasst
- einem Netzwerkservermodul zum Empfangen der externen Anfragen vom Kommunikationsnetzwerk und Senden der externen Antworten in das Kommunikationsnetzwerk,
- ein mit dem Netzwerkservermodul verbundenes Sicherheitsmodul zum Empfangen externer Anfragen aus dem Netzwerkservermodul, wobei das Sicherheitsmodul ein Haltemodul zum Halten suspendierter externer Anfragen umfasst, und
- ein Anfragenabwicklermodul, das mit dem Sicherheitsmodul verbunden ist, zum Erzeugen der internen Anfragen auf Basis von externen Anfragen und zum Weiterleiten der internen Anfragen an den zweiten Tier, wobei der Informationsfluss vom Sicherheitsmodul zum Anfragenabwicklermodul und vom Anfragenabwicklermodul zum zweiten Tier unidirektional ist.

## Revendications

1. Procédé de présentation de données qui sont stockées dans un dispositif de stockage de données (2) d'un serveur de données (3) à un utilisateur, ledit utilisateur accédant au dit serveur de données à travers un réseau, où dans le processus entre l'accès au serveur et la présentation des données, au moins un chemin de données est utilisé à travers lequel des données de commande associées à la sélection de données est envoyée, ledit au moins un chemin de données étant unidirectionnel.

2. Procédé de la revendication 1, **caractérisé par** les étapes consistant à:
établir une connexion avec l'utilisateur à travers un module de communication (1);
recevoir une identification d'utilisateur identifiant l'utilisateur;
transférer l'identification à un module d'entrée (4) qui est arrangé pour seulement recevoir des données depuis le module de communication (1), mais non pour envoyer des données au module de communication (1);
transférer l'identification et/ou données dérivées en traitant l'identification à un module de sélection de données (5), ledit module de sélection de données (5) étant arrangé de sorte à seulement recevoir des données depuis ledit module d'entrée (4) mais non pour envoyer des données au module d'entrée (4), pour accéder au dit dispositif de stockage de données (2) et pour déterminer quelles données dans le dispositif de stockage de données sont à présenter à l'utilisateur sur la base de l'information reçue depuis le module d'entrée (4).

3. Procédé de la revendication 2, **caractérisé en ce que** le module de communication (1) transmet une page de sélection à l'utilisateur après avoir établi la connexion, et **en ce que** dans l'étape de transfert de l'identification au module d'entrée (1) des données additionnelles sont transférées qui sont associées à une sélection sur ladite page de sélection.

4. Procédé de la revendication 2 ou 3, **caractérisé en ce que** le module de sélection de données (5) transfert les données à présenter avec des données associées à la préparation d'affichage des données à présenter, à un module de préparation de page (6) qui est arrangé pour seulement recevoir des données depuis le module de sélection de données (5) mais non pour envoyer des données au dit module de sélection de données (5), et qui prépare ensuite les données à présenter sous la forme d'une page d'affichage.

5. Procédé de la revendication 4, **caractérisé en ce que** le module de préparation de page (6) transfert les données à présenter avec de l'information associée à leur affichage au module de communication (1), qui transmet ensuite la page préparée à l'utilisateur.

6. Procédé de l'une des revendications 2 à 5, **caractérisé en ce que** pendant une étape de sélection de données le module de sélection de données (5) transmet l'identification d'utilisateur à un deuxième serveur distant et reçoit depuis ledit deuxième serveur distant de l'information associée à des données à sélectionner pour l'utilisateur identifié par l'identification.

7. Procédé de la revendication 1, **caractérisé en ce que** ledit serveur de données est pourvu d'une architecture logicielle à trois niveaux, où un premier niveau comprend au moins une base de données contenant des données à présenter, un deuxième niveau comprend un ou plusieurs modules pour mise en oeuvre de logique d'application pour traitement de données et pour accéder à la base de données dans ledit premier niveau, et un troisième niveau comprend un ou plusieurs modules pour communication extérieure et traitement de données pour affichage.

8. Procédé de la revendication 7, **caractérisé en ce que** ledit troisième niveau est pourvu d'une pluralité de modules de communication, chaque module étant arrangé pour fournir un canal de communication à un réseau respectif.

9. Procédé de la revendication 8, **caractérisé en ce que** ladite pluralité de modules de communication comprend des modules actifs pour établir des canaux de communication actifs pour envoyer des données dans le réseau respectif connecté au module actif respectif, et des modules interactifs pour établir des canaux de communication interactifs pour envoyer des données à et recevoir des données depuis le réseau respectif connecté au module interactif respectif.

10. Procédé de la revendication 7, **caractérisé en ce que** ledit deuxième niveau est pourvu d'une architecture logicielle qui sépare des éléments logiciels pour traiter des transactions de données des éléments logiciels qui mettent en oeuvre de la logique d'application.

11. Procédé de la revendication 10, **caractérisé en ce que** lesdits éléments logiciels pour traiter des transactions de données forment une architecture de transaction basique, et lesdits éléments logiciels qui mettent en oeuvre la logique d'application sont des modules à enficher arrangés pour être enfichés dans ladite architecture de transaction basique.

12. Procédé de la revendication 10 ou 11, **caractérisé en ce que** des transactions de données sont conduites au moyen d'agents sur lesquels lesdits éléments logiciels mettant en oeuvre la logique d'application effectuent des tâches.

13. Procédé de l'une des revendications 7 à 12, **caractérisé en ce que** ledit deuxième niveau est pourvu d'un module de porte, qui est arrangé de sorte que tous les messages dans ledit deuxième niveau doivent passer à travers ledit module de porte.

14. Procédé de l'une des revendications 7 à 13 **caractérisé en ce que** ledit troisième niveau est pourvu d'un module d'interaction de réseau pour communication interactive avec un réseau de communication à travers lequel des utilisateurs dudit réseau de communication envoient des demandes pour des données, où ledit module d'interaction de réseau reçoit des demandes externes depuis ledit réseau de communication, génère une demande interne associée à ladite demande externe, passe ladite demande interne au dit deuxième niveau pour traitement de ladite demande interne, suspend ladite demande externe jusqu'à ce que une réponse interne à ladite demande interne soit reçue, et génère une réponse externe à ladite demande externe après avoir reçu ladite réponse interne.

15. Procédé de la revendication 14, **caractérisé en ce que** ledit module d'interaction de réseau est pourvu
d'un module de serveur réseau pour recevoir lesdites demandes externes depuis ledit réseau de communication et envoyer lesdites réponses externes dans ledit réseau de communication, d'un module de sécurité connecté au dit module de serveur réseau pour recevoir des demandes extérieures depuis ledit module de serveur réseau, ledit module de sécurité comprenant un module de maintien pour maintenir des demandes externes suspendues, et
d'un module distributeur de demandes connecté au dit module de sécurité pour générer lesdites demandes internes sur la base de demandes externes et pour passer lesdites demandes internes au dit deuxième niveau, où le débit d'information depuis ledit module de sécurité au dit module distributeur de demandes et depuis ledit module distributeur de demandes au dit deuxième niveau est unidirectionnel.

16. Produit logiciel comprenant un programme informatique arrangé pour effectuer le procédé de l'une des revendications 1 à 15 lorsque exécuté sur un ordinateur.

17. Serveur de données (3) pour présenter des données qui sont stockées dans un dispositif de stockage de données (2) dudit serveur de données (3) à un utilisateur à travers un réseau, où ledit serveur de données (3) est arrangé de manière telle que dans le processus entre l'accès au serveur et la présentation des données, au moins un chemin de données est utilisé à travers lequel des données de commande associées à la sélection de données sont envoyées, ledit au moins un chemin de données étant unidirectionnel.

18. Serveur de données de la revendication 17, **caractérisé par**:
un module de communication (1) pour établir une connexion avec un utilisateur, qui est arrangé pour recevoir une identification d'utilisateur identifiant l'utilisateur;
un module d'entrée (4) pour recevoir l'identification transférée par le module de communication (1), ledit module d'entrée (4) étant arrangé pour seulement recevoir des données depuis le module de communication (1), mais non pour envoyer des données au module e communication (1);
un module de sélection de données (5) pour recevoir l'identification et/ou données dérivées en traitant l'identification, ledit module de sélection de données (5) étant arrangé pour seulement recevoir des données depuis ledit module d'entrée (4) mais non pour envoyer des données au module d'entrée (4), pour accéder au dit dispositif de stockage de données (2) et pour déterminer quelles données dans le dispositif de stockage de données (2) sont à présenter à l'utilisateur sur la base de l'information reçue depuis le module d'entrée (4).

19. Serveur de données de la revendication 18, **caractérisé en ce que** le module de communication (1) est arrangé pour transmettre une page de sélection à l'utilisateur après avoir établit la connexion, et est arrangé de sorte que dans l'étape de transfert de l'identification au module d'entrée (4) des données additionnelles sont transférées qui sont associées à une sélection faite par l'utilisateur sur ladite page de sélection.

20. Serveur de données de la revendication 18 ou 19, **caractérisé en ce que** le module de sélection de données (5) est arrangé pour transférer les données à présenter avec des données associées à la préparation d'affichage des données à présenter, à un module de préparation de page (6) qui est arrangé de sorte qu'il peut seulement recevoir des données depuis le module de sélection de données (5) mais ne peut pas envoyer des données au dit module de sélection de données (5), et qui est arrangé pour ensuite préparer les données à présenter sous la forme d'une page d'affichage.

21. Serveur de données de la revendication 20, **caractérisé en ce que** le module de préparation de page (6) est arrangé pour transférer les données à présenter avec de l'information associée à leur affichage au module de communication (1), qui est arrangé pour ensuite transmettre la page préparée à l'utilisateur.

22. Serveur de données de l'une des revendications 18 à 21, **caractérisé en ce que** le module de sélection de données (5) est arrangé pour transmettre l'identification d'utilisateur à un deuxième serveur distant et recevoir depuis ledit deuxième serveur distant de l'information associée à des données à sélectionner pour l'utilisateur identifié par l'identification.

23. Serveur de données de la revendication 17, **caractérisé par** le fait d'avoir une architecture logicielle à trois niveaux, où un premier niveau comprend au moins une base de données contenant des données à présenter, un deuxième niveau comprend un ou plusieurs modules pour mettre en oeuvre de la logique d'application pour traiter des données et pour accéder à la base de données dans ledit premier niveau, et un troisième niveau comprend un ou plusieurs modules pour communication extérieure et traitement de données pour affichage.

24. Serveur de données de la revendication 23, **caractérisé en ce que** ledit troisième niveau comprend une pluralité de modules de communication, chaque module étant arrangé pour fournir un canal de communication à un réseau respectif.

25. Serveur de données de la revendication 24, **caractérisé en ce que** ladite pluralité de modules de communication comprend des modules actifs pour établir des canaux de communication actifs pour envoyer des données dans le réseau respectif connecté au module actif respectif, et des modules interactifs pour établir des canaux de communication interactifs pour envoyer des données à et recevoir des données depuis le réseau respectif connecté au module interactif respectif.

26. Serveur de données de la revendication 23, **caractérisé en ce que** ledit deuxième niveau comprend une architecture logicielle qui sépare des éléments logiciels pour traitement de transactions de données des éléments logiciels qui mettent en oeuvre de la logique d'application.

27. Serveur de données de la revendication 26, **caractérisé en ce que** lesdits éléments logiciels pour traitement de transactions de données forment une architecture de transaction basique, et lesdits éléments logiciels qui mettent en oeuvre de la logique d'application sont des modules à enficher arrangés pour être enfichés dans ladite architecture de transaction basique.

28. Serveur de données de la revendication 26 ou 27, **caractérisé par** des agents arrangés de sorte que des transactions de données sont conduites au moyen desdits agents sur lesquels lesdits éléments logiciels mettant en oeuvre de la logique d'application effectuent des tâches.

29. Serveur de données de l'une des revendications 23 à 28, **caractérisé en ce que** ledit deuxième niveau comprend un module de porte, qui est arrangé de sorte que tous les messages dans ledit deuxième niveau doivent passer à travers ledit module de porte.

30. Serveur de données de l'une des revendications 23 à 29 **caractérisé en ce que** ledit troisième niveau comprend un module d'interaction de réseau pour communication interactive avec un réseau de communication à travers lequel des utilisateurs dudit réseau de communication envoient des demandes pour des données, où ledit module d'interaction de réseau est arrangé pour recevoir des demandes externes depuis ledit réseau de communication, pour générer une demande interne associée à ladite demande externe, pour passer ladite demande interne au dit deuxième niveau pour traitement de ladite demande interne, pour suspendre ladite demande externe jusqu'à ce que une réponse interne à ladite demande interne soit reçue, et pour générer une réponse externe à ladite demande externe après avoir reçu ladite réponse interne.

31. Serveur de données de la revendication 30, **caractérisé en ce que** ledit module d'interaction de réseau comprend
un module de serveur réseau pour recevoir lesdites demandes externes depuis ledit réseau de communication et envoyer lesdites réponses externes dans ledit réseau de communication,
un module de sécurité connecté au dit module de serveur réseau pour recevoir des demandes extérieures depuis ledit module de serveur réseau, ledit module de sécurité comprenant un module de maintien pour maintenir les demandes externes suspendues, et
un module distributeur de demandes connecté au dit module de sécurité pour générer lesdites demandes internes sur la base de demandes externes et pour passer lesdites demandes internes au dit deuxième niveau, où le débit d'information depuis ledit module de sécurité au dit module distributeur de demandes et depuis ledit module distributeur de demandes au dit deuxième niveau est unidirectionnel.
